# EUROPEAN PATENT SPECIFICATION

(11) **EP 3 658 353 B1**
(45) Date of publication and mention of the grant of the patent: **06.12.2023**
(21) Application number: 18762158.6
(22) Date of filing: 27.07.2018
(51) Int. Cl.: B29C 64/112, B29C 64/35, B29C 64/40, B33Y 70/00, B33Y 10/00, B29C 64/386

(54) **ADDITIVE MANUFACTURING PROCESSES EMPLOYING FORMULATIONS THAT PROVIDE A LIQUID OR LIQUID-LIKE MATERIAL**
VERFAHREN ZUR GENERATIVEN FERTIGUNG UNTER VERWENDUNG VON FORMULIERUNGEN ZUR BEREITSTELLUNG EINES FLÜSSIGEN ODER FLÜSSIGKEITSÄHNLICHEN MATERIALS
PROCESSUS DE FABRICATION ADDITIVE UTILISANT DES FORMULATIONS QUI FOURNISSENT UN MATÉRIAU LIQUIDE OU DE TYPE LIQUIDE

(30) Priority: 28.07.2017 US 201762538018 P
(43) Date of publication of application: 03.06.2020
(73) Proprietor: Stratasys Ltd., 7612401 Rehovot (IL)
(72) Inventor: DIKOVSKY, Daniel, 4076717 Ariel (IL); BELOCON, Boris, 7635413 Rehovot (IL); FEFFER, Amit, 4722381 Ramat HaSharon (IL); BEGUN, Gal, 9079510 Mevasseret Zion (IL); BRESSLER, Yoav, 6998243 Tel-Aviv (IL)
(74) Representative: Calysta NV
(86) International application number: PCT/IL2018/050839
(87) International publication number: WO 2019/021291

(56) References cited:
- WO-A1-2016/179242
- DE-A1-102015 214 883
- US-B2- 7 285 237
- US-B2- 9 156 999

## Description

### RELATED APPLICATIONS

This application claims the benefit of priority of U.S. Provisional Patent Application No. 62/538,018, filed on July 28, 2017 which was co-filed with U.S. Provisional Patent Application Nos. 62/538,003, 62/538,006, 62/538,015 and 62/538,026.

### FIELD AND BACKGROUND OF THE INVENTION

The present invention, in some embodiments thereof, relates to additive manufacturing (AM), and more particularly, but not exclusively, to formulations, methods and systems usable in additive manufacturing while providing a three-dimensional object having in a portion thereof a liquid or liquid-like material.

Additive manufacturing is generally a process in which a three-dimensional (3D) object is manufactured utilizing a computer model of the objects. Such a process is used in various fields, such as design related fields for purposes of visualization, demonstration and mechanical prototyping, as well as for rapid manufacturing (RM).

The basic operation of any AM system consists of slicing a three-dimensional computer model into thin cross sections, translating the result into two-dimensional position data and feeding the data to control equipment which manufacture a three-dimensional structure in a layerwise manner.

Various AM technologies exist, amongst which are stereolithography, digital light processing (DLP), and three-dimensional (3D) printing, 3D inkjet printing in particular. Such techniques are generally performed by layer by layer deposition and solidification of one or more building materials, typically photopolymerizable (photocurable) materials.

In three-dimensional printing processes, for example, a building material is dispensed from a dispensing head having a set of nozzles to deposit layers on a supporting structure. Depending on the building material, the layers may then be cured or solidified (hardened) using a suitable device.

Various three-dimensional printing techniques exist and are disclosed in, e.g., U.S. Patent Nos. 6,259,962, 6,569,373, 6,658,314, 6,850,334, 7,183,335, 7,209,797, 7,225,045, 7,300,619, 7,479,510, 7,500,846, 7,962,237 and 9,031,680, all to the same Assignee.

A printing system utilized in additive manufacturing may include a receiving medium and one or more printing heads. The receiving medium can be, for example, a fabrication tray that may include a horizontal surface to carry the material dispensed from the printing head. The printing head may be, for example, an ink jet head having a plurality of dispensing nozzles arranged in an array of one or more rows along the longitudinal axis of the printing head. The printing head may be located such that its longitudinal axis is substantially parallel to the indexing direction. The printing system may further include a controller, such as a microprocessor to control the printing process, including the movement of the printing head according to a pre-defined scanning plan (e.g., a CAD configuration converted to a Stereo Lithography (STL) format and programmed into the controller). The printing head may include a plurality of jetting nozzles. The jetting nozzles dispense material onto the receiving medium to create the layers representing cross sections of a 3D object.

In addition to the printing head, there may be a source of a curing condition, for curing the dispensed building material. The curing condition typically comprises a curing energy, and is typically radiation, for example, UV radiation.

Additionally, the printing system may include a leveling device for leveling and/or establishing the height of each layer after deposition and at least partial solidification, prior to the deposition of a subsequent layer.

The building materials may include modeling materials and support materials, which form the object and the temporary support constructions supporting the object as it is being built, respectively.

The modeling material (which may include one or more material(s), included in one or more formulations) is deposited to produce the desired object/s.

The support material, also known in the art as "supporting material", (which may include one or more material(s)) is used, with or without modeling material elements, is used to support specific areas of the object during building and for assuring adequate vertical placement of subsequent object layers. For example, in cases where objects include overhanging features or shapes, e.g. curved geometries, negative angles, voids, and the like, objects are typically constructed using adjacent support constructions, which are used during the printing.

In all cases, the support material is deposited in proximity of the modeling material, enabling the formation of complex object geometries and filling of object voids.

In all of the currently practiced technologies, the deposited support material and modeling material are hardened, typically upon exposure to a curing condition (e.g., curing energy), to form the required layer shape. After printing completion, support structures are removed to reveal the final shape of the fabricated 3D object.

When using currently available commercial print heads, such as ink-jet printing heads, the support material should have a relatively low viscosity (about 10-20 cPs) at the working, i.e., jetting, temperature, such that it can be jetted. Further, the support material should harden rapidly in order to allow building of subsequent layers. Additionally, the hardened support material should have sufficient mechanical strength for holding the model material in place, and low distortion for avoiding geometrical defects.

Known methods for removal of support materials include mechanical impact (applied by a tool or water-jet), as well as chemical methods, such as dissolution in a solvent, with or without heating. The mechanical methods are labor intensive and are often unsuited for small intricate parts.

For dissolving the support materials, the fabricated object is often immersed in water or in a solvent that is capable of dissolving the support materials. The solutions utilized for dissolving the support material are also referred to herein and in the art as "cleaning solutions". In many cases, however, the support removal process may involve hazardous materials, manual labor and/or special equipment requiring trained personnel, protective clothing and expensive waste disposal. In addition, the dissolution process is usually limited by diffusion kinetics and may require very long periods of time, especially when the support constructions are large and bulky. Furthermore, post-processing may be necessary to remove traces of a 'mix layer' on object surfaces. The term "mix layer" refers to a residual layer of mixed hardened model and support materials formed at the interface between the two materials on the surfaces of the object being fabricated, by model and support materials mixing into each other at the interface between them.

Additionally, methods requiring high temperatures during support removal may be problematic since there are model materials that are temperature-sensitive, such as waxes and certain flexible materials. Both mechanical and dissolution methods for removal of support materials are especially problematic for use in an office environment, where ease-of-use, cleanliness and environmental safety are major considerations.

Water-soluble materials for 3D building are described, for example, in U.S. Patent No. 6,228,923, where a water soluble thermoplastic polymer - Poly(2-ethyl-2-oxazoline) - is taught as a support material in a 3D building process involving high pressure and high temperature extrusion of ribbons of selected materials onto a plate.

A water-containing support material comprising a fusible crystal hydrate is described in U.S. Patent No. 7,255,825.

Formulations suitable for forming a hardened support material in building a 3D object are described, for example, in U.S. Patent Nos. 7,479,510, 7,183,335 and 6,569,373, all to the present Assignee. Generally, the compositions disclosed in these patents comprise at least one UV curable (reactive) component, e.g., an acrylic component, at least one non-UV curable component, e.g. a polyol or glycol component, and a photoinitiator. After irradiation, these compositions provide a semi-solid or gel-like material capable of dissolving or swelling upon exposure to water, to an alkaline or acidic solution or to a water detergent solution.

Besides swelling, another characteristic of such a support material may be the ability to break down during exposure to water, to an alkaline or acidic solution or to a water detergent solution because the support material is made of hydrophilic components. During the swelling process, internal forces cause fractures and breakdown of the hardened support. In addition, the support material can contain a substance that liberates bubbles upon exposure to water, e.g. sodium bicarbonate, which transforms into CO₂ when in contact with an acidic solution. The bubbles aid in the process of removal of support from the model.

Several additive manufacturing processes allow additive formation of objects using more than one modeling material. For example, U.S. Patent Application having Publication No. 2010/0191360, of the present Assignee, discloses a system which comprises a solid freeform fabrication apparatus having a plurality of dispensing heads, a building material supply apparatus configured to supply a plurality of building materials to the fabrication apparatus, and a control unit configured for controlling the fabrication and supply apparatus. The system has several operation modes. In one mode, all dispensing heads operate during a single building scan cycle of the fabrication apparatus. In another mode, one or more of the dispensing heads is not operative during a single building scan cycle or part thereof.

In a 3D inkjet printing process such as Polyjet^{™} (Stratasys Ltd., Israel), the building material is selectively jetted from one or more printing heads and deposited onto a fabrication tray in consecutive layers according to a pre-determined configuration as defined by a software file.

Publication No. DE102015214883 discloses an additive process for the production of moldings which permits site-specific delivery of the structure-forming material and site-specific construction of supportive structures made of supportive material. The supportive material is a pseudoplastic, viscoelastic composition which includes a polyether, and a particulate rheological additive, and has a shear viscosity of at most 100 Pas,a structural relaxation parameter of at least 1 s, and a storage modulus G' of at least 5×10³ Pa.

### SUMMARY OF THE INVENTION

Currently practiced additive manufacturing methodologies typically utilize curable support materials which, upon exposure to a curing condition, form gel-like hardened materials that are removed, to reveal the final object, by physical and/or mechanical means.

These methodologies, however, are sometimes inefficient and may even be harmful to the object, e.g., in cases where the object features intricate geometries such as thin and/or branched and/or entangled hollow structures, for example, tunnels and tubes, and/or inner encapsulated volumes and/or any other voids or wholes with limited accessibility to the means required to removing the hardened support material.

The present inventors have designed and successfully practiced methodologies that utilize materials which feature a liquid behavior upon exposure to a curing condition, and therefore are flowable under mild conditions and can be removed by inducing their flow out of the object, for example, by application of pressure.

These materials are beneficially usable as support materials, particularly in objects having intricate geometries as described herein, and/or in objects where the conditions typically applied for removal of gel-like support materials may harm the final shape of the objects. These materials are further beneficially usable in fabricating final objects that comprise fluid materials.

The present invention provides a method of additive manufacturing of a three-dimensional object according to claim 1 or 8, and a three-dimensional assembly according to claim 9.

According to an aspect of some embodiments of the present invention there is provided a method of additive manufacturing of a three-dimensional object, the method comprising sequentially forming a plurality of layers in a configured pattern corresponding to the shape of the object, thereby forming the object,
wherein the formation of at least a few of the layers comprises:
dispensing at least two building material formulations, the at least two building material formulation comprise a first building material formulation comprising a modeling material formulation, which is also referred to herein interchangeably simply as a modeling material formulation, or as modeling formulation M or as formulation M, which, upon exposure to a curing condition, forms a hardened, modeling material, which is also referred to herein interchangeably as a first material, a first, hardened, modeling material, a first modeling material, or simply as a model material, or as Material M or modeling Material M or hardened modeling material M, and a second building material formulation comprising a formulation, which is also referred to herein interchangeably as a liquid formulation, or as formulation L, which, upon exposure to the curing condition, forms a second material, which is also referred to herein interchangeably as a liquid material, a liquid or liquid-like material or as Material L,
the second material, material L, featuring at least one of
a viscosity of no more than 10 Pa s (10000 centipoises);
Shear loss modulus to Shear storage modulus ratio greater than 1;
a Shear modulus lower than 20 kPa; flowability when subjected to a positive pressure of no more than 1 bar; wherein 1 bar corresponds to 100 kPa, hereinafter;
a shear-thinning and/or thixotropic behavior; and
a thermal-thinning behavior, and exposing the dispensed building material formulations to the curing condition, to thereby form the first hardened modeling material.

The dispensing is such that the first hardened modeling material, Material M, forms at least one hollow structure, and the second material, Material L, is at least partially enclosed in the hollow structure.

According to some of any of the embodiments described herein, the shape of the object is described by computer object input data and the method further comprises: generating computer object data describing cavities in the hollow structure, generating computer object data describing the cavities in shrunk form, and combining the computer object input data with the computer object data describing the cavities in the shrunk form, to provide combined computer object data describing the hollow structure and a core encapsulated by the hollow structure in a manner that there is a gap between an inner surface of the hollow structure and an outermost surface of the core.

According to some of any of the embodiments described herein, the hollow structure is selected from a tubular structure, a branched tubular structure, and a plurality of tubular structures entangled with one another.

According to some of any of the embodiments described herein, a diameter of at least one of the tubular structures is less than 1 cm.

According to some of any of the embodiments described herein, the second material, Material L, is completely enclosed in the hollow structure.

According to some of any of the embodiments described herein, the second material, Material L, is flowable when subjected to a positive pressure of no more than 1 bar, or no more than 0.5 bar or no more than 0.3 bar.

According to some of any of the embodiments described herein, the second material, Material L, features a viscosity of no more than 10 Pa s (10,000 centipoises), and wherein the second building material formulation, formulation L, features a viscosity different from the viscosity of the second material by no more than 10 %.

According to some of any of the embodiments described herein, the second building formulation, formulation L, comprises a non-curable material.

According to some of any of the embodiments described herein, the non-curable material comprises a poly(alkylene glycol) having a molecular weight of less than 2000 grams/mol.

According to some of any of the embodiments described herein, the second building material formulation, formulation L, comprises a non-curable material and a curable material.

According to some of any of the embodiments described herein, the curable material comprises a mono-functional curable material.

According to some of any of the embodiments described herein, the curable material is hydrophilic.

According to some of any of the embodiments described herein, the curable material, when hardened, provides a shear-thinning and/or thixotropic material.

According to some of any of the embodiments described herein, the curable material, when hardened, provides a thermal-thinning material.

According to some of any of the embodiments described herein, the curable material, when hardened, provides a water-soluble or water-immiscible material.

According to some of any of the embodiments described herein, an amount of the curable material in the second building material formulation, formulation L, ranges from 10% to 25%.

According to some of any of the embodiments described herein, the second material, Material L, is water-soluble or water-miscible.

According to some of any of the embodiments described herein, the second material, Material L, is a shear-thinning material, a thixotropic material or a thermal-thinning material.

According to some of any of the embodiments described herein, the method further comprises, subsequent to the exposing, removing Material L (the second material).

According to some of any of the embodiments described herein, the removing is by applying a condition at which Material L (the second material) is flowable.

According to some of any of the embodiments described herein, the condition comprises a positive pressure of no more than 1 bar, or of no more than 0.5 bar or of no more than 0.3 bar.

According to some of any of the embodiments described herein, the positive pressure comprises air pressure, liquid pressure, or a combination thereof.

According to some of any of the embodiments described herein, the condition comprises heat energy.

According to some of any of the embodiments described herein, the condition comprises shear forces.

The at least two building material formulations comprise a third building material formulation which is also referred to herein interchangeably as a support material formulation, as a support formulation, as a gel material formulation, or as formulation S, the third building material formulation forms, upon exposure to a curing condition, a third material, the third material being a hardened support material, and is also referred to herein as Material S.

The dispensing is such that Material L (the second material) at least partially encloses Material S (the third material), thereby forming an intermediate shell between an inner surface of the hollow structure and Material S (the third material).

According to some of any of the embodiments described herein, Material S (the third material) is water-soluble or water-miscible.

According to some of any of the embodiments described herein, Material S (the third material) is removable upon being subjected to a liquid jet at a pressure of at least 0.5 bar or at least 1 bar.

According to some of any of the embodiments described herein, Material S (the third material) is removable upon contacting a cleaning solution.

According to some of any of the embodiments described herein, the method further comprises removing Material S (the third material).

According to some of any of the embodiments described herein, the removing is by contacting Material S (the third hardened material) with a liquid jet at a pressure of at least 0.5 bar or at least 1 bar.

According to some of any of the embodiments described herein, the removing is by contacting Material S (the third hardened material) with a cleaning solution.

According to some of any of the embodiments described herein, removing Material S (the third material) is subsequent to removing Material L (the second material).

According to an aspect of some embodiments of the present invention there is provided a three-dimensional model object fabricated by the method of any one of the respective embodiments described herein and any combination thereof.

According to some of any of the embodiments described herein, the three-dimensional object comprises at least one hollow structure.

According to some of any of the embodiments described herein, the three-dimensional object comprises Material L (the second material) at least partially enclosed in the at least one hollow structure.

According to an aspect of some embodiments of the present invention there is provided a three-dimensional model object, fabricated by an additive manufacturing process, the object comprising at least one hollow structure and a material such as Material L as described herein, featuring at least one of:
Shear loss modulus to Shear storage modulus ratio (tan delta) greater than 1;
Shear-thinning and/or thixotropic behavior;
Thermal-thinning behavior;
a Shear storage modulus lower than 20 kPa; and
flowability when subjected to a positive pressure lower than 1 bar or lower than 0.5 bar, at least partially enclosed in the hollow structure.

According to an aspect of some embodiments of the present invention there is provided a formulation system usable for forming a sacrificial material (e.g., a support material) or a sacrificial structure or object in additive manufacturing of a three-dimensional object, the formulation system comprising:
formulation L (also referred to herein as a second formulation), which provides, when exposed to a curing condition, a liquid, or liquid-like material (also referred to herein as Material L) featuring at least one of:
Shear loss modulus to Shear storage modulus ratio (tan delta) greater than 1;
Shear-thinning and/or thixotropic behavior;
Thermal-thinning behavior;
a Shear storage modulus lower than 20 kPa; and
flowability when subjected to a positive pressure lower than 1 bar or lower than 0.5 bar,
   and
formulation S, which provides, when exposed to a curing condition, a gel-like material (also referred to herein as Material S) featuring at least one of:
   a Shear loss modulus G" to Shear storage modulus G" ratio that is lower than 1;
   flowability and/or breakability when subjected to a liquid pressure higher than 0.5 bar or higher than 1 bar; and
   water-solubility or water-immiscibility.

According to some of any of the embodiments described herein, formulation L comprises a non-curable material featuring a viscosity of no more than 10 Pa s (10,000 centipoises).

According to some of any of the embodiments described herein, formulation L comprises a poly(alkylene glycol) having a molecular weight of no more than 2,000 grams/mol.

According to some of any of the embodiments described herein, formulation L comprises a non-curable material and a curable material, the formulation featuring when hardened or when exposed to a curing condition, a shear resistance of no more than 20 kPa.

According to some of any of the embodiments described herein, formulation L is for forming, upon exposure to a curing condition, a material (e.g., Material L) that is sequentially removable.

According to an aspect of some embodiments of the present invention there is provided a method of additive manufacturing of a three-dimensional object having a cavity. The method comprises sequentially forming a plurality of layers in a configured pattern corresponding to a combined shape of the object and a sacrificial object in a manner that the sacrificial object is enclosed in the cavity. The method further comprises removing the sacrificial object from the cavity. According to some embodiments of the invention there is a gap between a wall of the cavity and the sacrificial object.

According to some of any of the embodiments of this aspect of the invention the shape of the object is described by computer object input data and the method comprises: generating computer object data describing the cavity, generating computer object data describing the cavity in shrunk form, and combining the computer object input data with the computer object data describing the cavity in the shrunk form, to provide combined computer object data describing the object, the sacrificial object and the gap.

According to some of any of the embodiments of this aspect of the invention the object is formed of a hardened material (e.g., Material M and/or Material S as described herein), and wherein the formation of the layers comprises forming at least one sacrificial layer to fill the gap by an additional material, which is different from the hardened material, which can be, for example, Material L as described herein, Material S as described herein, or combination of Material L and Material S as described herein in any of the respective embodiments.

According to some embodiments of the invention the additional material is Material L, for example, a material which is characterized by at least one of: a viscosity of no more than 10 Pa s (10000 centipoises); Shear loss modulus to Shear storage modulus ratio greater than 1; a Shear modulus lower than 20 kPa; flowability when subjected to a positive pressure of no more than 1 bar; a shear-thinning and/or thixotropic behavior; and a thermal-thinning behavior.

According to an aspect of some embodiments of the present invention there is provided a three-dimensional assembly fabricated by an additive manufacturing process. The assembly comprises a hardened object having a cavity, a hardened sacrificial object in the cavity, and a non-hardened or partially hardened material, e.g., Material L and/or Material S as described herein, between the sacrificial object and a wall of the cavity, wherein the hardened sacrificial object and the non-hardened or partially hardened material (e.g., Material L and/or Material S) are removable from the cavity. The hardened material is optionally and preferably Material M, Material S, or a combination thereof, as described herein in any of the respective embodiments.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention can involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE SEVERAL VIEWS OF THE DRAWING(S)

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1A is an image presenting an exemplary printed object featuring a hollow structure in a form of a curved thin tunnel with small openings to the environment, fabricated according to some embodiments of the present invention;
FIG. 1B is an image presenting an exemplary object in a form of receptacle, showing the printed receptacle filled with a liquid material (e.g., Material L) according to the present embodiments;
FIG. 2 is a flowchart describing an exemplary method according to some embodiments of the present invention;
FIG. 3 is a schematic illustration of a region which includes interlaced modeling materials, according to some embodiments of the present invention;
FIGs. 4A-G are schematic illustrations of a representative and non-limiting example of a structure according to some embodiments of the present invention;
FIG. 4H is a schematic illustration of a representative example of a portion of an object having a hollow structure at least partially enclosing an intermediate shell which encloses a core, according to some embodiments of the present invention;
FIG. 5 is a schematic illustration of a dispensed layer, according to some embodiments of the present invention;
FIGs. 6A-D are schematic illustrations of additive manufacturing systems according to some embodiments of the invention;
FIGs. 7A-C are schematic illustrations of printing heads according to some embodiments of the present invention;
FIGs. 8A and 8B are schematic illustrations demonstrating coordinate transformations according to some embodiments of the present invention;
FIG. 9 illustrates parameters that can be used according to some embodiments of the present invention for selecting the dimensions of the core and intermediate shell;
FIGs. 10A-J are schematic illustrations describing an exemplified procedure suitable for generating computer object data describing a hollow object; and
FIGs. 11A and 11B are flowchart diagrams describing an exemplified procedure which can be used according to some embodiments of the present invention for obtaining computer object data.

### DESCRIPTION OF SPECIFIC EMBODIMENTS OF THE INVENTION

The present invention, in some embodiments thereof, relates to additive manufacturing (AM), and more particularly, but not exclusively, to formulations, methods and systems usable in additive manufacturing while providing a three-dimensional object having in a portion thereof a liquid or liquid-like material.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present inventors have realized that while practicing currently known additive manufacturing processes for fabricating three-dimensional objects, difficulties are observed in the formation and cleaning of parts that have intricate geometries, for example, geometries that contain hollow structures, such as cavities, enclosed volumes, thin and/or entangled and/or branched hollow tubular structures (e.g., pipes, tunnels), and sponge-like structures, which feature a narrow opening or are completely enclosed. Non-limiting exemplary objects featuring such intricate geometries are objects featuring structures of bodily organs such as a blood vessel, inner parts of a bone, and a heart.

More specifically, the present inventors have realized that when fabricating such objects, using, for example, 3D-inkjet printing, intricate parts of the object such as cavities, enclosed volumes, entangled and branched tubes, pipes and/or tunnel systems, are typically filled with a support material, typically a material featuring properties of a gel, whereby removal of the support material upon object fabrication via conventional mechanical and/or chemical techniques is difficult to perform, inefficient and time-consuming, and moreover, causes damage to the intricate parts and/or the entire object.

Mechanical techniques for support material removal, such as water jet and compressed air, are inefficient in case of enclosed or partially enclosed hollow structures since the physical accessibility of the jet to the support material is limited, and the applied pressure required for complete removal of the support material may damage the object. Chemical techniques for support material removal, which involve dissolution of the support material upon contacting a cleaning solution, are inefficient in case of enclosed or partially enclosed hollow structures since it requires diffusion of the cleaning solution to these portions of the object.

As discussed hereinabove, currently practiced support material formulations typically include curable and non-curable materials, which, when hardened, form gel or gel-like materials.

Herein and in the art, the term "gel" describes a material, often referred to as a semi-solid material, which comprises a three-dimensional solid network, typically made of fibrous structures chemically or physically linked therebetween, and a liquid phase encaged within this network. Gels are typically characterized by a consistency of a solid (e.g., are non-fluidic), and feature relatively low Tensile strength, relatively low Shear Modulus, e.g., lower than 100 kPa, and a Shear Loss Modulus to Shear Storage modulus (tan delta, G"/G') value lower than 1. Gels can be characterized as flowable when subjected to a positive pressure of at least 0.5 bar, preferably at least 1 bar, or higher, or, alternatively, as non-flowable when subject to a pressure lower than 1 bar or lower than 0.5 bar or of 0.3 bar or lower.

Gel-like materials according to the present embodiments are typically soft materials, which can be gels or solids, which feature mechanical and rheological properties of a gel, as described herein.

Currently practiced support material formulations typically comprise a mixture of curable and non-curable materials, and, when hardened, form hardened support materials which are also referred to herein as gel-like support material or as gel support material (e.g., Material S).

Currently practiced hardened support materials are typically water miscible, or water-dispersible or water-soluble, as defined herein.

The present inventors have conceived utilizing non-curable liquid materials in the fabrication of 3D objects featuring intricate parts as described herein. Such liquid materials remain liquid also after exposure to curing conditions and can be readily removed once the AM process is completed, by non-aggressive means such as application of a low positive pressure.

Thus, cavities, tunnels, pipes, encapsulated volumes and other parts with intricate geometry and/or narrow openings can be completely filled with a non-curable liquid material or can be partially filled with a non-curable liquid material, optionally in combination with conventional, curable support materials that form a gel. Once the fabrication is completed, the liquid material can be removed, and if a gel support material is present and is required to be removed, it can then be removed by common mechanical and/or chemical means. The liquid material is removed easily, thus facilitating the overall removal of a support material, if so required, and the exposure of the hollow structure. When combined with a gel-like support material, the easy and immediate removal of the liquid material allows easier access, either physical access or diffusion-derived access, to the remaining gel-like support. The removal of the liquid material eliminates the diffusion barrier in chemical removal techniques and reduces the pressure accumulation in physical removal techniques, thus acting as a pressure release channel.

While reducing the present invention to practice, the present inventors have successfully utilized non-curable liquid materials, such as poly(alkylene glycols), as readily-removable material in fabrication of objects having small hollow structures; as part of a sacrificial structure that further comprises a gel-like support material made of curable materials, typically in larger hollow structures; and as an internal liquid material within enclosed volumes of a final object, when objects aimed as containing fluidic materials are fabricated, as described in further detail hereinunder.

The present inventors have further conceived utilizing a non-curable material which, when exposed to hardening procedure applied to materials nearby it, features properties of a liquid material (is a liquid-like material as defined herein), and thus can also function as a readily-removable material, optionally in combination with a gel-like support material.

The present inventors have further designed and successfully practiced systems and methods suitable for using the liquid-like materials described herein, and which overcome the problems posed by the inclusion of a liquid or liquid-like material in an object fabricated by additive manufacturing.

In some embodiments of the present invention the method employs liquid support material for filling cavities less than 4 mm in width along their smallest dimension, and a combination of liquid and common (e.g., gel or gel-like) support material for filling cavities having width along their smallest dimension of more than about 4 mm. Preferably, when liquid or liquid-like support is dispensed and straightened, the AM system ensures that the newly dispensed layer is in a still-air environment.

As used herein, "still-air environment" refers to an environment in which there is no air flow, or in which an air flows at speed less than 3 m/s.

Embodiments of the present invention therefore relate to a use of liquid or liquid-like materials in additive manufacturing processes of three-dimensional objects.

Herein throughout and in the art, the term "liquid" describes a fluid that does not change its volume in response to stress. Liquid materials are characterized by fluidity, that is, the ability to flow as the molecules move by passing one by another; a viscosity, that is, a resistance to shear stress; by very low or zero shear modulus (G); and by a shear loss modulus to shear storage modulus ratio (G"/G', or tan delta) higher than 1, typically higher than 10.

Herein, a "liquid-like material" describes a material that features properties similar to those of a liquid, by featuring, for example, a low shear modulus, e.g., lower than 100 kPa or lower than 50 kPa or lower than 10 kPa; and/or by a shear loss modulus to shear storage modulus ratio (tan delta) higher than 1 as described herein, optionally higher than 5 or higher than 10, and hence its fluidity, viscosity and flowability resemble those of a liquid.

In some embodiments, the liquid-like material features the above-mentioned properties of a liquid upon application of shear forces. In some of these embodiments, the liquid-like material is a shear-thinning material or a thixotropic material, that is, a material that features a shear-thinning behavior or thixotropy, respectively.

In some embodiments, the liquid-like material features the above-mentioned properties of a liquid upon application of heat energy. In some of these embodiments, the liquid-like material is a thermal-thinning material, that is, a material that features a thermal-thinning behavior.

In some of any of these embodiments, a liquid-like material can have a consistency and/or rheological properties of a gel or a paste.

In some embodiments of the present invention, liquid and liquid-like materials feature one or more of the following characteristics:
a viscosity of no more than 10 Pa s (10000 centipoises); and/or
Shear loss modulus to Shear storage modulus ratio (tan delta) greater than 1; and/or Shear-thinning and/or thixotropic behavior; and/or
Thermal-thinning behavior; and/or
a Shear storage modulus lower than 20 kPa; and/or
flowability when subjected to a positive pressure lower than 1 bar or lower than 0.5 bar.

Shear storage modulus, G', is also referred to herein interchangeably as "storage shear modulus", and reflects an elastic behavior of a material. Liquid materials are typically non-elastic and hence feature a low shear storage modulus.

Shear loss modulus, G", is also referred to herein interchangeably as "loss shear modulus", and reflects a viscous behavior of a material.

Storage shear modulus and loss shear modulus may optionally be determined using a shear rheometer, for example, a strain-controlled rotational rheometer, at an indicated temperature and frequency (e.g., using procedures well known in the art).

The Shear loss modulus to Shear storage modulus ratio, G"/G', also known as "tan delta", reflects the viscoelastic behavior of a material. Liquid materials are typically more viscous and non-elastic and hence for liquids or liquid-like materials this ratio is higher than 1. Gels are typically elastic and hence this ratio for gel or gel-like materials is lower than 1.

Herein throughout, the term "shear-thinning" describes a property of a fluidic compound or a material that is reflected by a decrease in its viscosity (increase in its fluidity) upon application of shear forces (under shear strain). In some of the present embodiments, a shear-thinning material is such that exhibits a significant, e.g., at least 100 %, reduction in its Shear modulus upon increasing the shear strain from about 1% to above 50 %.

Herein throughout, the term "thixotropic" describes a property of a fluidic compound or material that is reflected by a time-dependent shear-thinning, that is its viscosity is decreased in correlation with the time at which shear forces are applied, and returns back to its original value when application of shear forces is ceased. In some of the present embodiments, a thixotropic material is such that exhibits a significant, e.g., at least 100 %, reduction in its Shear modulus under 50 % strain.

Herein throughout, the term "thermal-thinning" describes a property of a fluidic compound or a material that is reflected by a decrease in its viscosity (increase in its fluidity) upon application of heat energy (increase in temperature). In some of the present embodiments, thermal-thinning materials feature a decrease in viscosity or shear modulus by at least 20 %, or at least 50 %, or even 100 %, upon being heated to a temperature of from 40 to 95 °C, including any intermediate value and subranges therebetween.

Herein throughout, the term "printed object" or "fabricated object" describes a product of the additive manufacturing process. This term refers to the product obtained by a method as described herein, before removal of the support material. A printed object is therefore made of hardened (e.g., cured) modeling material and hardened (e.g., cured) support material.

The term "printed object" as used herein throughout refers to a whole printed object or a part thereof.

The terms "model object", "final object", "object" and "model", as used herein, describe a final product of the manufacturing process. This term refers to the product obtained by a method as described herein, after removal of the support material. The model therefore essentially consists of a hardened (solidified, cured) modeling material, unless otherwise indicated.

The terms "model", "model object", "final object" and "object", as used herein throughout, refer to a whole object or a part thereof.

By "hollow structure" in an object it is meant that the object comprises one or more parts that have cavities (non-solid portions) therein. The cavity can be completely or partially enclosed by the solid material. When partially enclosed, the cavity can feature a narrow opening (e.g., less than 10 mm in diameter) to the outermost surface of the object. The cavities can be of any shape, for example, tubular, spherical, cylindrical, cuboidal, pyramidal, and of more complexed shapes, such as, but not limited to, non-simply connected shape, including, for example, entangled and/or branched shapes (e.g., entangled and/or branched tunnels and/or pipes).

In some embodiments, the cavity has at least one dimension at the millimeter scale, that is, from 0.1 mm to 10 mm, or from 0.1 mm to 8 mm, or from 0.1 mm to 5 mm, or from 1 mm to 5 mm.

Exemplary hollow structures include, but are not limited to, thin tubular structures, such as tubes, pipes and tunnels, which can be branched and/or entangled, and which have in at least a portion thereof a diameter at the millimeter scale, as defined herein.

In some embodiments, the cavity is fully-enclosed, that is, it is an inner hollow structure within the object that is not exposed to an environment surrounding the object. Such an inner hollow structure can be of any shape/geometry, as described herein, and its dimensions can range from a millimeter scale, as defined herein, to a few centimeters (e.g., 1-20, or 1-10, or 1-5 cm) and up to 30, 40m 50 cm and even more.

Exemplary such objects include, but are not limited to, sealed bottles, cups, and any other sealed receptacle.

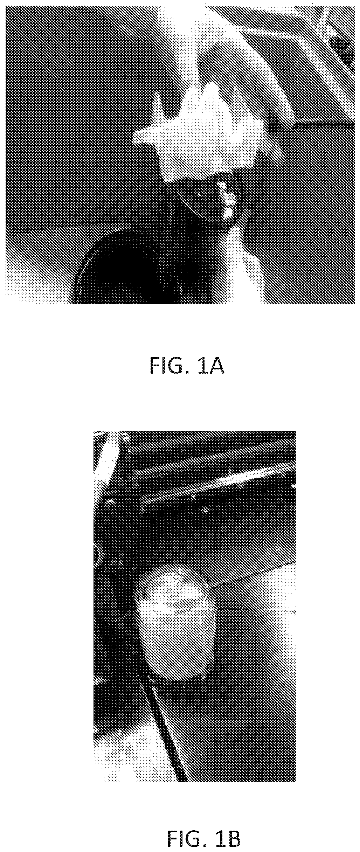

FIG. 1A is an image presenting an exemplary printed object featuring a hollow structure in a form of a curved thin tunnel with small openings to the environment. FIG. 1B is an image presenting an exemplary object in a form of receptacle, showing the printed receptacle filled with a liquid material according to the present embodiments.

Herein throughout, the phrase "uncured building material" collectively describes the materials that are dispensed during the fabrication process so as to sequentially form the layers, as described herein. This phrase encompasses uncured materials (also referred to herein as building material formulation(s)) dispensed so as to form the printed object, namely, one or more uncured modeling material formulation(s), and uncured materials dispensed so as to form the support, namely uncured support material formulations, and, according to the present embodiments, formulations that provide liquid or liquid-like materials as described herein.

Herein throughout, the phrases "cured modeling material" and "hardened modeling material", which are used interchangeably, describe the part of the building material that forms a model object or a part thereof, as defined herein, upon exposing the dispensed building material to curing, and following removal of the support material, if present. The cured or hardened modeling material can be a single hardened material or a mixture of two or more hardened materials, depending on the modeling material formulations used in the method, as described herein.

Herein throughout, the phrase "modeling material formulation", which is also referred to herein interchangeably as "modeling formulation", describes a part of the uncured building material which is dispensed so as to form the model object or a part thereof, as described herein. The modeling formulation is an uncured modeling formulation, which, upon exposure to a curing condition, forms the final object or a part thereof.

An uncured building material can comprise one or more modeling formulations, and can be dispensed such that different parts of the model object are made upon curing different modeling formulations, and hence are made of different cured modeling materials or different mixtures of cured modeling materials.

Herein throughout, the phrase "hardened support material" is also referred to herein interchangeably as "cured support material" or simply as "support material" and describes the part of the building material that is intended to support the fabricated final object during the fabrication process, and which is removed once the process is completed and a hardened modeling material is obtained.

Herein throughout, the phrase "support material formulation", which is also referred to herein interchangeably as "support formulation" or simply as "formulation", describes a part of the uncured building material which is dispensed so as to form the support material, as described herein. The support material formulation is an uncured formulation. When a support material formulation is a curable formulation, it forms, upon exposure to a curing condition, a hardened support material.

Support materials, which can be either liquid or liquid-like materials or hardened, typically gel or gel-like materials, are also referred to herein as sacrificial materials, which are removable after layers are dispensed and exposed to a curing energy, to thereby expose the shape of the final object.

Herein throughout, the term "water-miscible" describes a material which is at least partially dissolvable or dispersible in water, that is, at least 50 % of the molecules move into the water upon mixture. This term encompasses the terms "water-soluble" and "water dispersible".

Herein throughout, the term "water-soluble" describes a material that when mixed with water in equal volumes or weights, a homogeneous solution is formed.

Herein throughout, the term "water-dispersible" describes a material that forms a homogeneous dispersion when mixed with water in equal volumes or weights.

Herein throughout, the phrase "dissolution rate" describes a rate at which a substance is dissolved in a liquid medium. Dissolution rate can be determined, in the context of the present embodiments, by the time needed to dissolve a certain amount of support material. The measured time is referred to herein as "dissolution time".

Herein throughout, whenever the phrase "weight percents" is indicated in the context of embodiments of a formulation (e.g., a building material formulation), it is meant weight percents of the total weight of the respective formulation or formulation system as described herein.

The phrase "weight percents" is also referred to herein as "% by weight" or "% wt.".

Herein throughout, some embodiments of the present invention are described in the context of the additive manufacturing being a 3D inkjet printing. However, other additive manufacturing processes, such as, but not limited to, SLA and DLP, are contemplated.

An uncured building material can comprise one or more modeling formulations, and can be dispensed such that different parts of the object are made, upon curing, of different cured modeling formulations or different combinations thereof, and hence are made of different cured modeling materials or different mixtures of cured modeling materials.

At least a portion of the formulations forming the building material (modeling material formulations and support material formulations) comprise one or more curable materials, which, when exposed to curing energy, form hardened (cured) material.

Herein throughout, a "curable material" is a compound (typically a monomeric or oligomeric compound, yet optionally a polymeric material) which, when exposed to a curing condition (e.g., curing energy), as described herein, solidifies or hardens to form a cured material. Curable materials are typically polymerizable materials, which undergo polymerization and/or cross-linking when exposed to suitable condition, typically a source of energy.

A curable material, according to the present embodiments, can harden or solidify (cure) while being exposed to a curing condition which can be a curing energy, and/or to another curing condition such as contact with a chemical reagent or exposure to the environment.

The terms "curable" and "solidifiable" as used herein are interchangeable.

The polymerization can be, for example, free-radical polymerization, cationic polymerization or anionic polymerization, and each can be induced when exposed to curing energy such as, for example, radiation, heat, etc., as described herein.

In some of any of the embodiments described herein, a curable material is a photopolymerizable material, which polymerizes and/or undergoes cross-linking upon exposure to radiation, as described herein, and in some embodiments the curable material is a UV-curable material, which polymerizes and/or undergoes cross-linking upon exposure to UV radiation, as described herein.

In some embodiments, a curable material as described herein is a photopolymerizable material that polymerizes via photo-induced free-radical polymerization. Alternatively, the curable material is a photopolymerizable material that polymerizes via photo-induced cationic polymerization.

In some of any of the embodiments described herein, a curable material can be a monomer, an oligomer or a short-chain polymer, each being polymerizable and/or cross-linkable as described herein.

In some of any of the embodiments described herein, when a curable material is exposed to curing condition (e.g., radiation), it hardens (solidifies, cures) by any one, or combination, of chain elongation and cross-linking.

In some of any of the embodiments described herein, a curable material is a monomer or a mixture of monomers which can form a polymeric material upon a polymerization reaction, when exposed to curing energy at which the polymerization reaction occurs. Such curable materials are also referred to herein as monomeric curable materials.

In some of any of the embodiments described herein, a curable material is an oligomer or a mixture of oligomers which can form a polymeric material upon a polymerization reaction, when exposed to curing energy at which the polymerization reaction occurs. Such curable materials are also referred to herein as oligomeric curable materials.

In some of any of the embodiments described herein, a curable material, whether monomeric or oligomeric, can be a mono-functional curable material or a multi-functional curable material.

Herein, a mono-functional curable material comprises one functional group that can undergo polymerization when exposed to curing energy (e.g., radiation).

A multi-functional curable material comprises two or more, e.g., 2, 3, 4 or more, functional groups that can undergo polymerization when exposed to curing energy. Multi-functional curable materials can be, for example, di-functional, tri-functional or tetra-functional curable materials, which comprise 2, 3 or 4 groups that can undergo polymerization, respectively. The two or more functional groups in a multi-functional curable material are typically linked to one another by a linking moiety, as defined herein. When the linking moiety is an oligomeric or polymeric moiety, the multi-functional group is an oligomeric or polymeric multi-functional curable material. Multi-functional curable materials can undergo polymerization when subjected to curing energy and/or act as cross-linkers.

The method of the present embodiments manufactures three-dimensional objects in a layerwise manner by forming a plurality of layers in a configured pattern corresponding to the shape of the objects, as described herein.

The final three-dimensional object is made of the modeling material or a combination of modeling materials or a combination of modeling material/s and support material/s or modification thereof (e.g., following curing). All these operations are well-known to those skilled in the art of solid freeform fabrication.

In some embodiments of the present invention the final three-dimensional object is a hollow tubular structure, which may be non-branched and non-entangled, branched but not entangled, not branched but entangled, or branched and entangled.

In some embodiments, the final three-dimensional object has an internal diameter of from about 1 mm to about 100 mm, an outer diameter which is larger than its inner diameter and which is from about 2 mm to about 120 mm, and a total length of from about 50 mm to about 500 mm.

According to an aspect of some embodiments of the present invention there is provided a method of additive manufacturing of a three-dimensional object, which is usable in additive manufacturing of objects comprising one or more hollow structures, as defined herein.

The method is generally effected by sequentially forming a plurality of layers in a configured pattern corresponding to the shape of the object, such that formation of each of at least a few of said layers, or of each of said layers, comprises dispensing two or more building material formulations which comprise one or more modeling material formulation(s) (herein, "a first building material formulation"), and one or more formulations that provide, upon exposure to a curing condition as defined herein, a liquid or liquid-like material (herein, "a second building material formulation"), as defined herein, and exposing the dispensed modeling material to a curing condition (e.g., curing energy), to thereby form at least a cured (hardened) modeling material, as described in further detail hereinafter.

In some exemplary embodiments of the invention an object is manufactured by dispensing two or more different modeling material formulations, each modeling material formulation from a different dispensing head of the AM system. The modeling material formulations are optionally and preferably deposited in layers during the same pass of the dispensing heads. The modeling material formulations and/or combination of formulations within the layer are selected according to the desired properties of the object, and as further described in detail hereinbelow. Such a methodology is also referred to herein as "multi-material".

The phrase "digital materials", abbreviated as DM, as used herein and in the art, describes a combination of two or more materials on a microscopic scale or voxel level such that the printed zones of a specific material are at the level of few voxels, or at a level of a voxel block. Such digital materials may exhibit new properties that are affected by the selection of types of materials and/or the ratio and relative spatial distribution of two or more materials.

In exemplary digital materials, the modeling material of each voxel or voxel block, obtained upon curing, is independent of the modeling material of a neighboring voxel or voxel block, obtained upon curing, such that each voxel or voxel block may result in a different model material and the new properties of the whole part are a result of a spatial combination, on the voxel level, of several different model materials.

Herein throughout, whenever the expression "at the voxel level" is used in the context of a different material and/or properties, it is meant to include differences between voxel blocks, as well as differences between voxels or groups of few voxels. In preferred embodiments, the properties of the whole part are a result of a spatial combination, on the voxel block level, of several different model materials.

### The Method:

According to an aspect of some embodiments of the present invention there is provided a method of additive manufacturing of a three-dimensional object, the method comprising sequentially forming a plurality of layers in a configured pattern corresponding to the shape of the object, thereby forming the object.

It is to be understood that, unless otherwise defined, the operations described hereinbelow can be executed either contemporaneously or sequentially in many combinations or orders of execution. Specifically, the ordering of the flowchart diagrams is not to be considered as limiting. For example, two or more operations, appearing in the following description or in the flowchart diagrams in a particular order, can be executed in a different order (e.g., a reverse order) or substantially contemporaneously. Additionally, several operations described below are optional and may not be executed.

Computer programs implementing the method of the present embodiments can commonly be distributed to users on a distribution medium such as, but not limited to, a floppy disk, a CD-ROM, a flash memory device and a portable hard drive. From the distribution medium, the computer programs can be copied to a hard disk or a similar intermediate storage medium. The computer programs can be run by loading the computer instructions either from their distribution medium or their intermediate storage medium into the execution memory of the computer, configuring the computer to act in accordance with the method of this invention. All these operations are well-known to those skilled in the art of computer systems.

The computer implemented method of the present embodiments can be embodied in many forms. For example, it can be embodied in on a tangible medium such as a computer for performing the method operations. It can be embodied on a computer readable medium, comprising computer readable instructions for carrying out the method operations. In can also be embodied in electronic device having digital computer capabilities arranged to run the computer program on the tangible medium or execute the instruction on a computer readable medium.

Each layer is formed by additive manufacturing apparatus which scans a two-dimensional surface and patterns it. While scanning, the apparatus visits a plurality of target locations on the two-dimensional layer or surface, and decides, for each target location or a group of target locations, whether or not the target location or group of target locations is to be occupied by a building material formulation, and which type of building material formulation is to be delivered thereto. The decision is made according to a computer image of the surface.

In preferred embodiments of the present invention the AM comprises three-dimensional printing, more preferably three-dimensional inkjet printing. In these embodiments two or more building material formulations are dispensed from one or more dispensing head(s), preferably from two or more dispensing heads, each having a set of nozzles to deposit a building material formulation in layers on a supporting structure. The AM apparatus thus dispenses building material formulations in target locations which are to be occupied and leaves other target locations void. The apparatus typically includes a plurality of dispensing heads, each of which can be configured to dispense a different building material formulation. Thus, different target locations can be occupied by different building material formulations. The types of building material formulations can be categorized into two major categories: a modeling material formulation (e.g., a first building material formulation, as described herein; e.g., Formulation M), a support material formulation (e.g., a third building material formulation, as described herein; e.g., Formulation S), and a second building material formulation as described herein (e.g., Formulation L), which can also be categorized, according to some embodiments of the present invention as a support material formulation, and according to embodiments in which the object comprises a liquid material, as a modeling material formulation). The support material formulation(s) serve for supporting the object or object parts during the fabrication process and/or other purposes, e.g., for providing hollow or porous objects. When using a solid or semi-solid (e.g., gel-like) support, the constructions may additionally include modeling material formulation elements, e.g. for further support strength.

The modeling material formulation is generally a composition which is formulated for use in additive manufacturing and which is able to form a three-dimensional object on its own, *i.e.*, without having to be mixed or combined with any other substance.

The final three-dimensional object is made of a hardened modeling material or optionally a plurality of hardened modeling materials (Material M or a plurality of M materials), made of modeling material formulation(s) (formulation(s) M) or optionally of a combination of the modeling material formulation(s) M, respectively, and the liquid or liquid-like material(s), Material L formed of Formulation L, as described herein, or optionally in a further combination of modeling material formulation(s) M, the liquid or liquid-like material formulation(s) L and a support material formulation S, or modification thereof (*e.g*., following curing). All these operations are well-known to those skilled in the art of solid freeform fabrication.

In some exemplary embodiments of the invention an object is manufactured by dispensing two or more different modeling material formulations, each material formulation from a different dispensing head of the AM. The modeling material formulations are optionally and preferably deposited in layers during the same pass of the printing heads. The modeling material formulations and combination of modeling material formulations within the layer are selected according to the desired properties of the object.

According to some of any of the embodiments described herein, the formation of at least a few of the layers comprises:
dispensing an uncured building material comprising at least two building material formulations as follows:
a formulation M (also referred to herein as a first building material formulation), comprising one or more modeling material formulation(s) which, upon exposure to a curing condition, form(s) a hardened modeling material M (also referred to herein as a first modeling material or a first material); and
a formulation L (also referred to herein as a second building material formulation), which, upon exposure to said curing condition, forms a Material L (also referred to herein as a second material), which is a liquid or liquid-like material as described herein, featuring at least one of:
   Shear loss modulus to Shear storage modulus ratio (tan delta) greater than 1;
   Shear-thinning and/or thixotropic behavior;
   Thermal-thinning behavior;
   a Shear storage modulus lower than 20 kPa; and
   flowability when subjected to a positive pressure lower than 1 bar or lower than 0.5 bar (also referred to herein as a second material).

According to some of any of the embodiments described herein, upon dispensing each of the layers, the method proceeds by exposing the dispensed building material formulations to a curing condition, to thereby form at least the hardened modeling material, Material M.

According to some of any of the embodiments described herein, upon exposing all of the dispensed layers to a curing condition, a printed object featuring one or more regions containing a liquid or liquid-like material, Material L, is obtained.

According to some of any of the embodiments described herein, the dispensing is such that the hardened modeling material M forms at least one hollow structure, and Material L is at least partially enclosed in the hollow structure.

According to some of any of the embodiments described herein, upon exposing all of the dispensed layers to a curing condition, the liquid or liquid-like material L which is enclosed or partially enclosed by the hardened modeling material M is removed, as described hereinbelow, to thereby reveal the final shape of the object.

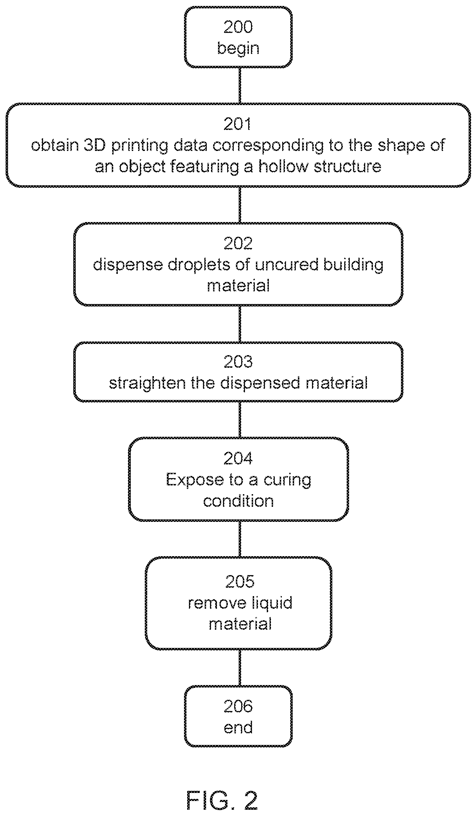

FIG. 2 presents a flowchart describing an exemplary method according to some embodiments of the present invention.

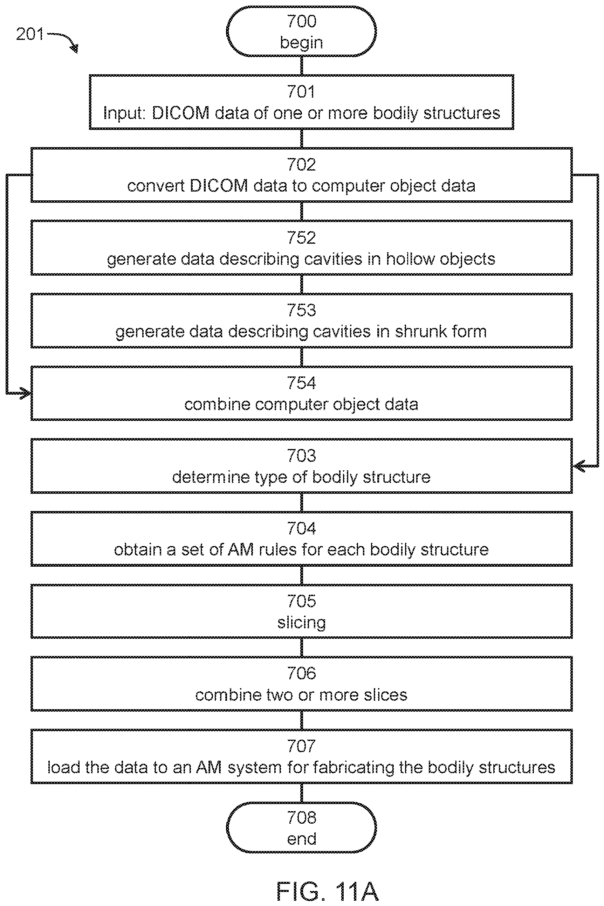

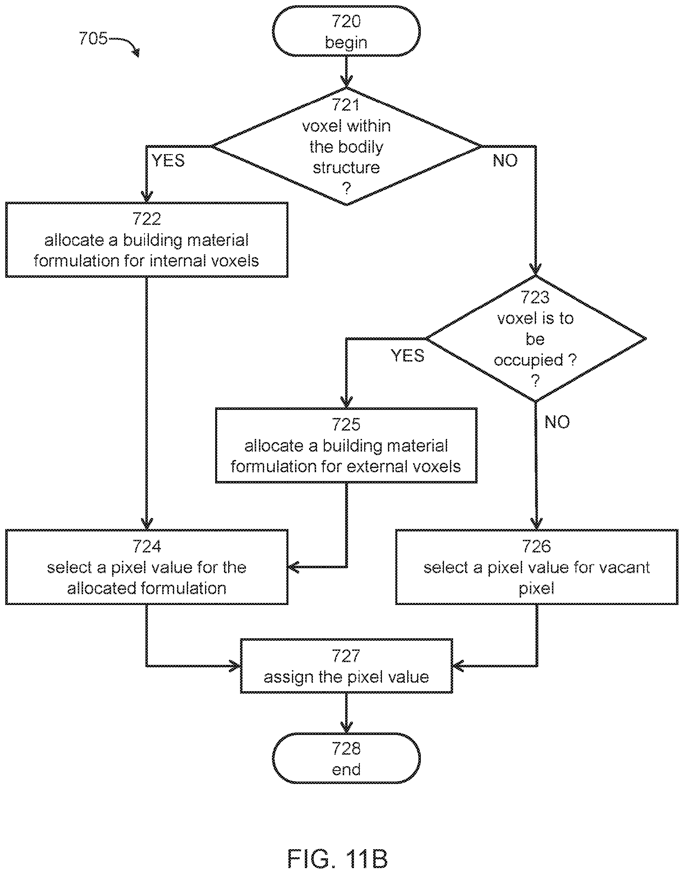

The method begins at **200** and optionally and preferably continues to **201** at which computer object data (*e.g.*, 3D printing data) corresponding to the shape of the object are obtained. The computer object data can be in any of the computer object data formats described herein. An exemplified technique for obtaining the computer object data is described hereinunder with reference to FIGs. 11A and 11B.

The method continues to **202** at which droplets of the uncured building material as described herein (e.g., one or more modeling material formulations M as described herein, providing a Material M as described herein, one or more formulations L providing a liquid or liquid-like (second) material L when exposed to a curing condition, and optionally one or more support material formulations S providing a support (third) material S when exposed to curing condition), are dispensed in layers, on a receiving medium, optionally and preferably using an AM system, such as, but not limited to, system **110** or system **10** described below, according to the computer object data (e.g., printing data), and as described herein. In any of the embodiments described herein the dispensing **202** is by at least two different multi-nozzle inkjet printing heads. The receiving medium can be a tray of an AM system (e.g., tray **360** of system **110** described below or tray **12** of system **10** described below) as described herein or a previously deposited layer.

In some embodiments of the present invention, the dispensing **202** is effected under ambient environment.

Optionally, before being dispensed, the uncured building material, or a part thereof (e.g., one or more formulations of the building material), is heated, prior to being dispensed. These embodiments are particularly useful for uncured building material formulations having relatively high viscosity at the operation temperature of the working chamber of a 3D inkjet printing system. The heating of the formulation(s) is preferably to a temperature that allows jetting the respective formulation through a nozzle of a printing head of a 3D inkjet printing system. In some embodiments of the present invention, the heating is to a temperature at which the respective formulation exhibits a viscosity of no more than X, where X is about 0.03 Pa s (30 centipoises), preferably about 0.025 Pa s (25 centipoises) and more preferably about 0.02 Pa s (20 centipoises), or 0.018 Pa s (18 centipoises), or 0.016 Pa s (16 centipoises), or 0.014 Pa s (14 centipoises), or 0.012 Pa s (12 centipoises), or 0.01 Pa s (10 centipoises), or even lower.

The heating can be executed before loading the respective formulation into the printing head of the AM (e.g., 3D inkjet printing) system, or while the formulation is in the printing head or while the composition passes through the nozzle of the printing head.

In some embodiments, the heating is executed before loading of the respective formulation into the dispensing (*e.g*., inkjet printing) head, so as to avoid clogging of the dispensing (*e*.*g*., inkjet printing) head by the formulation in case its viscosity is too high.

In some embodiments, the heating is executed by heating the dispensing (*e.g*., inkjet printing) heads, at least while passing the modeling material formulation(s) through the nozzle of the dispensing (*e.g*., inkjet printing) head.

In some embodiments, during the dispensing of a building material formulation that is to remain in a liquid or liquid-like in the final object (*e.g*., the second building material formulation as described herein; Formulation L) the operation of the cooling system described below is temporarily terminated, so as to maintain a still-air environment.

At **203** the newly dispensed layer is straightened, for example, using a leveling device **32** or **132** which is described below, and which is optionally and preferably rotatable. When the newly dispensed layer contains a formulation that is to remain in a liquid or liquid-like in the final object (the second building formulation as described herein; Formulation L), the rotation speed of the leveling device is preferably changed, typically reduced, relative to its speed when straightening other layers. The control over the rotation speed of the leveling device can be done by a controller (*e.g*., controller **20** or controller **340**).

In some of any of the embodiments described herein, the method further comprises dispensing a third building material formulation, which is a curable support material formulation, formulation S, as described herein in any of the respective embodiments.

Once the uncured building material formulations are dispensed on the receiving medium according to the computer object data (*e.g*., printing data), the method optionally and preferably continues to **204** at which a curing condition (e.g., curing energy) is applied to the deposited layers, e.g., by means of a radiation source as described herein. Preferably, the curing is applied to each individual layer following the deposition of the layer and prior to the deposition of the previous layer. Optionally, the deposited (dispensed) layers are exposed to a curing condition other than a curing energy, as described herein.

In some embodiments, applying a curing energy (or a curing condition) is effected under a generally dry and inert environment, as described herein.

At this stage, a printed object, made of hardened modeling material(s) (material M) and featuring at least one hollow structure, as defined herein, filled with a liquid or liquid-like (second) material, Material L, as defined herein, is obtained.

In some embodiments, the method continues to **205**, at which removal of the liquid or liquid-like (second) material L from the printed object is effected, as described herein, to thereby reveal the final object. The removal of the liquid or liquid-like material L is optionally and preferably by application of pressure, as described herein, into a cavity or cavities filled by the liquid or liquid-like material L. The pressure is optionally and preferably sufficient to effect a flow of the liquid or liquid-like material L out of the cavity without causing pressure induced damage to the shell or shells enclosing the cavity. Optionally, and preferably in case Material L features a thermal-thinning behavior, the printed object is heated, for example, to a temperature of from about 40 °C to about 95 °C prior to the removal of the liquid or liquid-like material L.

The method ends at **206**.

In some embodiments, the method is executed using an exemplary system as described herein in any of the respective embodiments and any combination thereof.

Each of the modeling material formulation(s) M, the liquid formulation(s) L and the support material formulation(s) S, if present, can be contained in a particular container or cartridge of a solid freeform fabrication apparatus or a combination of modeling material formulations deposited from different containers of the apparatus.

In some embodiments, at least one, or at least a few (e.g., at least 10, at least 20, at least 30 at least 40, at least 50, at least 60, at least 80, or more), of the layers is/are formed by dispensing droplets, as in **202,** of a single modeling material formulation M, as described herein in any of the respective embodiments.

In some embodiments, at least one, or at least a few (e.g., at least 10, at least 20, at least 30 at least 40, at least 50, at least 60, at least 80, or more), of the layers is/are formed by dispensing droplets, as in **202**, of two or more modeling material formulations M, as described herein in any of the respective embodiments, each from a different dispensing (e.g., inkjet printing) head.

These embodiments provide, *inter alia*, the ability to select materials from a given number of materials and define desired combinations of the selected materials and their properties. According to the present embodiments, the spatial locations of the deposition of each material with the layer is defined, either to effect occupation of different three-dimensional spatial locations by different materials, or to effect occupation of substantially the same three-dimensional location or adjacent three-dimensional locations by two or more different modeling materials M so as to allow post deposition spatial combination of the materials within the layer, thereby to form a composite material at the respective location or locations.

Any post deposition combination or mix of modeling materials M is contemplated. For example, once a certain material M is dispensed it may preserve its original properties. However, when it is dispensed simultaneously with another modeling material or other dispensed materials which are dispensed at the same or nearby locations, a composite material having a different property or properties to the dispensed materials is formed.

Some of the embodiments thus enable the deposition of a broad range of material combinations, and the fabrication of an object which may consist of multiple different combinations of materials, in different parts of the object, according to the properties desired to characterize each part of the object.

In some of these embodiments, the two or more modeling material formulations are dispensed in a voxelated manner, wherein voxels of one of said modeling material formulations are interlaced with voxels of at least one another modeling material formulation.

In some embodiments, at least one, or at least a few (e.g., at least 10, at least 20, at least 30 at least 40, at least 50, at least 60, at least 80, or more), of the layers is/are formed by dispensing droplets, as in **202**, of two or more building material formulations, and in some embodiments the building material formulations comprise a modeling material formulation M (or a combination of two of more modeling formulations M as described herein) and a second building material formulation, liquid formulation L, as described herein in any of the respective embodiments, each building material formulation from a different dispensing (*e.g*., inkjet printing) head, according to the embodiments described herein for two or more modeling material formulations.

In some embodiments, at least one, or at least a few (e.g., at least 10, at least 20, at least 30 at least 40, at least 50, at least 60, at least 80, or more), of the layers is/are formed by dispensing droplets, as in **202**, of two or more building material formulations, and in some embodiments the building material formulations comprise a modeling material formulation M (or a combination of two of more modeling formulations M as described herein) and a third building material formulation which is a support material formulation S as described herein in any of the respective embodiments, each building material formulation from a different dispensing (*e.g*., inkjet printing) head, according to the embodiments described herein for two or more modeling material formulations.

In some embodiments, at least one, or at least a few (e.g., at least 10, at least 20, at least 30 at least 40, at least 50, at least 60, at least 80, or more), of the layers is/are formed by dispensing droplets, as in **202**, of two or more building material formulations, and in some embodiments the building material formulations comprise a support material formulation S (or a combination of two of more support material formulations S as described herein) and a liquid formulation L as described herein in any of the respective embodiments, each building material formulation from a different dispensing (*e.g*., inkjet printing) head, according to the embodiments described herein for two or more modeling material formulations.

In some embodiments, at least one, or at least a few (e.g., at least 10, at least 20, at least 30 at least 40, at least 50, at least 60, at least 80, or more), of the layers is/are formed by dispensing droplets, as in **202**, of three or more building material formulations, and in some embodiments the building material formulations comprise a modeling material formulation M (or a combination of two of more modeling formulations M as described herein), a liquid formulation L as described herein in any of the respective embodiments, and a support material formulation S (or a combination of two of more support material formulations S as described herein), each building material formulation from a different dispensing (*e.g.*, inkjet printing) head, according to the embodiments described herein for two or more modeling material formulation.

In some of any of these embodiments, the two or more building material formulations are dispensed in a voxelated manner, wherein voxels of one of said building material formulations are interlaced with voxels of at least one another building material formulation. The interlacing can include two or more (first) modeling material formulations M, a modeling (first) formulation M and a support material formulation S (third formulation), a (second) liquid formulation L as described herein and one or more (first) modeling material formulations M, a (second) liquid formulation L as described herein and one or more (third) support material formulations S, or at least one (first) modeling material formulation M, at least one (third) support material formulation S and at least one (second) liquid formulation L as described herein.

Some embodiments thus provide a method of layerwise fabrication of a three-dimensional object, in which for each of at least a few (*e.g*., at least two or at least three or at least 10 or at least 20 or at least 40 or at least 80) of the layers or all the layers, two or more building material formulations are dispensed, optionally and preferably using system **10** or system **110** described below. Each building material formulation is preferably dispensed by jetting it out of a plurality of nozzles of a printing head (*e.g*., head **16** described below). The dispensing is in a voxelated manner, wherein voxels of one of said building material formulations are interlaced with voxels of at least one another building material formulation, according to a predetermined voxel ratio.

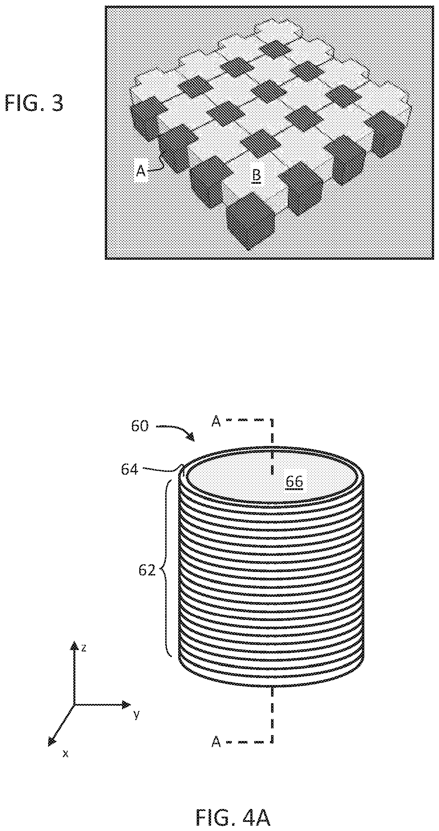

Such a combination of two building material formulations at a predetermined voxel ratio is referred to as digital material (DM). A representative example of a digital material is illustrated in FIG. 3, showing materials A and B which are interlaced over a region of a layer in a voxelated manner.

In some embodiments, dispensing two modeling material formulations at a predetermined voxel ratio allows obtaining rubbery-like materials featuring mechanical properties as desired. For example, by manipulating the voxel ratio, a series of rubbery-like digital material featuring various Shore A hardness values can be obtained, in a controllable digital manner.

For any predetermined ratio of the materials, a digital material can be formed for example, by ordered or random interlacing. Also contemplated are embodiments in which the interlacing is semi-random, for example, a repetitive pattern of sub-regions wherein each subregion comprises random interlacing.

In some of any of the embodiments described herein, when droplets of two or more building material formulations are dispensed, in each of at least a few layers, as described herein, the dispensing is such that forms a core region and one or more envelope regions at least partially surrounding said core region. Such dispensing results in fabrication of an object constructed from a plurality of layers, a layered core constituting core regions and a layered shell constituting envelope regions. In some embodiments of the present invention the (second) building material formulation, liquid formulation L, is dispensed to form the (second), liquid or liquid-like material L as the core region and a modeling material formulation M or a combination of modeling material formulations M (e. g., a combination that forms a DM) is dispensed to form one or more envelope regions at least partially surrounding the core region. Optionally and preferably a curable support material (third) formulation S is also dispensed. For example, the curable support material (third) formulation S is dispensed to form an intermediate envelope region between a core made of the (second) material L and an outer envelope region that is made of a modeling material formulation M or a combination of modeling material formulations M.

The structure according to some of these embodiments is a shelled structure made of two or more materials. The structure typically comprises a layered core which is at least partially coated by one or more layered shells such that at least one layer of the core engages the same plane with a layer of at least one of the shells. The present embodiments also contemplate a shelled structure which comprises a core which is at least partially coated by one or more layered shells such that the core spans over a plurality of layers forming the shells. These embodiments are particularly advantageous when the core is made of material L form in which the layers join without being hardened.

The thickness of each shell, as measured perpendicularly to the surface of the structure, is typically at least 10 µm. In various exemplary embodiments, the core and the shell are different from each other in their thermo-mechanical properties. This is readily achieved by fabricating the core and shell from different building material formulations or different combinations of building material formulations. The thermo-mechanical properties of the core and shell are referred to herein as "core thermo-mechanical properties" and "shell thermo-mechanical properties," respectively.

A representative and non-limiting example of a structure according to some embodiments of the present invention is shown in FIGs. 4A-G.

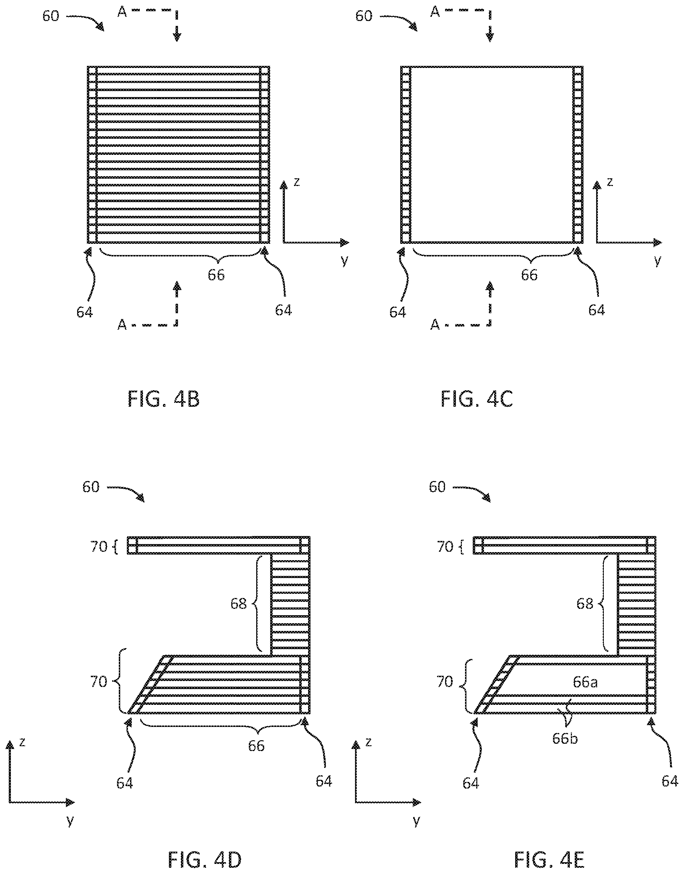

FIG. 4A is a schematic illustration of a perspective view of a structure **60**, FIG. 4B is a cross-sectional view of structure **60** along line A---A of FIG. 4A in embodiments in which structure **60** comprises a layered core, and FIG. 4C is a cross-sectional view of structure **60** along line A---A of FIG. 4A in embodiments in which structure **60** comprises a liquid or liquid-like core (made of Material L). For clarity of presentation a Cartesian coordinate system is also illustrated.

Structure **60** comprises a plurality of layers **62** stacked along the z direction. Structure **60** is typically fabricated by an AM technique, *e.g*., using system **10** or **110** described below, whereby the layers are formed in a sequential manner. Thus, the z direction is also referred to herein as the "build direction" of the structure. Layers **62** are, therefore, perpendicular to the build direction. Although structure **60** is shown as a cylinder, this need not necessarily be the case, since the structure of the present embodiments can have any shape.

The shell and core of structure **60** are shown at **64** and **66**, respectively. When the core is a layered core (FIG. 4B) the layers of core **66** and the layers of shell **64** are co-planar. When the core is liquid or liquid-like Material L (FIG. 4C) the core spans across multiple layers of shell **64**. The AM technique allows the simultaneous fabrication of shell **64** and core **66**, whereby for a particular formed layer, the inner part of the layer constitutes a part of the core, and the periphery of the layer, or part thereof, constitutes a layer of the shell.

A peripheral section of a layer which contributes to shell **64** is referred to herein as an "envelope region" of the layer. In the non-limiting example of FIGs. 4A-C, each of layers **62** has an envelope region. Namely, each layer in FIGs. 4A and 4B contributes both to the core and to the shell. However, this need not necessarily be the case, since, for some applications, it may be desired to have the core exposed to the environment in some regions. In these applications, at least some of the layers do not include an envelope region. Representative examples of such configuration are illustrated in the cross-sectional view of FIGs. 4D and 4E, showing some layers **68** which contribute to the core but not to the shell, and some layers **70** which contribute to both the core and the shell, wherein FIG. 4D illustrates a configuration suitable for a structure which comprises a layered core, and FIG. 4D illustrates a configuration suitable for a structure having a liquid or liquid-like core **66a** (made of the liquid or liquid-like material L as described herein) and optionally and preferably also a layered core **66b**.

In some embodiments, one or more layers do not include a region with core thermo-mechanical properties and comprise only a region with shell thermo-mechanical properties. These embodiments are particularly useful when the structure has one or more thin parts, wherein the layers forming those parts of the structure are preferably devoid of a core region. Also contemplated are embodiments in which one or more layers do not include a region with shell thermo-mechanical properties and comprise only a region with core thermo-mechanical properties.

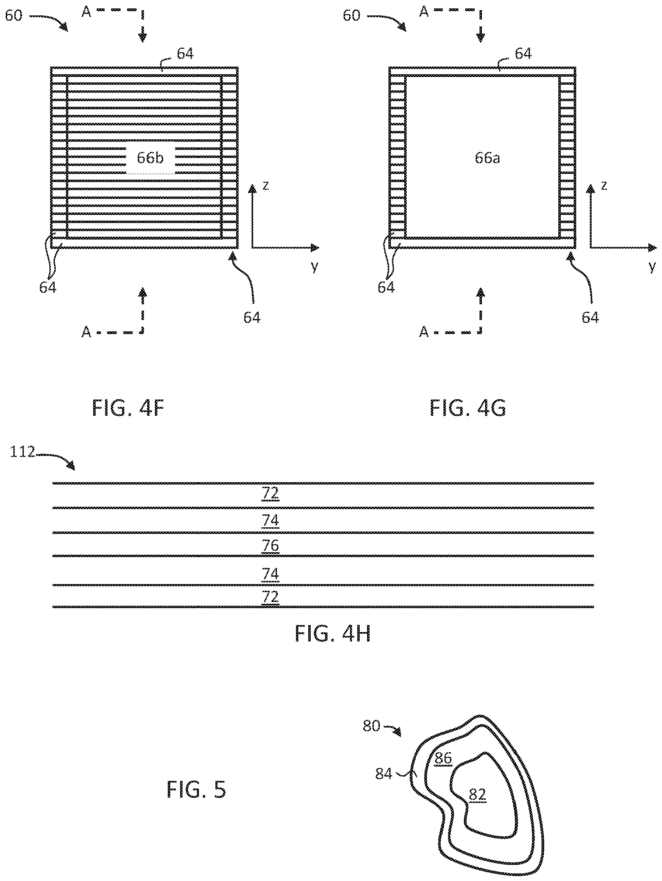

The shell can, optionally and preferably, also cover structure **60** from above and/or below, relative to the z direction. In these embodiments, some layers at the top most and/or bottom most parts of structure **60** have at least one material property which is different from core **66**. In various exemplary embodiments of the invention the top most and/or bottom most parts of structure **60** have the same material property as shell **64**. Representative examples of this embodiment are illustrated in FIGs. 4F and 4G. The top/bottom shell of structure **60** may be thinner (*e.g*., 2 times thinner) than the side shell, e.g. when the top or bottom shell comprises a layer above or below the structure, and therefore has the same thickness as required for layers forming the object. FIG. 4F illustrates a configuration suitable for a structure which comprises a layered core **66b**, and FIG. 4D illustrates a configuration suitable for a structure having a liquid or liquid-like (material L) core **66a**.

When both the core and shell are made of a DM composed of the same modeling material formulations, the relative surface density of any of the modeling materials in the core is different from the relative surface density of that material in the shell or envelope region. In some embodiments, however, the core is formed from a DM and the shell is formed of a single modeling material formulation or *vice versa.*

In various exemplary embodiments of the invention the thickness of the shell, as measured in the x-y plane (perpendicularly to the build direction z) is non-uniform across the build direction. In other words, different layers of the structure may have envelope regions of different widths. For example, the thickness of the shell along a direction parallel to the x-y plane can be calculated as a percentage of the diameter of the respective layer along that direction, thus making the thickness dependent on the size of the layer. In various exemplary embodiments of the invention the thickness of the shell is non-uniform across a direction which is tangential to the outer surface of the shell and perpendicular to the build direction. In terms of the structure's layers, these embodiments correspond to an envelope region having a width which is non-uniform along the periphery of the respective layer.

In some embodiments of the present invention the shell of the structure, or part thereof, is by itself a 'shelled' structure, comprising more than envelope region. Specifically in these embodiments, the structure comprises an inner core, at least partially surrounded by at least one intermediate envelope region, wherein the intermediate envelope(s) is surrounded by an outer envelope region. The thickness of the intermediate envelope region(s), as measured perpendicularly to the build direction, is optionally and preferably, but not necessarily, larger (e.g., 10 times larger) than the thickness of the outermost envelope region. In these embodiments, the intermediate envelope region(s) serves as a shell of the structure and can therefore have the properties of the shell as further detailed hereinabove.

Alternatively, the intermediate envelope region(s) can serve as a supporting shell, in which case the intermediate envelope region(s) are preferably formed by dispensing a curable support material (third) formulation S or a combination of two or more curable support material (third) formulations S (for example, to form a DM), or a combination of at least one curable support material (third) formulation S and at least one curable modeling material formulation M (for example, to form a DM), or a combination of at least one curable support material (third) formulation S and at least one liquid formulation L (for example, to form a DM).

Still alternatively, the intermediate envelope region(s) can serve as a liquid or liquid-like buffer between an inner layer core and an outer layered shell, in which case the intermediate envelope region(s) are preferably formed by dispensing the liquid formulation L, and the core is preferably formed by dispensing a (third) curable support material formulation S or a combination of two or more curable support material (third) formulations S (for example, to form a DM), or a combination of at least one curable support material (third) formulation S and at least one curable modeling material (first) formulation M (for example, to form a DM).

The outermost envelope shell may also serve for protecting the intermediate envelope(s) from breakage under load.

The structure of the present embodiments can be formed, as stated, in a layerwise manner, for example, using system **10** or **110** described below. In various exemplary embodiments of the invention a computer implemented method automatically performs dynamic adaptation of the shell to the specific elements of the structure. The method can optionally and preferably employ user input to calculate the shell for each region of the structure and assigns the voxels of the outer surfaces to the respective modeling material or combination of modeling materials. The computer implemented method can be executed by a control unit which controls the solid freeform fabrication apparatus (*e.g*., control unit **152** or **20** described below) via a data processor (*e.g.*, data processor **154** or **24** described below).

In some embodiments of the present invention one or more additional shell layers are dispensed so as to form a shell also at the top most and/or bottom most parts of the structure. These layers are preferably devoid of a core region since they serve for shelling the core from above or from below. When it is desired to shell the core from above, the additional shell layer(s) are dispensed on top of all other layers, and when it is desired to shell the core from below, the additional layer(s) are dispensed on the working surface (*e.g*., tray **360** or **12** described below) while all other layers are dispensed thereafter.

Any of the envelope regions optionally has a width of at least 10 µm. Preferably, all the envelope regions have a width of at least 10 µm.

Any of the core and envelope regions, and optionally also the top most and/or bottom most additional layers, may be fabricated using modeling material formulations or combinations of modeling material formulations or combination modeling material formulations and curable support material formulations (*e.g*., digital materials) as described herein. In some embodiments of the present invention one or more core regions are fabricated using the (second) liquid building material formulation L as described herein or using a combination of the liquid, L, and support material formulations S (e.g., digital materials).

In some embodiments of this invention, the shell is fabricated selectively in different regions of the structure so as to change the material properties only in selected regions or areas without affecting the mechanical properties of other regions.

In some of any of the embodiments of the present invention, once the layers are dispensed as described herein, exposure to curing energy as described herein is effected. In some embodiments, the curable materials are UV-curable materials and the curing energy is such that the radiation source emits UV radiation. When the (second) liquid building material formulation L is dispensed, it preferably, in some embodiments, provides, upon exposure to the curing energy, a liquid or liquid-like material L, as described herein.

In some of any of the embodiments of the present invention, once all of the dispensed layers are exposed to a curing condition (e.g., a curing energy), removing Material L, which is a liquid or liquid-like material as defined herein, can be effected if it is desired to have an object featuring a hollow structure.

Removal of the liquid or liquid-like material L **204** can be effected by various methods, depending on the shape and function of the object, the shape and size of the hollow structure and/or the properties of Material L (the second material).

In some embodiments, removing Material L **204** is by applying a condition at which Material L is flowable.

When the hollow structure has a large volume (e.g., of a few centimeters) and its opening(s) is/are large (e.g., of at least 1 centimeter), and Material L is flowable at ambient conditions, removing Material L **204** can be effected by simply discarding it through the openings.

Alternatively, and particularly in cases where the hollow structure feature small opening(s), removing the liquid or liquid-like Material L **204** can be effected by applying a low positive pressure, preferably a constant pressure.

The pressure can be, for example, an air pressure, or a liquid pressure, for example, in a form of a jet of an aqueous solution (e.g., water).

The pressure is preferably no more than 1 bar, or no more than 0.5, or no more than 0.3 bar, and can be, for example, 0.1 bar, 0.2 bar, or 0.3 bar.

Further alternatively, and optionally in addition to the above, and particularly in cases where Material L is not sufficiently flowable at ambient conditions, removing the liquid or liquid-like material L **204** is effected by applying a condition that renders the Material L flowable. Such conditions include, for example, application of shear forces (for example, when the second material is a shear-thinning material), and/or application of a heat energy (for example, when Material L is a thermo-thinning material).

In some embodiments, the uncured building material comprises a third building material formulation, which forms, upon exposure to a curing condition, a third material, which is a hardened support material S.

In some of these embodiments, in at least a few of the layers, the dispensing is such that that while the first hardened modeling material M forms at least one hollow structure, Material S is at least partially enclosed within the hollow structure and Material L is at least partially enclosed within the hardened support material S, as described herein for some embodiments of a core region and an intermediate shell.

This allows removing Material L first, as described herein, and subsequently, removing the hardened support material(s) (third hardened material, Material S), by exposing the object to conditions at which Material S is removable, for example, mechanical and/or chemical means such as commonly used in additive manufacturing for removing cured support materials (e.g., gel or gel-like support materials), and as would be recognized by any person skilled in the art.

In some of these embodiments, the dispensing is such that Material M (hardened modeling material) forms a hollow structure as described herein, with an internal diameter of, for example, from about 1 to about 100 mm, and the support material S forms an intermediate shell, optionally and preferably a layered intermediate shell, within the hollow structure and having a thickness of from about 0.1 to about 10 mm, and the rest of the hollow structure is filled with Material L to form a core enclosed by the intermediate shell.

In other of these embodiments, the dispensing is such that Material M (hardened modeling material) forms a hollow structure as described herein, and Material S forms a core, and an intermediate liquid or liquid-like shell made of Material M is optionally and preferably formed between the core and the hollow structure by dispensing the second building material formulation L.

A representative example of a portion of an object **112** having a hollow structure **72** at least partially enclosing an intermediate shell **74** which encloses a core **76** is illustrated in FIG. 4H. When intermediate shell **74** is liquid or liquid-like, made of Material L, core **76** is preferably a layered core (e.g. a gel or gel-like core, made of Material S), and when core **76** is liquid or liquid-like, made of Material L, intermediate shell **74** is preferably a layered shell (*e.g.*, gel or gel-like core, made of Material S). In various exemplary embodiments of the invention both the core and the intermediate layer are sacrificial, that is, removable under conditions which essentially do not affect the structure formed of the (first) modeling material M. A representative example of a procedure suitable for manipulating the computer object data to allow fabricating an object, such as, but not limited to, a tubular structure, having a shell, a sacrificial intermediate shell and a sacrificial core is provided in the Examples section below.

FIG. 5 illustrates a single layer **80** which can be formed during the fabrication process according to some embodiments of the present invention. Layer **80** comprises a core region **82**, an envelope region **84** which surrounds core region **82**. Thus, region **82** contributes to the core of the structure and region **84** contributes to the shell of the structure, since when several layers similar to layer **80** are deposited one over the other, the core regions form a core having a thickness larger than a thickness of layer **80** and the envelope regions form a layered shell.

Optionally and preferably, there is also an intermediate envelope region **86** between core region **82** and an envelope region **84**. Thus, region **86** to the intermediate shell of the structure, since when several layers similar to layer **80** are deposited one over the other, the envelope regions **86** form an intermediate shell having a thickness larger than a thickness of layer.

The intermediate envelope region **86** can serve as a liquid or liquid-like buffer between the core region **82** and the outer envelope region **84**. In these embodiments the intermediate envelope region **86** is preferably formed by dispensing formulation L, and each of core region **82** and outer envelope region **84** is preferably formed by dispensing a curable material formulation or a combination of two or more curable material formulations (for example, to form a DM). Any of the curable material formulations used for forming core region **82** and outer envelope region **84** in these embodiments can be either a curable support material (third) formulation S or a modeling material (first) formulation M.

In some embodiments of the present invention the intermediate envelope regions are hardened so that the intermediate shell is a layered shell. In these embodiments, the intermediate envelope region **86** is preferably formed by dispensing a curable support material (third) formulation S or a combination of two or more curable support material (third) formulations S (for example, to form a DM), or a combination of at least one curable support material (third) formulation S and at least one curable modeling material (first) formulation M (for example, to form a DM).

As illustrated in FIG. 5, the widths of the envelope regions **84** and **86** is not necessarily uniform over the periphery of the layer. The widths of the envelope region can vary both along the periphery of the layer and across the build direction.

In some of these embodiments, the dispensing is such that small hollow structures, featuring at least one dimension at the millimeter scale, as defined herein, are filled with a (second) building material formulation, liquid formulation L, that provides a liquid material, and larger hollow structures are filled with a formulation that provides a liquid-like material.

In some embodiments, the hardened support material S (third material) is water-soluble or water-miscible, as defined herein, and is removed by contacting an aqueous solution at which it is dissolvable or dispersible (e.g., a cleaning solution; an aqueous solution that comprises an alkaline substance, at an amount of about 1 % to about 3 % by weight of the solution).

In some embodiments, the hardened support material S (third material) is removed upon applying physical means such as an air or liquid jet at a pressure higher than 0.5 bar or higher than 1 bar.

It is noted that when Material L is removed upon applying a certain a positive pressure (e.g., lower than 1 bar or lower than 0.5 bar), the hardened support material S is removable upon applying a higher pressure (e.g., higher than 0.5 bar or higher than 1 bar, respectively).

The present inventors devised a technique for fabricating a solid tubular structure filled with liquid. The inventors found that an intermediate shell lining the internal wall of the tubular structure significantly reduces the likelihood of inward collapse. Thus, according to some embodiments of the present invention a fabricated tubular structure includes a liquid or liquid-like core region, surrounded by an intermediate shell made by dispensing a curable support material formulation (a shell made of a hardened (third) support material S), and an outer shell made by dispensing a first modeling material formulation M, to form a material M, or by dispensing two or more modeling material formulations M, to form a material M which is a digital material. The intermediate shell serves as a buffer layer between the core and the outer shell, and optionally and preferably prevents contact between the liquid or liquid-like core (made of Material L) and the solid shell.

Once the tubular structure is fabricated, the liquid or liquid-like core can be removed, for example, by application of pressure inside the tube, as described herein. Following the removal of the core, the intermediate shell typically remains in the tube. The intermediate shell can then be removed by circulating in the tubular structure a solution capable of dissolving the intermediate shell. For example, when the hardened support material is dissolvable by a 1% NaOH solution, the intermediate shell can be removed by circulating such a solution in the tubular structure.

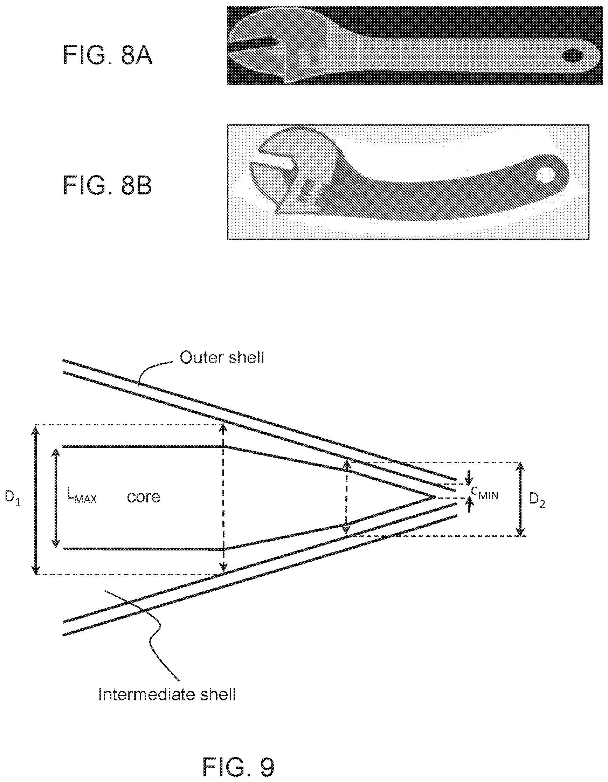

The dimensions of the core and intermediate shell are optionally and preferably selected based on the desired inner diameter of the tubular structure. FIG. 9 illustrates parameters that can be used according to some embodiments of the present invention for selecting the dimensions of the core and intermediate shell. Shown are a maximal core diameter parameter L_{MAX}, a minimal thickness of the intermediate layer parameter c_{MIN}, and two thresholds diameter parameters D₁ and D₂. For example, D₁ can be calculated as a linear combination of L_{MAX} and c_{MIN}, *e.g*., D₁ = L_{MAX}+2*K₁*_{CMIN}, where K₁ is larger than 1 and typically from about 2 to about 5. D₂ can be calculated as a linear function of Lmax, *e.g*., D₂ = L_{MAX}*K₂ where K₂ is typically from 0.8 to about 1.2. In some embodiments of the present invention the ratio between the coefficients K₂ and K₁ is less than 4c_{MIN} or less than 3c_{MIN} or less than 2c_{MIN}.

L_{MAX} is typically, but not necessarily, less than 10 mm, and c_{MIN} is typically, but not necessarily less than 20 mm and more than 0.4 mm, or less than 2 mm and more than 0.4 mm. The thresholds D₁ and D₂ are optionally and preferably calculated based on L_{MAX} and c_{MIN} and the vessel geometry.

In some embodiments of the present invention in regions of the tubular structure in which the inner diameter of the outer shell is larger than or equals to the first threshold diameter D₁, the diameter of the core preferably has a generally constant diameter, for example, the same as the L_{MAX} parameter. In some embodiments of the present invention in regions of the tubular structure in which the inner diameter of the outer shell is less than or equals to the second threshold diameter D₂, the thickness of the intermediate shell (along a radial direction perpendicular to the longitudinal axis of the tube) is preferably generally constant diameter, for example, the same as the c_{MIN} parameter. In some embodiments of the present invention, in regions of the tubular structure in which the inner diameter of the outer shell is between the second threshold diameter D₂ and the first threshold diameter D₁, the diameter of the core is less than L_{MAX} and the thickness of the intermediate shell is more than c_{MIN}. In these regions the diameter of the core and the thickness of the intermediate shell are not necessarily constant along the tubular structure. For example, when the tubular structure includes regions in which the inner diameter of the outer shell varies, the diameter of the core and the thickness of the intermediate shell can vary reciprocally so that an increment in the diameter of the core is accompanied by a decrement of the thickness of the intermediate shell. The variation of the diameter of the core and the thickness of the intermediate shell is optionally and preferably monotonic, *e.g*., a linear variation.

### The building material formulations:

According to the present embodiments, the uncured building material comprises at least two types of building material formulations: one or more modeling material formulations (herein collectively referred to as a first building material formulation, or, interchangeably as one or more of formulation(s) M, or modeling material formulation(s) M), and a formulation which provides a liquid or liquid-like (second) material as described herein (herein collectively referred to as a second building material formulation, or, interchangeably, as formulation L, or as liquid formulation L, or simply as a liquid formulation or a liquid building material formulation).

The one or more modeling material formulations M comprise one or more curable materials, optionally in combination with one or more non-curable materials and further optionally in combination with an initiator, surface active agents, impact modifiers, coloring agents, thickening agents, and the like.

Preferably the one or more modeling material formulations comprise curable materials in an amount of at least 50 % by weight of the total weight of the modeling material formulations.

In some embodiments, the curable materials are UV-curable materials and the formulations further comprise one or more photoinitiators.

In some embodiments, the UV-curable materials are acrylate or methacrylates, and can include monomeric, oligomeric or polymeric acrylates and/or methacrylates.

The modeling material formulations M are such that upon exposure to a curing condition (e.g., UV irradiation), the curable material polymerizes, providing a hardened (cured; solidified) material, or a plurality of hardened materials (e.g., digital materials), which are collectively referred to herein as a first material.

The components of the modeling material formulations and the dispensing thereof are dictated by the desired properties of the final object.

Any modeling material formulation usable in additive manufacturing (e.g., in three-dimensional inkjet printing) as described herein in any of the respective embodiments is usable in the context of the present embodiments. Exemplary formulations are those known in the art as usable in PolyJet^{™} methodologies.

The second building material formulation, formulation L, can comprise one or more formulations, each comprising one or more non-curable materials in an amount of at least 50 %, preferably at least 60 %, or at least 70 %, or at least 80 %, or at least 90 %, or 100%, by weight, of the total weight of the second building material formulation.

Formulation L is such that provides a liquid or liquid-like material, as defined herein, collectively referred to herein interchangeably as a second material, a liquid material L or as Material L.

Because formulation L is comprised mainly of non-curable materials, when it is exposed to a curing condition, it undergoes minimal or essentially null hardening (e.g., no more than 20 %, or no more than 10 % by weight, of the material, hardens, e.g., polymerizes), thus maintaining essentially the same fluidity, or viscosity, as that of the dispensed formulation, such that the (second) material obtained upon exposure to a curing condition is a liquid or liquid-like material, as defined herein.

In some of any of the embodiments described herein, one or more formulations in the second material building formulation are such that upon exposure to a curing condition provide a liquid or liquid-like material that features a viscosity of no more than 10 Pa s (10,000 centipoises), or of no more than 1 Pa s (1,000 centipoises), or of no more than 0.1 Pa s (100 centipoises), for example, of 0.01-0.05 Pa s (10-50 centipoises).

In some of any of the embodiments described herein, the (second) liquid building material formulation L feature(s) a viscosity which is different from the viscosity of Material L by no more than 20 %, preferably by no more than 10 %. Thus, a change in the viscosity or the fluidity of formulation L upon exposure to a curing condition is minimal (e.g., no more than 10 %) or even null.

In some of any of the embodiments described herein for the second building material formulation L, the non-curable material is or comprises a polymeric material and in some embodiments the polymeric material is or comprises one or more amphiphilic and/or hydrophilic polymer(s).

In some of any of the embodiments described herein for the second building material formulation L, the non-curable material is or comprises a poly(alkylene glycol), as defined herein. The non-curable material can be a poly(alkylene glycol) *per se* or can comprise one or more poly(alkylene glycol) chains or blocks.

In some of any of the embodiments described herein, the non-curable material comprises a poly(alkylene glycol) having a molecular weight of less than 2000 grams/mol, and in some embodiments, the poly(alkylene glycol) is a polymer having a molecular weight of from 200 to 2000 or from 200 to 1000 or from 200 to 800 or from 200 to 600, or of 400, grams/mol.

In some of any of the embodiments described herein, the poly(alkylene glycol) is a poly(ethylene glycol). Alternatively, it is a polypropylene glycol).

Other non-curable materials suitable for inclusion in formulation L, instead of or in addition to a poly(alkylene glycol) as described herein, include, but are not limited to, block co-polymers comprising one or more poly(alkylene glycol) blocks, for example, block-co-polymers of poly(ethylene glycol) and polypropylene glycol), such as those marketed under the trade name Pluronic^{®}, polyols such as diols (e.g., propanediol), glycerols, and higher polyols.

Additional non-curable materials suitable for inclusion in formulation L include one or more oils, such as, but not limited to, one or more of a vegetable oil, a synthetic oil, a hydrocarbon oil, a silicone oil, a fatty acid, a mineral oil, and a paraffin oil. In some embodiments, the oil features a viscosity or any of the properties described herein as characterizing Material L.

In some of any of the embodiments described herein, the liquid formulation L further comprises water.

In some of any of the embodiments described herein, the liquid formulation L comprises a curable material, optionally in combination with a non-curable material, but is devoid of a catalyst or initiator that prompts the curing (e.g., polymerization) of the curable material. In such embodiments, the hardening of the liquid formulation L upon exposure to a curing condition is minimized or nullified, and the formed Material L features fluidity properties that are similar to that of formulation L, as described herein.

In some of any of the embodiments where a (second) liquid material L features a viscosity lower than 10 Pa s (10,000 centipoises), as described herein and/or a viscosity similar to that of the viscosity of the liquid formulation L, the object comprises a hollow structure having at least one dimension at the millimeter scale, as described herein, in at least one portion of the hollow structure.

In some of any of the embodiments described herein, Material L features a shear modulus of less than 20 kPa, or of less than 15 kPa, or of less than 10 kPa, or of less than 5 kPa, thus featuring a consistency of a very soft and flowable gel. Formulations providing such a material are also referred to herein as formulations L that provide a liquid-like material L.

In some of these embodiments, the formulation L comprises a curable material, optionally and preferably in combination with a non-curable material, as described herein in any of the respective embodiments.

According to some of these embodiments, the curable material is or comprises a mono-functional curable material, as defined herein.

Preferably, the curable material is in an amount of no more than 50 %, preferably no more than 40 %, or no more than 30 %, or no more than 20 %, and even of 15 %, 10 %, by weight, or less, of the total weight of formulation L. In some embodiments, an amount of the curable material in formulation L ranges from 10 to 25 weight percents.

According to some of any of the embodiments described herein, the curable material is amphiphilic or hydrophilic.

According to some of any of the embodiments described herein, the curable material is such that when hardened, it provides a water-soluble or water-miscible material, as defined herein.

According to some of any of the embodiments described herein, the curable material is such that when hardened, it provides a shear-thinning and/or thixotropic and/or thermal-thinning material, as defined herein.

Exemplary liquid formulations L include formulations comprising a poly(alkylene glycol) as described herein, in an amount of at least 50 % and up to 100%, by weight, optionally in combination with one or more curable materials as described herein, in a total amount of from 10 to 25 % by weight, and further optionally in combination with additional components as described herein.

Exemplary liquid formulations L include formulations comprising one or more oils, as described herein, in an amount of at least 50 % and up to 100%, by weight, optionally in combination with one or more curable materials as described herein, in a total amount of from 10 to 25 % by weight, and further optionally in combination with additional components as described herein.

Generally, in some embodiments, the liquid formulation L is selected such that Material L (the second material) is water-soluble or water-miscible, as defined herein.

In some embodiments, the liquid material is water-miscible and a liquid-like material is water-soluble.

Generally, in some embodiments, the second building material formulation L is selected such that Material L (the second material is a shear-thinning material, as defined herein.

Generally, in some embodiments, the second building material formulation is selected such that Material L (the second material is a thixotropic material, as defined herein.

Generally, in some embodiments, the second building material formulation is selected such that Material L (the second material is a thermal-thinning material, as defined herein.

In some of any of the embodiments described herein, the uncured building material comprises two or more liquid formulations L, as described herein, for example, one or more formulations which provide a liquid material L, featuring a viscosity which is substantially the same as that of the uncured formulation, as described herein, and comprising a non-curable material, and one or more formulations which provide a liquid-like material L, featuring a shear stress of no more than 20 kPa, as described herein, and comprising curable and non-curable materials, as described herein.

In some of these embodiments, the dispensing is such that small hollow structures, featuring at least one dimension at the millimeter scale, as defined herein, are filled with a formulation L that provides a liquid material L, and larger hollow structures are filled with a formulation L that provides a liquid-like material L.

In some of any of the embodiments described herein, the uncured building material comprises, in addition to the modeling material formulation(s) M and the liquid formulation(s) L as described herein, a third type of one or more building material formulation(s), interchangeably referred to herein also as formulation(s) S, or as support formulation(s) or as support material formulation(s), which are curable formulations that provide, upon exposure to a curing condition, a hardened support (third) material, which is also referred to herein interchangeably as Material(s) S.

Any formulation that provides a hardened support material as known in the art is usable in the context of these embodiments, typically formulations that provide, when hardened, a material S (a third material) that is water-soluble or water-miscible or water-breakable, and/or which is removal by physical means (e.g., water jet) or chemical means (e.g., a cleaning solution) as known in the art.

According to some embodiments, the (third) building material formulation S is such that provides a gel or gel-like hardened support material (as the third material; Material S).

According to embodiments, the formulation S provides a hardened (third) support material, material S, featuring at least one of:
a Shear loss modulus G" to Shear storage modulus G' ratio (tan delta) that is lower than 1; and/or
flowability and/or breakability when subjected to a liquid pressure higher than 0.5 bar or higher than 1 bar; and/or
water-solubility or water-immiscibility, as defined herein.

Exemplary support material formulations S include one or more curable materials, preferably hydrophilic or amphiphilic curable materials, further preferably mono-functional curable materials; one or more non-curable materials, preferably hydrophilic or amphiphilic polymeric materials, and one or more initiators, for promoting the hardening of the curable materials.

As used herein throughout, the term "hydrophilic" describes a physical property of a compound or a portion of a compound (e.g., a chemical group in a compound) which accounts for transient formation of bond(s) with water molecules, typically through hydrogen bonding.

A hydrophilic compound or portion of a compound (e.g., a chemical group in a compound) is one that is typically charge-polarized and capable of hydrogen bonding.

Hydrophilic compounds or groups typically include one or more electron-donating heteroatoms which form strong hydrogen bonds with water molecules. Such heteroatoms include, but are not limited to, oxygen and nitrogen. Preferably, a ratio of the number of carbon atoms to a number of heteroatoms in a hydrophilic compounds or groups is 10:1 or lower, and can be, for example, 8:1, more preferably 7:1, 6:1, 5:1 or 4:1, or lower. It is to be noted that hydrophilicity of compounds and groups may result also from a ratio between hydrophobic and hydrophilic moieties in the compound or chemical group, and does not depend solely on the above-indicated ratio.

Hydrophilic compounds dissolve more readily in water than in oil or other hydrophobic solvents. Hydrophilic compounds can be determined by, for example, as having LogP lower than 0.5, when LogP is determined in octanol and water phases.

A hydrophilic compound can have one or more hydrophilic groups that render the compound hydrophilic. Such groups are typically polar groups, comprising one or more electron-donating heteroatoms such as oxygen and nitrogen. The hydrophilic group can be, for example, one or more substituent(s) of a monomeric mono-functional curable material or two or more substituents or interrupting groups of an oligomeric mono-functional curable material. The hydrophilic group can be, for example, one or more substituent(s) of a monomeric multi-functional curable material or one or more substituents or interrupting groups of a linking moiety of a monomeric multi-functional curable moiety. The hydrophilic group can be, for example, two or more substituents or interrupting groups of an oligomeric linking moiety in oligomeric multi-functional curable material.

Exemplary hydrophilic groups include, but are not limited to, an electron-donating heteroatom, a carboxylate, a thiocarboxylate, oxo (=O), a linear amide, hydroxy, a (C1-4)alkoxy, an (C1-4)alcohol, a heteroalicyclic (e.g., having a ratio of carbon atoms to heteroatoms as defined herein), a cyclic carboxylate such as lactone, a cyclic amide such as lactam, a carbamate, a thiocarbamate, a cyanurate, an isocyanurate, a thiocyanurate, urea, thiourea, an alkylene glycol (e.g., ethylene glycol or propylene glycol), and a hydrophilic polymeric or oligomeric moiety, as these terms are defined hereinunder, and any combinations thereof (e.g., a hydrophilic group that comprises two or more of the indicated hydrophilic groups).

In some embodiments, the hydrophilic group is, or comprises, an electron donating heteroatom, a carboxylate, a heteroalicyclic, an alkylene glycol and/or a hydrophilic oligomeric moiety.

A hydrophilic polymeric or oligomeric moiety, as used herein, comprises a polymeric chain which comprises hydrophilic groups as defined herein. The hydrophilic groups can be heteroatoms within the backbone chain of the polymeric moiety, as, for example, in poly(alkylene glycols) or hydrophilic pendant groups. A polymeric or oligomeric moiety, according to some embodiments of the present invention, preferably has from 10 to 40 repeating backbone units, more preferably from 10 to 20 repeating backbone units.

As used herein throughout, the term "amphiphilic" describes property of a compound that combines both hydrophilicity, as described herein for hydrophilic compounds, and hydrophobicity or lipophilicity, with the latter referring to a physical property of a compound or a portion of a compound (e.g., a chemical group in a compound) which accounts for lack of transient formation of bond(s) with water molecules, and thus for water-immiscibility, and is miscible or dissolvable in hydrocarbons.

Amphiphilic materials typically comprise both hydrophilic groups as defined herein and hydrophobic groups such as hydrocarbons, as defined herein, and are substantially soluble in both water and a water-immiscible solvent.

Exemplary support material formulations usable as a third building material formulation include, but are not limited, those marketed as SUP705, SUP706 and SUP707. The hardened (third) materials S obtained upon exposing such formulations S to a curing condition (typically UV radiation) can be removed using cleaning solutions and/or physical means as recommended for these formulations.

According to the present embodiments, the second building material formulation, Formulation L, optionally together with a third building material formulation, Formulation S, as described herein, are usable as a formulation or formulation system, respectively, for providing a support material, a sacrificial material or a sacrificial structure or object, in additive manufacturing.

According to an aspect of some embodiments of the present invention there is provided a formulation system usable for forming a support material, a sacrificial material, a sacrificial structure or a sacrificial object, in additive manufacturing of a three-dimension object, the formulation system comprising:
a formulation L, as described herein, which provides, upon exposure to a curing condition, a liquid, or liquid-like material, Material L, featuring at least one of:
Shear loss modulus to Shear storage modulus ratio (tan delta) greater than 1;
Shear-thinning and/or thixotropic behavior;
Thermal-thinning behavior;
a Shear storage modulus lower than 20 kPa; and
flowability when subjected to a positive pressure lower than 1 bar or lower than 0.5 bar, and
a curable formulation S, which provides, upon exposure to a curing condition, a gel-like material, Material S, featuring at least one of:
   Shear loss modulus G" to Shear storage modulus G' ratio that is lower than 1;
   flowability and/or breakability when subjected to a liquid pressure higher than 0.5 bar, or higher than 1 bar; and
   water-solubility or water-immiscibility, as defined herein.

Formulation L of the formulation system is as described herein for a second building material formulation, in any of the respective embodiments and any combination thereof.

The formulation S in the formulation system is as described herein for a third material formulation, in any of the respective embodiments and any combination thereof.

Such a formulation system is usable, for example, in additive manufacturing by forming altogether, upon exposure to a curing condition, a sacrificial material or structure that is sequentially removable, such that a material L, provided by formulation L, upon exposure to a curing condition, which is as described herein for the liquid or liquid-like material L, is first removed and subsequently, the material S, provided by formulation S upon exposure to a curing condition, which as described herein for the hardened support material, is removed.

According to an aspect of some embodiments of the present invention there is provided a formulation L which is usable for providing a liquid-like material L upon exposure to a suitable curing condition, and can be used in additive manufacturing of 3D objects where inclusion of a liquid-like material is beneficial. The formulation is usable as a support material formulation, or as a part of a support material formulation system as described herein, when hollowed objects are formed, and/or as a modeling material formulation, for providing 3D objects which include a fluid material in a portion thereof (e.g., in one or more cavity/ies within the object).

Such a formulation corresponds to a second building material formulation as described herein in any of the respective embodiments, in the context of formulations that provide a liquid or liquid-like material L.

In some embodiments, such a formulation L comprises:
a non-curable material featuring a viscosity of no more than 10 Pa s (10,000 centipoises), in an amount of at least 50 % by weight, as described herein; and
a curable material featuring at least one of mono-functionality, hydrophilicity, shear-thinning, thixotropy, thermal-thinning, water-solubility or water-immiscibility, in an amount lower than 50 % by weight.

According to some embodiments, any of the formulations described herein can further comprise one or more additional components. Such components include, for example, stabilizers, surfactants, polymerization inhibitors, coloring agents (e.g., dyes, pigments), shear-thinning agents, thixotropic agents, and the like. Such components are typically included in an amount of from 0.1 to 2 %, or from 0.1 to 1 %, by weight, of the total weight of a formulation containing same.

Some formulations that comprise curable materials can further comprise initiators for promoting the hardening (curing, e.g., polymerization) of the curable materials, in accordance with the present embodiments as described herein. In the case of photopolymerizable (e.g., UV-curable) materials, the initiator is a photoinitiator (e.g., a material or combination of materials that generates a free radical when exposed to radiation).

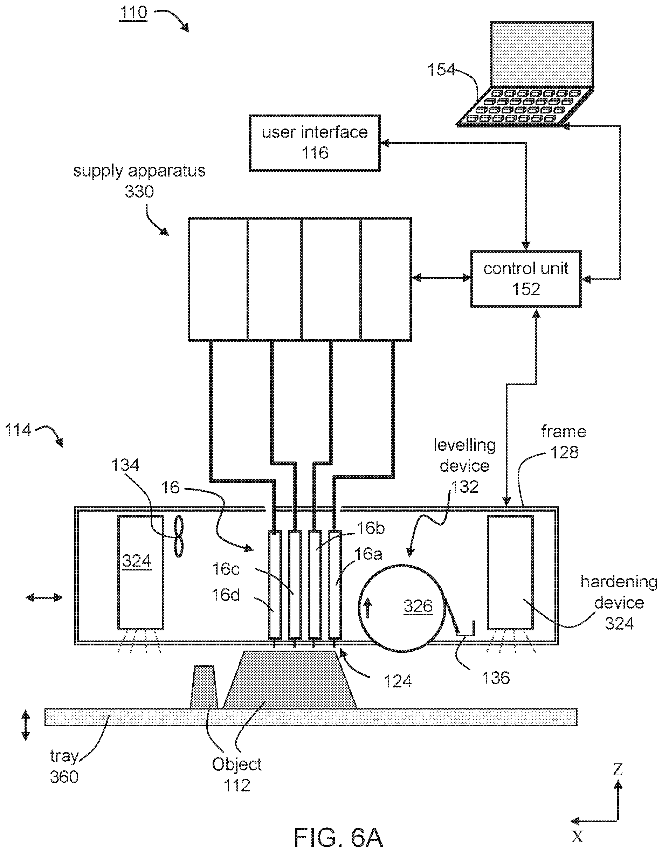

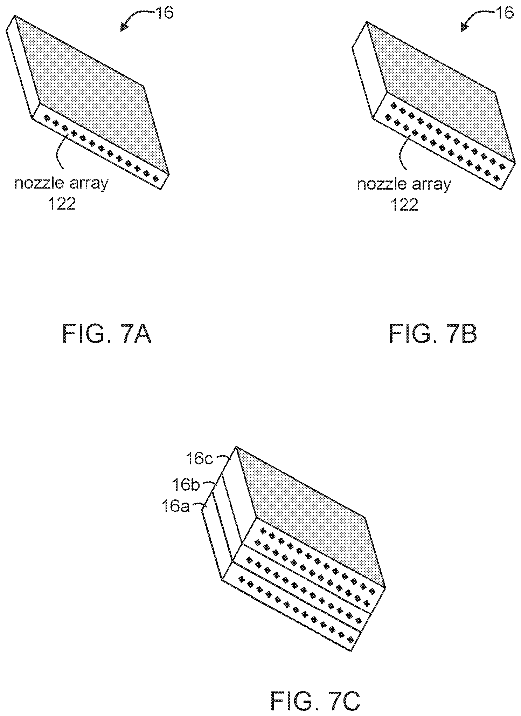

Initiators are typically included in an amount of from 1 to 5, or from 1 to 3, % by weight of the total weight of the formulation or formulation system containing same. ***The system:***
A representative and non-limiting example of a system **110** suitable for AM of an object **112** according to some embodiments of the present invention is illustrated in FIG. 6A. System **110** comprises an additive manufacturing apparatus **114** having a dispensing unit **16** which comprises a plurality of dispensing heads. Each head preferably comprises an array of one or more nozzles **122**, as illustrated in FIGs. 7A-C described below, through which a liquid (uncured) building material formulation **124** is dispensed.

Preferably, but not obligatorily, apparatus **114** is a three-dimensional printing apparatus, in which case the dispensing heads are printing heads, and the building material formulation is dispensed via inkjet technology. This need not necessarily be the case, since, for some applications, it may not be necessary for the additive manufacturing apparatus to employ three-dimensional printing techniques. Representative examples of additive manufacturing apparatus contemplated according to various exemplary embodiments of the present invention include, without limitation, fused deposition modeling apparatus and fused material formulation deposition apparatus.

Each dispensing head is optionally and preferably fed via a building material formulation reservoir which may optionally include a temperature control unit (*e.g.*, a temperature sensor and/or a heating device), and a material formulation level sensor. To dispense the building material formulation, a voltage signal is applied to the dispensing heads to selectively deposit droplets of material formulation via the dispensing head nozzles, for example, as in piezoelectric inkjet printing technology. The dispensing rate of each head depends on the number of nozzles, the type of nozzles and the applied voltage signal rate (frequency). Such dispensing heads are known to those skilled in the art of solid freeform fabrication.

Preferably, but not obligatorily, the overall number of dispensing nozzles or nozzle arrays is selected such that half of the dispensing nozzles are designated to dispense support material formulation and half of the dispensing nozzles are designated to dispense modeling material formulation, i.e. the number of nozzles jetting modeling material formulations is the same as the number of nozzles jetting support material formulation. In the representative example of FIG. 6A, four dispensing heads **16a, 16b, 16c** and **16d** are illustrated. Each of heads **16a, 16b, 16c** and **16d** has a nozzle array. In this Example, heads **16a** and **16b** can be designated for modeling material formulation/s and heads **16c** and **16d** can be designated for support material formulation. Thus, head **16a** can dispense a first modeling material formulation, head **16b** can dispense a second modeling material formulation and heads **16c** and **16d** can both dispense support material formulation. Alternatively, head **16b** can dispense a support material formulation. In an alternative embodiment, heads **16c** and **16d**, for example, may be combined in a single head having two nozzle arrays for depositing support material formulation.

Yet it is to be understood that it is not intended to limit the scope of the present invention and that the number of modeling material formulation depositing heads (modeling heads) and the number of support material formulation depositing heads (support heads) may differ. Generally, the number of modeling heads, the number of support heads and the number of nozzles in each respective head or head array are selected such as to provide a predetermined ratio, *a*, between the maximal dispensing rate of the support material formulation and the maximal dispensing rate of modeling material formulation. The value of the predetermined ratio, *a*, is preferably selected to ensure that in each formed layer, the height of modeling material formulation equals the height of support material formulation. Typical values for *a* are from about 0.6 to about 1.5.

For example, for *a* = 1, the overall dispensing rate of support material formulation is generally the same as the overall dispensing rate of the modeling material formulation when all modeling heads and support heads operate.

In a preferred embodiment, there are H_{M} modeling heads each having k arrays of p nozzles, and Hs support heads each having u arrays of q nozzles such that H_{M}×k×p = H_{S}×u×q. Each of the H_{M}×k modeling arrays and H_{S}×u support arrays can be manufactured as a separate physical unit, which can be assembled and disassembled from the group of arrays. In this embodiment, each such array optionally and preferably comprises a temperature control unit and a material formulation level sensor of its own, and receives an individually controlled voltage for its operation.

Apparatus **114** can further comprise a solidifying device **324** which can include any device configured to emit light, heat or the like that may cause the deposited material formulation to harden. For example, solidifying device **324** can comprise one or more radiation sources, which can be, for example, an ultraviolet or visible or infrared lamp, or other sources of electromagnetic radiation, or electron beam source, depending on the modeling material formulation being used. In some embodiments of the present invention, solidifying device **324** serves for curing or solidifying the modeling material formulation.

In some embodiments of the present invention apparatus **114** comprises cooling system **134** such as one or more fans or the like.

The dispensing head and radiation source are preferably mounted in a frame or block **128** which is preferably operative to reciprocally move over a tray **360**, which serves as the working surface. In some embodiments of the present invention the radiation sources are mounted in the block such that they follow in the wake of the dispensing heads to at least partially cure or solidify the material formulations just dispensed by the dispensing heads. Tray **360** is positioned horizontally. According to the common conventions an X-Y-Z Cartesian coordinate system is selected such that the X-Y plane is parallel to tray **360**. Tray **360** is preferably configured to move vertically (along the Z direction), typically downward. In various exemplary embodiments of the invention, apparatus **114** further comprises one or more leveling devices **132**, e.g. a roller **326**. Leveling device **326** serves to straighten, level and/or establish a thickness of the newly formed layer prior to the formation of the successive layer thereon. Leveling device **326** preferably comprises a waste collection device **136** for collecting the excess material formulation generated during leveling. Waste collection device **136** may comprise any mechanism that delivers the material formulation to a waste tank or waste cartridge.

In use, the dispensing heads of unit **16** move in a scanning direction, which is referred to herein as the X direction, and selectively dispense building material formulation in a predetermined configuration in the course of their passage over tray **360**. The building material formulation typically comprises one or more types of support material formulation and one or more types of modeling material formulation. The passage of the dispensing heads of unit **16** is followed by the curing of the modeling material formulation(s) by radiation source **126**. In the reverse passage of the heads, back to their starting point for the layer just deposited, an additional dispensing of building material formulation may be carried out, according to predetermined configuration. In the forward and/or reverse passages of the dispensing heads, the layer thus formed may be straightened by leveling device **326**, which preferably follows the path of the dispensing heads in their forward and/or reverse movement. Once the dispensing heads return to their starting point along the X direction, they may move to another position along an indexing direction, referred to herein as the Y direction, and continue to build the same layer by reciprocal movement along the X direction. Alternately, the dispensing heads may move in the Y direction between forward and reverse movements or after more than one forward-reverse movement. The series of scans performed by the dispensing heads to complete a single layer is referred to herein as a single scan cycle.

Once the layer is completed, tray **360** is lowered in the Z direction to a predetermined Z level, according to the desired thickness of the layer subsequently to be printed. The procedure is repeated to form three-dimensional object **112** in a layerwise manner.

In another embodiment, tray **360** may be displaced in the Z direction between forward and reverse passages of the dispensing head of unit **16**, within the layer. Such Z displacement is carried out in order to cause contact of the leveling device with the surface in one direction and prevent contact in the other direction.

System **110** optionally and preferably comprises a building material formulation supply system **330** which comprises the building material formulation containers or cartridges and supplies a plurality of building material formulations to fabrication apparatus **114**.

A control unit **340** controls fabrication apparatus **114** and optionally and preferably also supply system **330**. Control unit **340** typically includes an electronic circuit configured to perform the controlling operations. Control unit **340** preferably communicates with a data processor **154** which transmits digital data pertaining to fabrication instructions based on computer object data, e.g., a CAD configuration represented on a computer readable medium in a form of a Standard Tessellation Language (STL) format or the like. Typically, control unit **340** controls the voltage applied to each dispensing head or nozzle array and the temperature of the building material formulation in the respective printing head.

Once the manufacturing data is loaded to control unit **340** it can operate without user intervention. In some embodiments, control unit **340** receives additional input from the operator, e.g., using data processor **154** or using a user interface **116** communicating with unit **340**. User interface **116** can be of any type known in the art, such as, but not limited to, a keyboard, a touch screen and the like. For example, control unit **340** can receive, as additional input, one or more building material formulation types and/or attributes, such as, but not limited to, color, characteristic distortion and/or transition temperature, viscosity, electrical property, magnetic property. Other attributes and groups of attributes are also contemplated.

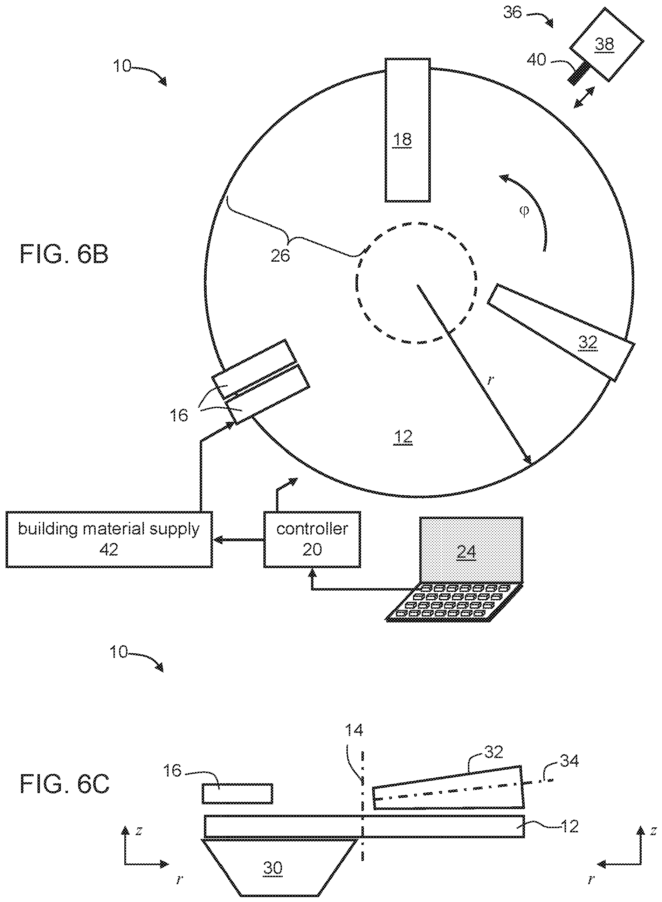

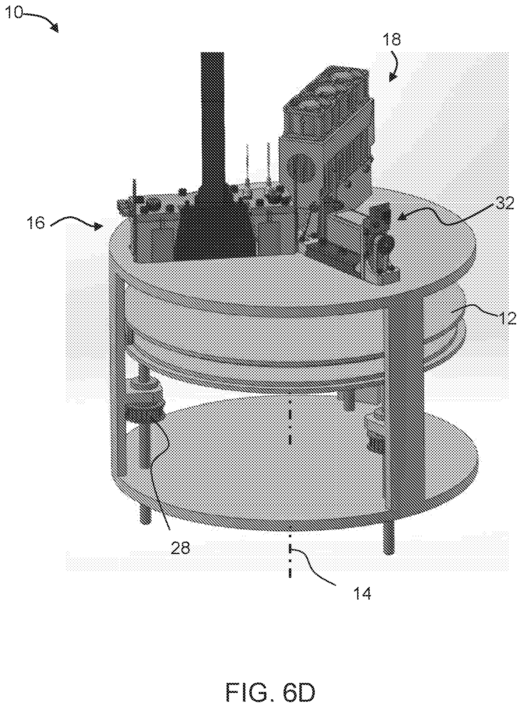

Another representative and non-limiting example of a system **10** suitable for AM of an object according to some embodiments of the present invention is illustrated in FIGs. 6B-D. FIGs. 6B-D illustrate a top view (FIG. 6B), a side view (FIG. 6C) and an isometric view (FIG. 6D) of system **10**.

In the present embodiments, system **10** comprises a tray **12** and a plurality of inkjet printing heads **16**, each having a plurality of separated nozzles. Tray **12** can have a shape of a disk or it can be annular. Non-round shapes are also contemplated, provided they can be rotated about a vertical axis.

Tray **12** and heads **16** are optionally and preferably mounted such as to allow a relative rotary motion between tray **12** and heads **16.** This can be achieved by (i) configuring tray **12** to rotate about a vertical axis **14** relative to heads **16,** (ii) configuring heads **16** to rotate about vertical axis **14** relative to tray **12,** or (iii) configuring both tray **12** and heads **16** to rotate about vertical axis **14** but at different rotation velocities (*e.g*., rotation at opposite direction). While the embodiments below are described with a particular emphasis to configuration (i) wherein the tray is a rotary tray that is configured to rotate about vertical axis **14** relative to heads **16,** it is to be understood that the present application contemplates also configurations (ii) and (iii). Any one of the embodiments described herein can be adjusted to be applicable to any of configurations (ii) and (iii), and one of ordinary skills in the art, provided with the details described herein, would know how to make such adjustment.

In the following description, a direction parallel to tray **12** and pointing outwardly from axis **14** is referred to as the radial direction *r,* a direction parallel to tray **12** and perpendicular to the radial direction *r* is referred to herein as the azimuthal direction ϕ, and a direction perpendicular to tray **12** is referred to herein is the vertical direction *z.*

The term "radial position," as used herein, refers to a position on or above tray **12** at a specific distance from axis **14.** When the term is used in connection to a printing head, the term refers to a position of the head which is at specific distance from axis **14.** When the term is used in connection to a point on tray **12,** the term corresponds to any point that belongs to a locus of points that is a circle whose radius is the specific distance from axis **14** and whose center is at axis **14.**

The term "azimuthal position," as used herein, refers to a position on or above tray **12** at a specific azimuthal angle relative to a predetermined reference point. Thus, radial position refers to any point that belongs to a locus of points that is a straight line forming the specific azimuthal angle relative to the reference point.

The term "vertical position," as used herein, refers to a position over a plane that intersect the vertical axis **14** at a specific point.

Tray **12** serves as a supporting structure for three-dimensional printing. The working area on which one or objects are printed is typically, but not necessarily, smaller than the total area of tray **12.** In some embodiments of the present invention the working area is annular. The working area is shown at **26.** In some embodiments of the present invention tray **12** rotates continuously in the same direction throughout the formation of object, and in some embodiments of the present invention tray reverses the direction of rotation at least once (*e.g.,* in an oscillatory manner) during the formation of the object. Tray **12** is optionally and preferably removable. Removing tray **12** can be for maintenance of system **10,** or, if desired, for replacing the tray before printing a new object. In some embodiments of the present invention system **10** is provided with one or more different replacement trays (*e.g.,* a kit of replacement trays), wherein two or more trays are designated for different types of objects (*e.g.,* different weights) different operation modes (*e.g.,* different rotation speeds), *etc.* The replacement of tray **12** can be manual or automatic, as desired. When automatic replacement is employed, system **10** comprises a tray replacement device **36** configured for removing tray **12** from its position below heads **16** and replacing it by a replacement tray (not shown). In the representative illustration of FIG. 6B tray replacement device **36** is illustrated as a drive **38** with a movable arm **40** configured to pull tray **12,** but other types of tray replacement devices are also contemplated.

Exemplified embodiments for the printing head **16** are illustrated in FIGs. 7A-7C. These embodiments can be employed for any of the AM systems described above, including, without limitation, system **110** and system **10.**

FIGs. 7A-B illustrate a printing head **16** with one (FIG. 7A) and two (FIG. 7B) nozzle arrays **22.** The nozzles in the array are preferably aligned linearly, along a straight line. In embodiments in which a particular printing head has two or more linear nozzle arrays, the nozzle arrays are optionally and preferably can be parallel to each other.

When a system similar to system **110** is employed, all printing heads **16** are optionally and preferably oriented along the indexing direction with their positions along the scanning direction being offset to one another.

When a system similar to system **10** is employed, all printing heads **16** are optionally and preferably oriented radially (parallel to the radial direction) with their azimuthal positions being offset to one another. Thus, in these embodiments, the nozzle arrays of different printing heads are not parallel to each other but are rather at an angle to each other, which angle being approximately equal to the azimuthal offset between the respective heads. For example, one head can be oriented radially and positioned at azimuthal position ϕ₁, and another head can be oriented radially and positioned at azimuthal position ϕ₂. In this example, the azimuthal offset between the two heads is ϕ₁-ϕ₂, and the angle between the linear nozzle arrays of the two heads is also ϕ₁-ϕ₂.

In some embodiments, two or more printing heads can be assembled to a block of printing heads, in which case the printing heads of the block are typically parallel to each other. A block including several inkjet printing heads **16a, 16b, 16c** is illustrated in FIG. 7C.

In some embodiments, system **10** comprises a support structure **30** positioned below heads **16** such that tray **12** is between support structure **30** and heads **16.** Support structure **30** may serve for preventing or reducing vibrations of tray **12** that may occur while inkjet printing heads **16** operate. In configurations in which printing heads **16** rotate about axis **14,** support structure **30** preferably also rotates such that support structure **30** is always directly below heads **16** (with tray **12** between heads **16** and tray **12**).

Tray **12** and/or printing heads **16** is optionally and preferably configured to move along the vertical direction z, parallel to vertical axis **14** so as to vary the vertical distance between tray **12** and printing heads **16.** In configurations in which the vertical distance is varied by moving tray **12** along the vertical direction, support structure **30** preferably also moves vertically together with tray **12.** In configurations in which the vertical distance is varied by heads **16** along the vertical direction, while maintaining the vertical position of tray **12** fixed, support structure **30** is also maintained at a fixed vertical position.

The vertical motion can be established by a vertical drive **28.** Once a layer is completed, the vertical distance between tray **12** and heads **16** can be increased (*e.g*., tray **12** is lowered relative to heads **16**) by a predetermined vertical step, according to the desired thickness of the layer subsequently to be printed. The procedure is repeated to form a three-dimensional object in a layerwise manner.

The operation of inkjet printing heads **16** and optionally and preferably also of one or more other components of system **10,** *e.g*., the motion of tray **12,** are controlled by a controller **20.** The controller can have an electronic circuit and a non-volatile memory medium readable by the circuit, wherein the memory medium stores program instructions which, when read by the circuit, cause the circuit to perform control operations as further detailed below.

Controller **20** can also communicate with a host computer **24** which transmits digital data pertaining to fabrication instructions based on computer object data, *e.g*., in a form of a Standard Tessellation Language (STL) or a StereoLithography Contour (SLC) format, Virtual Reality Modeling Language (VRML), Additive Manufacturing File (AMF) format, Drawing Exchange Format (DXF), Polygon File Format (PLY) or any other format suitable for Computer-Aided Design (CAD), e.g., Wavefront file format (OBJ). The object data formats are typically structured according to a Cartesian system of coordinates. In these cases, computer **24** preferably executes a procedure for transforming the coordinates of each slice in the computer object data from a Cartesian system of coordinates into a polar system of coordinates. Computer **24** optionally and preferably transmits the fabrication instructions in terms of the transformed system of coordinates. Alternatively, computer **24** can transmit the fabrication instructions in terms of the original system of coordinates as provided by the computer object data, in which case the transformation of coordinates is executed by the circuit of controller **20.**

The transformation of coordinates allows three-dimensional printing over a rotating tray. In conventional three-dimensional printing, the printing heads reciprocally move above a stationary tray along straight lines. In such conventional systems, the printing resolution is the same at any point over the tray, provided the dispensing rates of the heads are uniform. Unlike conventional three-dimensional printing, not all the nozzles of the head points cover the same distance over tray **12** during at the same time. The transformation of coordinates is optionally and preferably executed so as to ensure equal amounts of excess material formulation at different radial positions. Representative examples of coordinate transformations according to some embodiments of the present invention are provided in FIGs. 8A-B, showing three slices of an object (each slice corresponds to fabrication instructions of a different layer of the objects), where FIG. 8A illustrates a slice in a Cartesian system of coordinates and FIG. 8B illustrates the same slice following an application of a transformation of coordinates procedure to the respective slice.

Typically, controller **20** controls the voltage applied to the respective component of the system **10** based on the fabrication instructions and based on the stored program instructions as described below.

Generally, controller **20** controls printing heads **16** to dispense, during the rotation of tray **12,** droplets of building material formulation in layers, such as to print a three-dimensional object on tray **12.**

System **10** optionally and preferably comprises one or more radiation sources **18,** which can be, for example, an ultraviolet or visible or infrared lamp, or other sources of electromagnetic radiation, or electron beam source, depending on the modeling material formulation being used. Radiation source can include any type of radiation emitting device, including, without limitation, light emitting diode (LED), digital light processing (DLP) system, resistive lamp and the like. Radiation source **18** serves for curing or solidifying the modeling material formulation. In various exemplary embodiments of the invention the operation of radiation source **18** is controlled by controller **20** which may activate and deactivate radiation source **18** and may optionally also control the amount of radiation generated by radiation source **18.**

In some embodiments of the invention, system **10** further comprises one or more leveling devices **32** which can be manufactured as a roller or a blade. Leveling device **32** serves to straighten the newly formed layer prior to the formation of the successive layer thereon. In some embodiments, leveling device **32** has the shape of a conical roller positioned such that its symmetry axis **34** is tilted relative to the surface of tray **12** and its surface is parallel to the surface of the tray. This embodiment is illustrated in the side view of system **10** (FIG. 6C).

The conical roller can have the shape of a cone or a conical frustum.

The opening angle of the conical roller is preferably selected such that is a constant ratio between the radius of the cone at any location along its axis **34** and the distance between that location and axis **14.** This embodiment allows roller **32** to efficiently level the layers, since while the roller rotates, any point *p* on the surface of the roller has a linear velocity which is proportional (*e.g.,* the same) to the linear velocity of the tray at a point vertically beneath point *p.* In some embodiments, the roller has a shape of a conical frustum having a height *h,* a radius R₁ at its closest distance from axis **14,** and a radius R₂ at its farthest distance from axis **14,** wherein the parameters *h, R*₁ and *R*₂ satisfy the relation *R*₁*lR*₂=(*R-h*)/*h* and wherein *R* is the farthest distance of the roller from axis **14** (for example, R can be the radius of tray **12**).

The operation of leveling device **32** is optionally and preferably controlled by controller **20** which may activate and deactivate leveling device **32** and may optionally also control its position along a vertical direction (parallel to axis **14**) and/or a radial direction (parallel to tray **12** and pointing toward or away from axis **14.**

In some embodiments of the present invention system 10 comprises cooling system (not shown, see FIG. 6A) such as one or more fans or the like.

In some embodiments of the present invention printing heads **16** are configured to reciprocally move relative to tray along the radial direction *r.* These embodiments are useful when the lengths of the nozzle arrays **22** of heads **16** are shorter than the width along the radial direction of the working area **26** on tray **12.** The motion of heads **16** along the radial direction is optionally and preferably controlled by controller **20.**

Some embodiments contemplate the fabrication of an object by dispensing different material formulations from different dispensing heads. These embodiments provide, *inter alia,* the ability to select material formulations from a given number of material formulations and define desired combinations of the selected material formulations and their properties. According to the present embodiments, the spatial locations of the deposition of each material formulation with the layer is defined, either to effect occupation of different three-dimensional spatial locations by different material formulations, or to effect occupation of substantially the same three-dimensional location or adjacent three-dimensional locations by two or more different material formulations so as to allow post deposition spatial combination of the material formulations within the layer, thereby to form a composite material formulation at the respective location or locations.

Any post deposition combination or mix of modeling material formulations is contemplated. For example, once a certain material formulation is dispensed it may preserve its original properties. However, when it is dispensed simultaneously with another modeling material formulation or other dispensed material formulations which are dispensed at the same or nearby locations, a composite material formulation having a different property or properties to the dispensed material formulations is formed.

The present embodiments thus enable the deposition of a broad range of material formulation combinations, and the fabrication of an object which may consist of multiple different combinations of material formulations, in different parts of the object, according to the properties desired to characterize each part of the object.

Further details on the principles and operations of an AM system suitable for the present embodiments are found in U.S. Published Application No. 20100191360

### The Object:

Embodiments of the present invention provide three-dimensional objects obtainable by a method as described herein in any of the respective embodiments and any combination thereof.

In some embodiments, the object comprises at least one hollow structure, as described herein.

In some embodiments, the hollow structure is filled with air.

In some embodiments, the hollow structure is at least partially filled with (at least partially enclosing) a liquid or liquid-like (second) material, such as Material L, as described herein in any of the respective embodiments.

In some embodiments, the object is made of two of more modeling material formulations, e.g., Formulations M, and in some of these embodiments, at least a portion of the object is made of digital materials, as described herein. In some embodiments, the object comprises a core-shell structure as described herein in any of the respective embodiments, and features properties in accordance with the selected materials and structure.

An object according to the present embodiments is such that at least a part or a portion thereof comprises a hollow structure as described herein. The object may be such that several parts or portions thereof comprise hollow structures. The hollow structures can be the same or different (e.g., in terms of size and/or shape).

In some of any of the embodiments described herein, the object is such that mimics a bodily structure.

In some of these embodiments, the bodily structure (e.g., bodily tissue or organ or system) comprises one or more hollow structures, as defined herein.

In some of any of the embodiments described herein, an object as described herein is or forms a part of a medical device, for example, a medical device used for training or education purpose.

According to some of any of the embodiments described herein, the object has a structure that resemble the respective structure of a bodily organ, structure or system, for example, a hollow tubular structure.

In some of any of the embodiments described herein, the object is devoid of a biological material, as defined herein.

Herein throughout, the term "bodily" when used in the context of, for example, a structure, organ, tissue or material, describes the indicated structure, organ, tissue or material, as being part of a body of a subject, preferably a living subject. This term encompasses biological systems, organs, tissues, cells and materials.

Herein throughout, the term "subject" encompasses animals, preferably mammals, more preferably human beings, at any age. This term encompasses individuals who are at risk to develop the pathology or who suffer from a pathology.

The term "bodily structure" refers to a part of a body of a subject, as described herein, including systems, organs, tissues, cells and a surrounding environment of any of the foregoing. A bodily structure, for example, can comprise several organs acting together in a living body, for example, a gastrointestinal tract, a cardiovascular system, a respiratory tract, and the like. The structure can include, in addition to organs and tissues that form a part of these systems, also structures related to a pathology, for example, tumor cells or tissues. A bodily structure can alternatively include, for example, a heart and blood vessels associated therewith. A bodily structure can alternatively include an organ, such as, for example, an arm or forearm, or leg, and can encompass the related bones system and muscle tissues, blood vessels, tumor tissues (if present) and/or skin tissues in its surroundings.

The term "tissue" describes a part of an organism consisting of cells designed to perform a function or functions. Examples include, but are not limited to, brain tissue, retina, skin tissue, hepatic tissue, pancreatic tissue, bone, cartilage, connective tissue, blood tissue, muscle tissue, cardiac tissue, vascular tissue, renal tissue, pulmonary tissue, gonadal tissue, hematopoietic tissue.

By "biological material", as used herein, it is meant organic materials that are inherently present in living subjects as defined herein. Such materials encompass, for example, cells and cellular components, proteins (including enzymes, hormones, receptor ligands and the like) peptides, nucleic acids, genes, amino acids.

By "devoid of" it is meant less than 1 %, or less than 0.5 %, or less than 0.1 %, or less than 0.05 %, or less than 0.01 %, or less than 0.005 %, or less than 0.001 %, and less, including null, by weight, of the total weight of the object.

According to some of any of the embodiments described herein, the object is uncellularized, namely, is devoid of biological cells or cellular components.

It is to be understood that the present embodiments contemplate an object that may contain water as a part of Material L. In some of any of the embodiments described herein, the curable and particularly the non-curable materials, included in the building material formulations and the formulation and formulation systems described herein, are non-toxic, nonenvironmentally hazardous, and are hence safe for use and disposal.

According to some of any of the embodiments described herein, the uncured building material formulations are devoid of biological materials and/or biological cells or cellular components, as defined herein.

As used herein the term "about" refers to ± 5 % or ± 10 %.

The terms "comprises", "comprising", "includes", "including", "having" and their conjugates mean "including but not limited to".

The term "consisting of' means "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

As used herein the term "method" or "process" refers to manners, means, techniques and procedures for accomplishing a given task including, but not limited to, those manners, means, techniques and procedures either known to, or readily developed from known manners, means, techniques and procedures by practitioners of the chemical, physical and engineering arts.

Herein throughout, the term "(meth)acrylic" encompasses acrylic and methacrylic compounds.

Herein throughout, the phrase "linking moiety" or "linking group" describes a group that connects two or more moieties or groups in a compound. A linking moiety is typically derived from a bi- or tri-functional compound, and can be regarded as a bi- or tri-radical moiety, which is connected to two or three other moieties, via two or three atoms thereof, respectively.

Exemplary linking moieties include a hydrocarbon moiety or chain, optionally interrupted by one or more heteroatoms, as defined herein, and/or any of the chemical groups listed below, when defined as linking groups.

When a chemical group is referred to herein as "end group" it is to be interpreted as a substituent, which is connected to another group via one atom thereof.

Herein throughout, the term "hydrocarbon" collectively describes a chemical group composed mainly of carbon and hydrogen atoms. A hydrocarbon can be comprised of alkyl, alkene, alkyne, aryl, and/or cycloalkyl, each can be substituted or unsubstituted, and can be interrupted by one or more heteroatoms. The number of carbon atoms can range from 2 to 20, and is preferably lower, e.g., from 1 to 10, or from 1 to 6, or from 1 to 4. A hydrocarbon can be a linking group or an end group.

Bisphenol A is an example of a hydrocarbon comprised of 2 aryl groups and one alkyl group.

As used herein, the term "amine" describes both a -NR'R" group and a -NR'- group, wherein R' and R" are each independently hydrogen, alkyl, cycloalkyl, aryl, as these terms are defined hereinbelow.

The amine group can therefore be a primary amine, where both R' and R" are hydrogen, a secondary amine, where R' is hydrogen and R" is alkyl, cycloalkyl or aryl, or a tertiary amine, where each of R' and R" is independently alkyl, cycloalkyl or aryl.

Alternatively, R' and R" can each independently be hydroxyalkyl, trihaloalkyl, cycloalkyl, alkenyl, alkynyl, aryl, heteroaryl, heteroalicyclic, amine, halide, sulfonate, sulfoxide, phosphonate, hydroxy, alkoxy, aryloxy, thiohydroxy, thioalkoxy, thioaryloxy, cyano, nitro, azo, sulfonamide, carbonyl, C-carboxylate, O-carboxylate, N-thiocarbamate, O-thiocarbamate, urea, thiourea, N-carbamate, O-carbamate, C-amide, N-amide, guanyl, guanidine and hydrazine.

The term "amine" is used herein to describe a -NR'R" group in cases where the amine is an end group, as defined hereinunder, and is used herein to describe a -NR'- group in cases where the amine is a linking group or is or part of a linking moiety.

The term "alkyl" describes a saturated aliphatic hydrocarbon including straight chain and branched chain groups. Preferably, the alkyl group has 1 to 30, or 1 to 20 carbon atoms. Whenever a numerical range; e.g., "1-20", is stated herein, it implies that the group, in this case the alkyl group, may contain 1 carbon atom, 2 carbon atoms, 3 carbon atoms, etc., up to and including 20 carbon atoms. The alkyl group may be substituted or unsubstituted. Substituted alkyl may have one or more substituents, whereby each substituent group can independently be, for example, hydroxyalkyl, trihaloalkyl, cycloalkyl, alkenyl, alkynyl, aryl, heteroaryl, heteroalicyclic, amine, halide, sulfonate, sulfoxide, phosphonate, hydroxy, alkoxy, aryloxy, thiohydroxy, thioalkoxy, thioaryloxy, cyano, nitro, azo, sulfonamide, C-carboxylate, O-carboxylate, N-thiocarbamate, O-thiocarbamate, urea, thiourea, N-carbamate, O-carbamate, C-amide, N-amide, guanyl, guanidine and hydrazine.

The alkyl group can be an end group, as this phrase is defined hereinabove, wherein it is attached to a single adjacent atom, or a linking group, as this phrase is defined hereinabove, which connects two or more moieties via at least two carbons in its chain. When the alkyl is a linking group, it is also referred to herein as "alkylene" or "alkylene chain".

Herein, a C(1-4) alkyl, substituted by a hydrophilic group, as defined herein, is included under the phrase "hydrophilic group" herein.

Alkene and Alkyne, as used herein, are an alkyl, as defined herein, which contains one or more double bond or triple bond, respectively.

The term "cycloalkyl" describes an all-carbon monocyclic ring or fused rings (i.e., rings which share an adjacent pair of carbon atoms) group where one or more of the rings does not have a completely conjugated pi-electron system. Examples include, without limitation, cyclohexane, adamantine, norbornyl, isobornyl, and the like. The cycloalkyl group may be substituted or unsubstituted. Substituted cycloalkyl may have one or more substituents, whereby each substituent group can independently be, for example, hydroxyalkyl, trihaloalkyl, cycloalkyl, alkenyl, alkynyl, aryl, heteroaryl, heteroalicyclic, amine, halide, sulfonate, sulfoxide, phosphonate, hydroxy, alkoxy, aryloxy, thiohydroxy, thioalkoxy, thioaryloxy, cyano, nitro, azo, sulfonamide, C-carboxylate, O-carboxylate, N-thiocarbamate, O-thiocarbamate, urea, thiourea, N-carbamate, O-carbamate, C-amide, N-amide, guanyl, guanidine and hydrazine. The cycloalkyl group can be an end group, as this phrase is defined hereinabove, wherein it is attached to a single adjacent atom, or a linking group, as this phrase is defined hereinabove, connecting two or more moieties at two or more positions thereof.

Cycloalkyls of 1-6 carbon atoms, substituted by two or more hydrophilic groups, as defined herein, is included under the phrase "hydrophilic group" herein.

The term "heteroalicyclic" describes a monocyclic or fused ring group having in the ring(s) one or more atoms such as nitrogen, oxygen and sulfur. The rings may also have one or more double bonds. However, the rings do not have a completely conjugated pi-electron system. Representative examples are piperidine, piperazine, tetrahydrofurane, tetrahydropyrane, morpholino, oxalidine, and the like.

The heteroalicyclic may be substituted or unsubstituted. Substituted heteroalicyclic may have one or more substituents, whereby each substituent group can independently be, for example, hydroxyalkyl, trihaloalkyl, cycloalkyl, alkenyl, alkynyl, aryl, heteroaryl, heteroalicyclic, amine, halide, sulfonate, sulfoxide, phosphonate, hydroxy, alkoxy, aryloxy, thiohydroxy, thioalkoxy, thioaryloxy, cyano, nitro, azo, sulfonamide, C-carboxylate, O-carboxylate, N-thiocarbamate, O-thiocarbamate, urea, thiourea, O-carbamate, N-carbamate, C-amide, N-amide, guanyl, guanidine and hydrazine. The heteroalicyclic group can be an end group, as this phrase is defined hereinabove, where it is attached to a single adjacent atom, or a linking group, as this phrase is defined hereinabove, connecting two or more moieties at two or more positions thereof.

A heteroalicyclic group which includes one or more of electron-donating atoms such as nitrogen and oxygen, and in which a numeral ratio of carbon atoms to heteroatoms is 5:1 or lower, is included under the phrase "hydrophilic group" herein.

The term "aryl" describes an all-carbon monocyclic or fused-ring polycyclic (i.e., rings which share adjacent pairs of carbon atoms) groups having a completely conjugated pi-electron system. The aryl group may be substituted or unsubstituted. Substituted aryl may have one or more substituents, whereby each substituent group can independently be, for example, hydroxyalkyl, trihaloalkyl, cycloalkyl, alkenyl, alkynyl, aryl, heteroaryl, heteroalicyclic, amine, halide, sulfonate, sulfoxide, phosphonate, hydroxy, alkoxy, aryloxy, thiohydroxy, thioalkoxy, thioaryloxy, cyano, nitro, azo, sulfonamide, C-carboxylate, O-carboxylate, N-thiocarbamate, O-thiocarbamate, urea, thiourea, N-carbamate, O-carbamate, C-amide, N-amide, guanyl, guanidine and hydrazine. The aryl group can be an end group, as this term is defined hereinabove, wherein it is attached to a single adjacent atom, or a linking group, as this term is defined hereinabove, connecting two or more moieties at two or more positions thereof.

The term "heteroaryl" describes a monocyclic or fused ring (*i.e.,* rings which share an adjacent pair of atoms) group having in the ring(s) one or more atoms, such as, for example, nitrogen, oxygen and sulfur and, in addition, having a completely conjugated pi-electron system. Examples, without limitation, of heteroaryl groups include pyrrole, furan, thiophene, imidazole, oxazole, thiazole, pyrazole, pyridine, pyrimidine, quinoline, isoquinoline and purine. The heteroaryl group may be substituted or unsubstituted. Substituted heteroaryl may have one or more substituents, whereby each substituent group can independently be, for example, hydroxyalkyl, trihaloalkyl, cycloalkyl, alkenyl, alkynyl, aryl, heteroaryl, heteroalicyclic, amine, halide, sulfonate, sulfoxide, phosphonate, hydroxy, alkoxy, aryloxy, thiohydroxy, thioalkoxy, thioaryloxy, cyano, nitro, azo, sulfonamide, C-carboxylate, O-carboxylate, N-thiocarbamate, O-thiocarbamate, urea, thiourea, O-carbamate, N-carbamate, C-amide, N-amide, guanyl, guanidine and hydrazine. The heteroaryl group can be an end group, as this phrase is defined hereinabove, where it is attached to a single adjacent atom, or a linking group, as this phrase is defined hereinabove, connecting two or more moieties at two or more positions thereof. Representative examples are pyridine, pyrrole, oxazole, indole, purine and the like.

The term "halide" and "halo" describes fluorine, chlorine, bromine or iodine.

The term "haloalkyl" describes an alkyl group as defined above, further substituted by one or more halide.

The term "sulfate" describes a -O-S(=O)₂-OR' end group, as this term is defined hereinabove, or an -O-S(=O)₂-O- linking group, as these phrases are defined hereinabove, where R' is as defined hereinabove.

The term "thiosulfate" describes a -O-S(=S)(=O)-OR' end group or a -O-S(=S)(=O)-O- linking group, as these phrases are defined hereinabove, where R' is as defined hereinabove.

The term "sulfite" describes an -O-S(=O)-O-R' end group or a -O-S(=O)-O- group linking group, as these phrases are defined hereinabove, where R' is as defined hereinabove.

The term "thiosulfite" describes a -O-S(=S)-O-R' end group or an -O-S(=S)-O- group linking group, as these phrases are defined hereinabove, where R' is as defined hereinabove.

The term "sulfinate" describes a -S(=O)-OR' end group or an -S(=O)-O- group linking group, as these phrases are defined hereinabove, where R' is as defined hereinabove.

The term "sulfoxide" or "sulfinyl" describes a -S(=O)R' end group or an -S(=O)-linking group, as these phrases are defined hereinabove, where R' is as defined hereinabove.

The term "sulfonate" describes a -S(=O)₂-R' end group or an -S(=O)₂- linking group, as these phrases are defined hereinabove, where R' is as defined herein.

The term "S-sulfonamide" describes a -S(=O)₂-NR'R" end group or a -S(=O)₂-NR'-linking group, as these phrases are defined hereinabove, with R' and R" as defined herein.

The term "N-sulfonamide" describes an R'S(=O)₂-NR"- end group or a -S(=O)₂-NR'-linking group, as these phrases are defined hereinabove, where R' and R" are as defined herein.

The term "disulfide" refers to a -S-SR' end group or a -S-S- linking group, as these phrases are defined hereinabove, where R' is as defined herein.

The term "phosphonate" describes a -P(=O)(OR')(OR") end group or a -P(=O)(OR')(O)-linking group, as these phrases are defined hereinabove, with R' and R" as defined herein.

The term "thiophosphonate" describes a -P(=S)(OR')(OR") end group or a -P(=S)(OR')(O)- linking group, as these phrases are defined hereinabove, with R' and R" as defined herein.

The term "phosphinyl" describes a -PR'R" end group or a -PR'- linking group, as these phrases are defined hereinabove, with R' and R" as defined hereinabove.

The term "phosphine oxide" describes a -P(=O)(R')(R") end group or a -P(=O)(R')-linking group, as these phrases are defined hereinabove, with R' and R" as defined herein.

The term "phosphine sulfide" describes a -P(=S)(R')(R") end group or a -P(=S)(R')-linking group, as these phrases are defined hereinabove, with R' and R" as defined herein.

The term "phosphite" describes an -O-PR'(=O)(OR") end group or an -O-PH(=O)(O)-linking group, as these phrases are defined hereinabove, with R' and R" as defined herein.

The term "carbonyl" or "carbonate" as used herein, describes a -C(=O)-R' end group or a -C(=O)- linking group, as these phrases are defined hereinabove, with R' as defined herein.

The term "thiocarbonyl" as used herein, describes a -C(=S)-R' end group or a -C(=S)-linking group, as these phrases are defined hereinabove, with R' as defined herein.

The term "oxo" as used herein, describes a (=O) group, wherein an oxygen atom is linked by a double bond to the atom (e.g., carbon atom) at the indicated position.

The term "thiooxo" as used herein, describes a (=S) group, wherein a sulfur atom is linked by a double bond to the atom (e.g., carbon atom) at the indicated position.

The term "oxime" describes a =N-OH end group or a =N-O- linking group, as these phrases are defined hereinabove.

The term "hydroxyl" describes a -OH group.

The term "alkoxy" describes both an -O-alkyl and an -O-cycloalkyl group, as defined herein.

The term "aryloxy" describes both an -O-aryl and an -O-heteroaryl group, as defined herein.

The term "thiohydroxy" describes a -SH group.

The term "thioalkoxy" describes both a -S-alkyl group, and a -S-cycloalkyl group, as defined herein.

The term "thioaryloxy" describes both a -S-aryl and a -S-heteroaryl group, as defined herein.

The "hydroxyalkyl" is also referred to herein as "alcohol", and describes an alkyl, as defined herein, substituted by a hydroxy group.

The term "cyano" describes a -C=N group.

The term "isocyanate" describes an -N=C=O group.

The term "isothiocyanate" describes an -N=C=S group.

The term "nitro" describes an -NO₂ group.

The term "acyl halide" describes a -(C=O)Rʺʺ group wherein Rʺʺ is halide, as defined hereinabove.

The term "azo" or "diazo" describes an -N=NR' end group or an -N=N- linking group, as these phrases are defined hereinabove, with R' as defined hereinabove.

The term "peroxo" describes an -O-OR' end group or an -O-O- linking group, as these phrases are defined hereinabove, with R' as defined hereinabove.

The term "carboxylate" as used herein encompasses C-carboxylate and O-carboxylate.

The term "C-carboxylate" describes a -C(=O)-OR' end group or a -C(=O)-O- linking group, as these phrases are defined hereinabove, where R' is as defined herein.

The term "O-carboxylate" describes a -OC(=O)R' end group or a -OC(=O)- linking group, as these phrases are defined hereinabove, where R' is as defined herein.

A carboxylate can be linear or cyclic. When cyclic, R' and the carbon atom are linked together to form a ring, in C-carboxylate, and this group is also referred to as lactone. Alternatively, R' and O are linked together to form a ring in O-carboxylate. Cyclic carboxylates can function as a linking group, for example, when an atom in the formed ring is linked to another group.

The term "thiocarboxylate" as used herein encompasses C-thiocarboxylate and O-thiocarboxylate.

The term "C-thiocarboxylate" describes a -C(=S)-OR' end group or a -C(=S)-O- linking group, as these phrases are defined hereinabove, where R' is as defined herein.

The term "O-thiocarboxylate" describes a -OC(=S)R' end group or a -OC(=S)- linking group, as these phrases are defined hereinabove, where R' is as defined herein.

A thiocarboxylate can be linear or cyclic. When cyclic, R' and the carbon atom are linked together to form a ring, in C-thiocarboxylate, and this group is also referred to as thiolactone. Alternatively, R' and O are linked together to form a ring in O-thiocarboxylate. Cyclic thiocarboxylates can function as a linking group, for example, when an atom in the formed ring is linked to another group.

The term "carbamate" as used herein encompasses N-carbamate and O-carbamate.

The term "N-carbamate" describes an R"OC(=O)-NR'- end group or a -OC(=O)-NR'-linking group, as these phrases are defined hereinabove, with R' and R" as defined herein.

The term "O-carbamate" describes an -OC(=O)-NR'R" end group or an -OC(=O)-NR'-linking group, as these phrases are defined hereinabove, with R' and R" as defined herein.

A carbamate can be linear or cyclic. When cyclic, R' and the carbon atom are linked together to form a ring, in O-carbamate. Alternatively, R' and O are linked together to form a ring in N-carbamate. Cyclic carbamates can function as a linking group, for example, when an atom in the formed ring is linked to another group.

The term "carbamate" as used herein encompasses N-carbamate and O-carbamate..

The term "thiocarbamate" as used herein encompasses N-thiocarbamate and O-thiocarbamate.

The term "O-thiocarbamate" describes a -OC(=S)-NR'R" end group or a -OC(=S)-NR'-linking group, as these phrases are defined hereinabove, with R' and R" as defined herein.

The term "N-thiocarbamate" describes an R"OC(=S)NR'- end group or a -OC(=S)NR'-linking group, as these phrases are defined hereinabove, with R' and R" as defined herein.

Thiocarbamates can be linear or cyclic, as described herein for carbamates.

The term "dithiocarbamate" as used herein encompasses S-dithiocarbamate and N-dithiocarbamate.

The term "S-dithiocarbamate" describes a -SC(=S)-NR'R" end group or a -SC(=S)NR'-linking group, as these phrases are defined hereinabove, with R' and R" as defined herein.

The term "N-dithiocarbamate" describes an R"SC(=S)NR'- end group or a -SC(=S)NR'-linking group, as these phrases are defined hereinabove, with R' and R" as defined herein.

The term "urea", which is also referred to herein as "ureido", describes a -NR'C(=O)-NR"R‴ end group or a -NR'C(=O)-NR"- linking group, as these phrases are defined hereinabove, where R' and R" are as defined herein and R‴ is as defined herein for R' and R".

The term "thiourea", which is also referred to herein as "thioureido", describes a -NR'-C(=S)-NR"R‴ end group or a -NR'-C(=S)-NR"- linking group, with R', R" and R‴ as defined herein.

The term "amide" as used herein encompasses C-amide and N-amide.

The term "C-amide" describes a -C(=O)-NR'R" end group or a -C(=O)-NR'- linking group, as these phrases are defined hereinabove, where R' and R" are as defined herein.

The term "N-amide" describes a R'C(=O)-NR"- end group or a R'C(=O)-N- linking group, as these phrases are defined hereinabove, where R' and R" are as defined herein.

An amide can be linear or cyclic. When cyclic, R' and the carbon atom are linked together to form a ring, in C-amide, and this group is also referred to as lactam. Cyclic amides can function as a linking group, for example, when an atom in the formed ring is linked to another group.

The term "guanyl" describes a R'R"NC(=N)- end group or a -R'NC(=N)- linking group, as these phrases are defined hereinabove, where R' and R" are as defined herein.

The term "guanidine" describes a -R'NC(=N)-NR"R‴ end group or a -R'NC(=N)-NR"- linking group, as these phrases are defined hereinabove, where R', R" and R‴ are as defined herein.

The term "hydrazine" describes a -NR'-NR"R‴ end group or a -NR'-NR"- linking group, as these phrases are defined hereinabove, with R', R", and R‴ as defined herein.

As used herein, the term "hydrazide" describes a -C(=O)-NR'-NR"R‴ end group or a - C(=O)-NR'-NR"- linking group, as these phrases are defined hereinabove, where R', R" and R'" are as defined herein.

As used herein, the term "thiohydrazide" describes a -C(=S)-NR'-NR"R‴ end group or a -C(=S)-NR'-NR"- linking group, as these phrases are defined hereinabove, where R', R" and R'" are as defined herein.

As used herein, the term "alkylene glycol" describes a -O-[(CR'R")_{z}-O]_{y}-R‴ end group or a -O-[(CR'R")_{z}-O]_{y}- linking group, with R', R" and R‴ being as defined herein, and with z being an integer of from 1 to 10, preferably, from 2 to 6, more preferably 2 or 3, and y being an integer of 1 or more. Preferably R' and R" are both hydrogen. When z is 2 and y is 1, this group is ethylene glycol. When z is 3 and y is 1, this group is propylene glycol. When y is 2-4, the alkylene glycol is referred to herein as oligo(alkylene glycol).

When y is greater than 4, the alkylene glycol is referred to herein as poly(alkylene glycol). In some embodiments of the present invention, a poly(alkylene glycol) group or moiety can have from 10 to 200 repeating alkylene glycol units, such that z is 10 to 200, preferably 10-100, more preferably 10-50.

The term "silanol" describes a -Si(OH)R'R" group, or -Si(OH)₂R' group or -Si(OH)₃ group, with R' and R" as described herein.

The term "silyl" describes a -SiR'R"R‴ group, with R', R" and R‴ as described herein.

As used herein, the term "urethane" or "urethane moiety" or "urethane group" describes a Rx-O-C(=O)-NR'R" end group or a -Rx-O-C(=O)-NR'- linking group, with R' and R" being as defined herein, and Rx being an alkyl, cycloalkyl, aryl, alkylene glycol or any combination thereof. Preferably R' and R" are both hydrogen.

The term "polyurethane" or "oligourethane" describes a moiety that comprises at least one urethane group as described herein in the repeating backbone units thereof, or at least one urethane bond, -O-C(=O)-NR'-, in the repeating backbone units thereof.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Various embodiments and aspects of the present invention as delineated hereinabove and as claimed in the claims section below find experimental support in the following examples.

### EXAMPLES

Reference is now made to the following examples, which together with the above descriptions illustrate some embodiments of the invention in a non-limiting fashion.

### EXAMPLE 1

### Exemplified Procedure For Obtaining Computer Object Data

The present Inventors devised a technique for preparing computer object data particularly useful for fabricating an object, such as, but not limited to, a shelled and hollow object. The procedure is particularly useful for obtaining computer object data for use with system 10 or system **110.** The exemplified procedure described in this example is useful for fabricating shelled objects, such as, but not limited to, tubular structures, having a shell, an intermediate shell and a core, more particularly shelled objects wherein both the core and the intermediate shell are sacrificial as described herein. In some embodiments of the present invention the procedure described in this example is used for fabricating from non-biological materials objects featuring properties of a bodily structure, as described herein. In these embodiments, the procedure described in this example is optionally and preferably combined with the procedure described in Example 2, below.

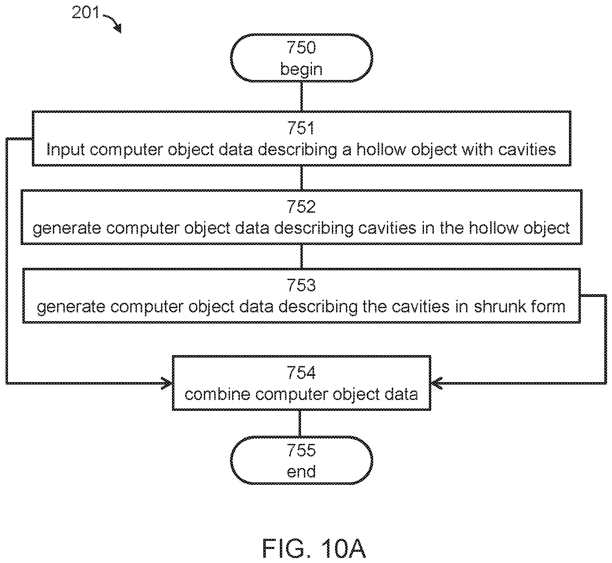

FIG. 10A is a flowchart diagram of an exemplified procedure which can be used according to some embodiments of the present invention for executing operation **201** above. The procedure can be executed by a data processor, such as, but not limited to, data processor **154** or **24.**

The procedure begins at **750** and continues to **751** at which computer object data describing an object having one or more voids referred to below as cavities, are received as input to the procedure. A technique suitable for obtaining such computer object data is described in Example 2, below. The data at **751** optionally and preferably describes a hollow object including only a shell encapsulating the cavity or cavities of the object. Thus, the data at **751** optionally and preferably do not include data pertaining to a core or any intermediate shell within the shell.

The procedure continues to **752** at which computer object data describing the cavities but not the shell are generated. The procedure continues to **753** at which computer object data describing the cavities in shrunk form are generated. The cavities described by the data at **753** are shrunk in the sense that their outermost surfaces encompass a volume which is reduced compared to the volume of the cavities received as input. In other words, the cavities described by the data at **753** have an overall outermost surface area that is smaller than the inner surface area of the hollow object described by the input data. A representative example of a technique suitable for being executed at **753** is described below.

The procedure continues to **754** at which computer object data obtained at **751** are combined with the computer object data obtained at **753.** This combination provides combined computer object data that describe an outermost shell encapsulating a core in a manner that there is a gap between the inner surface of the outermost shell and the outermost surface of the core.

The procedure ends at **755.**

The advantage of using this procedure for AM manufacturing of shelled and hollow objects is that it provides the AM system with sufficient information for dispensing the core, the shell, and an intermediate shell within the gap between the inner surface of the shell and the outermost surface of the core.

In some embodiments of the present invention a user interface, such as, but not limited to, user interface **116** is used for receiving instructions from the operator via a set of controls and for displaying various types of information and graphical descriptions during the execution of the procedure. The data processor optionally and preferably displays progress messages and/or sends progress messages to a log file.

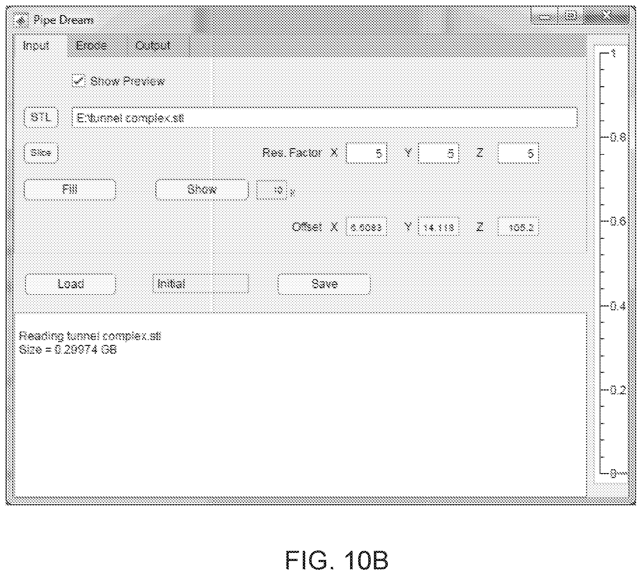

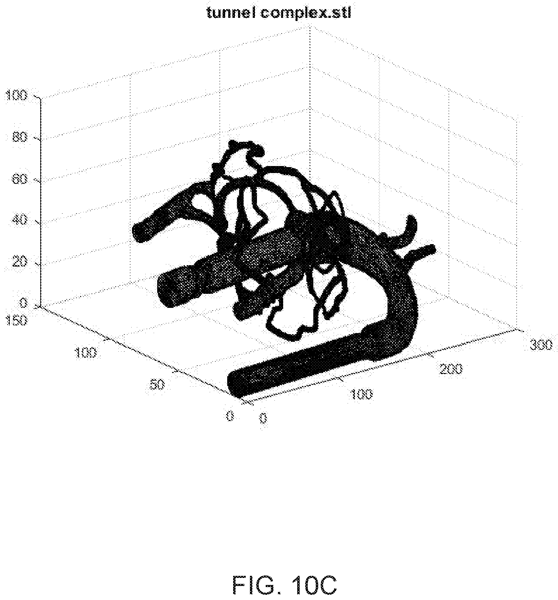

FIG. 10B is a screenshot of a graphical user interface (GUI) that can be used according to some embodiments of the present invention. In FIG. 10B, the GUI shows that the input computer object data is an STL file, and that when this input is sliced its expected size is 0.29974GB. The GUI includes several controls. For example, the GUI includes a control, which, when activated, cause the data processor to load the input computer object data (an STL file, in the present example). This control is denoted "STL" in FIG. 10B. The GUI can also include a control, which, when activated, cause the data processor to compute and display on the GUI a rotatable and zoom-able preview of the computer object data. This control is denoted "show" in FIG. 10B. FIG. 10C shows the result of activation of the "show" control for the case in which the of the computer object data describe a hollow labyrinth.

The GUI can also include a set of controls that cause the data processor to execute operations **752** and **753.** For example, one control can cause the data processor to compute slices of the outermost shell, and another control can cause the data processor to generate computer object data of the cavities. These controls are denoted "slice" and "fill" in FIG. 10B.

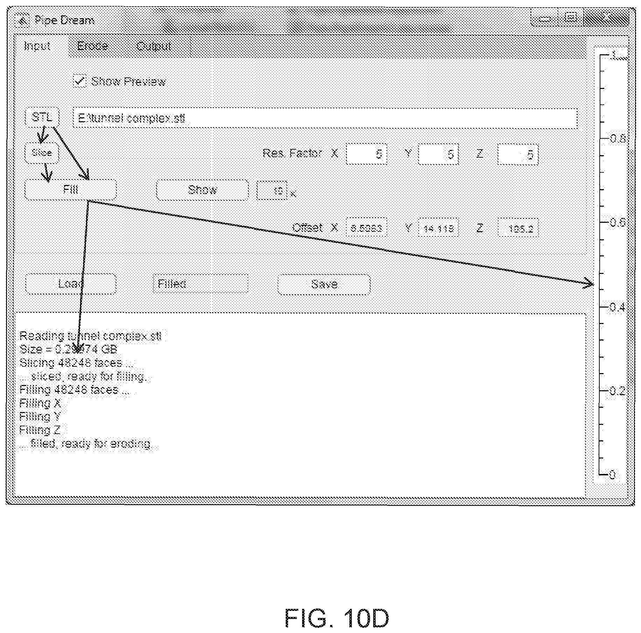

FIG. 10D shows the GUI after activation of the "STL", "slice" and "fill" controls. In this example, the computer object data that describe the cavities include 48248 faces. The "fill" control, causes the data processor to perform three separate passes over the sliced faces, one pass for each of the three X, Y and Z dimensions.

The slicing operation can be by any technique known in the art of AM. Typically, for each face the processor finds all unique points on the face, optionally and preferably rounded to integer, collects all point locations from all faces, and optionally converts the point locations into a three-dimensional volumetric raster representation. Another technique suitable for the present embodiments includes the use of distance field values, as further detailed in Example 2, below.

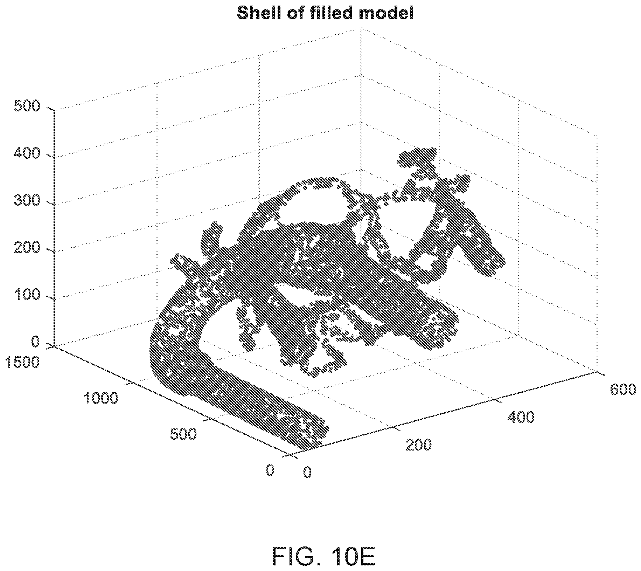

Operation **752** can by any technique known in the art of contracting three-dimensional meshes. For example, in some embodiments of the present invention the "imfill" function of the Matlab^{®} software is employed, optionally and preferably with the "holes" option of this function. The GUI can optionally be used to preview the sliced raster. This can be done by activating the "show" control. FIG. 10E shows the result of activation of the "show" control after the activation of the "fill" control, for the case in which the of the computer object data describe a hollow labyrinth. This activation can optionally and preferably receive input parameters, such as, but not limited to, the number of points to show in a point cloud.

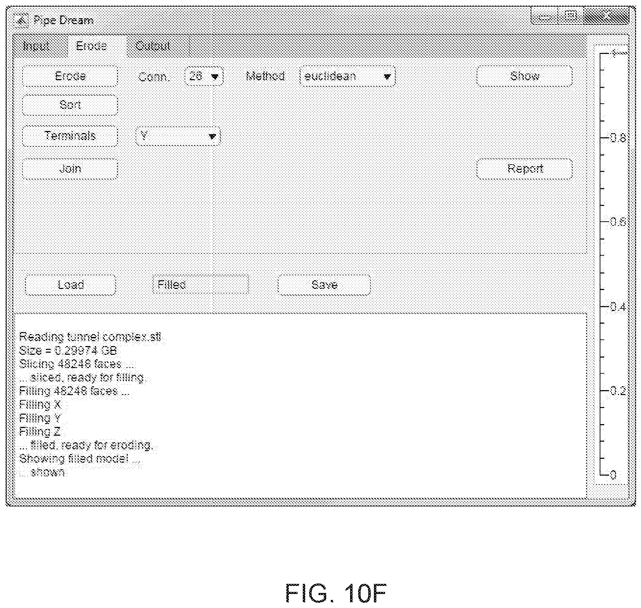

The GUI can also include a set of controls that cause the data processor to execute operation **753.** This set can be accessed by an access control, *e.g*., a tab selection control denoted by "Erode" in FIG. 10B. FIG. 10F shows the GUI after activating the "Erode" tab in FIG. 10B. In this example, the set of controls comprises three controls that allow the operator to select parameters to be used by the data processor to execute operation **753.** Alternatively or additionally these parameters may have default values stored in a computer readable medium accessible by the data process., These parameters include, erosion connectivity, indicating the number of neighbors to include in an erosion operation, the erosion method, and the axis to be used for the terminals. The erosion connectivity can be from about 6 to about 30 or from about 10 to about 26 or from about 14 to about 26 or from about 18 to about 26 neighbors, the erosion method can be selected from the group consisting of Euclidean, City Block, Chessboard, and Quasi-Euclidean, and the axis to be used for the terminals can be selected from the group consisting of X, Y and Z. In FIG. 10F, which is not to be considered as limiting the selected erosion connectivity is 26 neighbors, the selected erosion method is Euclidean, and the selected axis is Y.

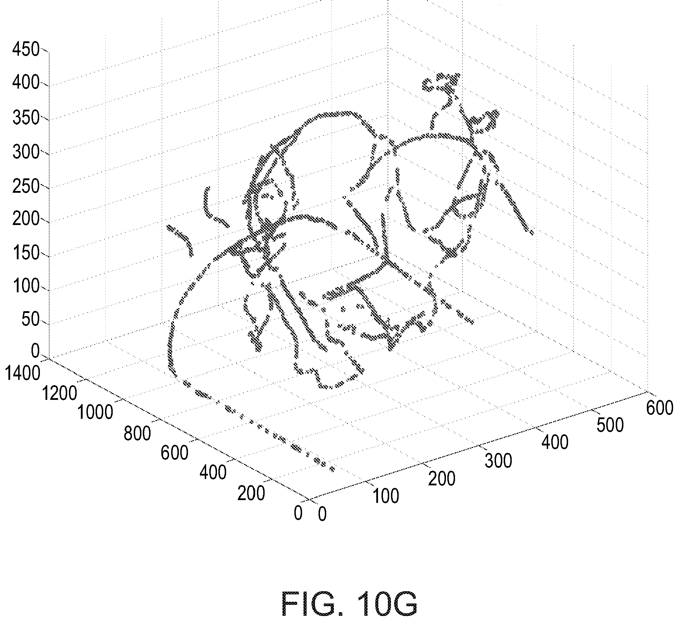

The set of controls under the access control can also include a control that causes the data processor to find the inner-most points in the three-dimensional volumetric raster representation. This controls are denoted "erode" in FIG. 10F. Typically three-dimensional volumetric raster representation of about 15 mega-voxels yields about 2,000 erosion points. This operation can be done by any technique known in the art such as, but not limited to, the "bwulterode" function of the Matlab^{®} software. The set of controls under the access control can also include a control which, when activated, cause the data processor to display the eroded points. This control is denoted "show" in FIG. 10F. FIG. 10G shows the result of activation of the "show" control within the "Erode" tab, after the activation of the "erode" control within the "Erode" for the case in which the of the computer object data describe a hollow labyrinth. This activation can optionally and preferably receive input parameters, such as, but not limited to, the number of points to show in a point cloud.

The set of controls under the access control can also include a control that causes the data processor to sort the eroded points so as to form lines. This control is denoted "Sort" in FIG. 10F. In this operation, the data processor typically generates a connectivity list connecting pairs of points together, where the points in each pair are nearest neighbor points, and where there exists a connecting line such as a straight line through the filled raster between the pair of points, and also while assuring that no point is connected to more than two others, so as to form connected lines.

The set of controls under the access control can also include a control that causes the data processor to identify which of the connected points are to be terminal points of the object. This control is denoted "terminals" in FIG. 10F. Alternatively, the data processor can identify the terminal point automatically, for example by virtue of them being extreme and isolated along a predetermined direction.

The set of controls under the access control can also include a control that causes the data processor to join the lines obtained during the sorting operation. This control is denoted "Join" in FIG. 10F. When the input computer object data describes a labyrinth, this operation is optionally and preferably executed to form a labyrinth which is shrunk with respect to the input labyrinth. In various exemplary embodiments of the invention the terminal points are excluded from this operation. Denoting the number of lines by L, and the number of terminal points by T, in this operation the data processor attempts to join 2L-T points. Typically, there are about 100 points per line, so if there is a total of N points after the sorting operation, these points form about L=N/100 lines and about T=N/200 terminal points. For an exemplified situation of 2000 points after sorting, there are about 30 points to be joined.

According to some embodiments, the data processor finds, for each point p of these points, another point q belonging to another line that is near the point p, and that is connected in a similar fashion as it is connected after to the sorting operation. When the data processor finds two such points p and q, the data processor finds preferably connects these points, thereby forming a connected labyrinth.

When a line still remains unconnected to some others, the data processor optionally and preferably attempts to connect any of the line's non-terminal points to points belonging to other lines, and optionally also attempts to minimize the distance between connected points.

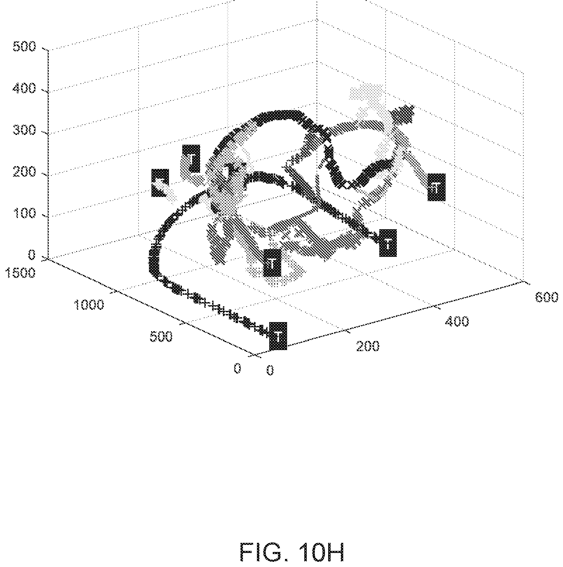

The data processor can optionally and preferably produce a rotatable display showing the points joined to distinct but connected lines, and also showing the terminal points, as depicted in FIG. 10H. The data processor can also produce a table file listing the points sorted to lines.

The GUI can also include a set of controls that cause the data processor to generate an output pertaining the results of operation **754.** This set can be accessed by an access control, *e.g*., a tab selection control denoted by "Output" in FIG. 10B.

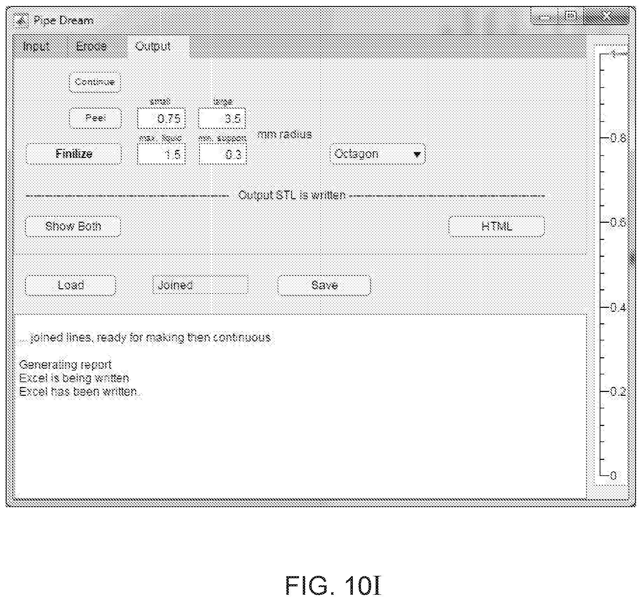

FIG. 10I shows the GUI after activating the "Output" tab in FIG. 10B. In this example, the set of controls comprises a control that causes the data processor to interpolate the individual points in each line so as to form continuous lines. This control is denoted "Continue" in FIG. 10I. The interpolation can be a linear interpolation over point locations, while rounding to integers. Non-linear interpolation is also contemplated and is useful, for example, when the linear interpolation results in outlier lines or points. In this example, the set of controls comprises a control that causes the data processor to generate a distance map with the volume containing the cavities. This control is denoted "Peel" in FIG. 10I. This step is optionally and preferably performed by parallel processing. The distances in the distance map are distances between points in the computer object data describing the cavities and its nearest point in the computed lines, and optionally and preferably also distances from the edge of the raster that is equivalent to the computer object data describing the cavities. In this example, the set of controls also comprises the set of controls comprises controls that allow the operator to select geometrical parameters to be used by the data processor to execute operation **753.** These parameters can include, for example, the maximum radius for the liquid (second) material (which is half of the L_{MAX} parameter defined above Ok, and the minimal thickness c_{MIN} of the intermediate layer. The set of controls optionally and preferably comprises a control that causes the data processor to dilate the lines by an amount specified by the geometrical parameters. This control is denoted "Finalize" in FIG. 10I. The dilated lines can be converted to mesh in any technique known in the art, such as, but not limited to, the Marching Cubes algorithm, or the like. The produced mesh can then be output to a computer readable medium, *e.g*., as an STL file.

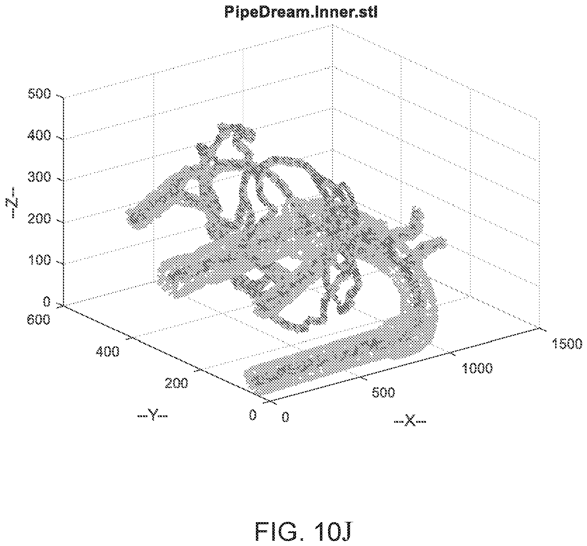

The resulting combined computer object data can be viewed by any commercially available utility. Alternatively the data processor can co-display it with some previously calculated data using. FIG. 10J shows the result of activation of the "Finalize" control for the case in which the of the computer object data describe a hollow labyrinth.

### EXAMPLE 2

### Exemplified Procedure For Obtaining Computer Object Data for Objects Featuring Properties of A Bodily Structure

The present Inventors devised a technique for preparing computer object data particularly useful for fabricating an object, such as, but not limited to, a shelled object, more preferably a shelled hollow object. The procedure is particularly useful for obtaining computer object data for use with system **10** or system **110.** The exemplified procedure described in this example is useful for fabricating shelled objects, such as, but not limited to, tubular structures, having a shell, an intermediate shell and a core, more particularly shelled objects wherein both the core and the intermediate shell are sacrificial as described herein. The exemplified procedure described in this example is also useful for fabricating other objects, *e.g*., non-shelled objects, or shelled objects which do not include an intermediate shell, or shelled objects in which none of the core and intermediate shell is sacrificial as described herein. In some embodiments of the present invention the procedure described in this example is used for fabricating from non-biological materials objects featuring properties of a bodily structure, such as, but not limited to, hollowed bodily structure. In these embodiments, the procedure described in this example is optionally and preferably combined with the procedure described in Example 2, below.

FIG. 11A is a flowchart diagram of an exemplified procedure which can be used according to some embodiments of the present invention for executing operation **201** above. It is to be understood that, unless otherwise defined, the operations described hereinbelow can be executed either contemporaneously or sequentially in many combinations or orders of execution. Specifically, the ordering of the flowchart diagram is not to be considered as limiting. For example, two or more operations, appearing in the following description or in the flowchart diagrams in a particular order, can be executed in a different order (*e.g*., a reverse order) or substantially contemporaneously. Additionally, several operations described below are optional and may not be executed.

The procedure begins at **700** and optionally and preferably continues to **701** at which data in a format suitable for Digital Imaging and Communications in Medicine (hereinafter DICOM data) are received.

The DICOM data can be received from an acquisition console such as, but not limited to, an MRI system, a CT imaging system, a helical CT system, a positron emission tomography (PET) system, a 2D or 3D fluoroscopic imaging system, a 2D, 3D, or 4D ultrasound imaging system, an endoscope system, a bedside monitor system, an x-ray system, and a hybrid-imaging system capable of CT, MR, PET, ultrasound or other imaging techniques. The DICOM data preferably includes one or more digital image data describing one or more structures having a shape of a biological tissue element. In some embodiments of the present invention DICOM data preferably includes one or more digital image data describing one or more bones, in some embodiments of the present invention DICOM data preferably includes one or more digital image data describing one or more structures having a shape of a biological tissue element other than a bone, and in some embodiments of the present invention DICOM data preferably includes one or more digital image data describing one or more bones, and also one or more digital image data describing one or more structures having a shape of a biological tissue element other than a bone.

The procedure optionally and preferably continues to **702** at which the DICOM data are converted to computer object data. The conversion from DICOM data to computer object data optionally and preferably includes one or more segmentation procedures, selected from the group consisting of thresholding, region growing, dynamic region growing, and the like.

Thresholding procedures exploit the differences in density of different tissues to select image pixels with a higher or equal value to a prescribed threshold value. For example, a prescribed threshold value of a thresholding procedure can be selected so that image pixels with regard to hard tissue pass the thresholding procedure, and other image pixels relating are filtered out. The thresholding procedure can be applied multiple times each time using a different threshold value, so as to obtain separate datasets for different tissue types.

Region growing procedures are typically applied after thresholding to isolate areas which have the same density range. A region growing procedure can examine neighboring pixels of initial seed points and determines whether the neighboring pixels belong to the region. The procedure is optionally and preferably performed iteratively to segment the image. For example seed points can be selected according to different tissue types and the region growing segmentation techniques can be performed iteratively to separate image pixels as belonging to one of these tissue types. In dynamic region growing, a range of image parameters are selected in addition to the seed points. These parameters are selected to allow recognizing an image pixel as the same as the seed points.

Typically, but not necessarily, an initial background segmentation procedure is applied for removing from the DICOM data elements that do not belong to any of the tissue types of interest. Subsequent segmentation procedures can then be applied for more refined segmentation of one or more refined area of a subject's anatomy by using different segmentation techniques.

Following segmentation, the conversion from DICOM data to computer object data can also include smoothing, wrapping and/or hole-filling to compensate for artifacts within the DICOM data. A format conversion procedure can then be applied to the segmented DICOM data so as to provide the computer object data in any of the aforementioned formats.

In some embodiments of the present invention, the input data are received from a computer readable medium as computer object data, in which case it is not necessary to obtain and convert the DICOM data. In these embodiments, it is not necessary to execute operations **701** and **702.**

In any event, the computer object data preferably include data pertaining to a shape of one or more structures having a shape of a biological tissue element as further detailed hereinabove. Whether obtained by conversion of DICOM data or received directly as such, the computer object data are optionally and preferably arranged in multiple files, each pertaining to a different tissue type.

When the bodily structure includes hollow objects, such as, but not limited to, vessel structures, the procedure proceeds to **752, 753** and **754** as further detailed hereinabove. Alternatively, these operations can be skipped.

At **703** a type of the bodily structure to be mimicked by an additive manufactured object (*e.g.,* bone, muscle tissue, smooth tissue, bone tumor, cartilage, disks, nerves/spinal cord, body liquid vessel) is determined for each data file. The determination can be by extracting information present in the respective computer object data file, or the respective DICOM data file, or from information associated with the respective data file.

At **704,** a set of rules associated with the respective bodily structure is selected. The set of AM rules optionally and preferably include building material formulation(s) to be dispense as well as dispensing parameters and conditions (*e.g*., temperature, interlacing ratios, interlacing texture). The set of AM rules can be obtained from a look-up table having an entry for each type of bodily structure, and a set of parameters associated with each such entry. In some embodiments of the present invention a subject profile is received. The subject profile typically includes one or more of weight, gender, age, ethnicity, race, clinical history, *etc.* In some embodiments of the present invention the subject profile also includes a genetic profile, which can encompass the genes in an entire genome of the subject, or it can encompass a specific subset of genes. The genetic profile may include genomic profile, a proteomic profile, an epigenomic profile and/or a transcriptomic profile. In embodiments in which the subject profile is received, the look-up table also includes entries for different profile parameters. Specifically, the lookup table can include several entries for each type of bodily structure, one entry for each profile parameter. As a representative and non-limiting example, a look-up table can include several entries for, say, trabecular bone structure, wherein one entry for each age group.

In some embodiments of the present invention the set of AM rules are selected by the operator, for example, via a user interface (*e.g*., user interface **116**). Also contemplated, are embodiments in which both a look-up table and a user interface are employed. For example, the look-up table can be used for narrowing the number of options provided to the operator, and the user interface can be used for selecting the final set of AM rules.

Further contemplated, are embodiments in which the set of rules are received together with the computer object data. For example, each computer object data file can include one or more AM rules, or be associated with AM rule file including one or more AM rules, wherein the AM rules correspond to the respective computer object data.

At **705** a slicing operation is applied, optionally and preferably separately for each computer object data file. The slicing is typically executed by generating, for computer object data file, a set of image files, each describing a 2D voxel map of a plane characterized by a different vertical coordinate (*e.g*., the aforementioned z coordinate), which plane corresponds to a layer of the respective object mimicking the bodily structure. The image file can be in any 2D format known in the art, such as, but not limited to, a bitmap file (BMP), portable network graphs (PNG), or the like. A preferred slicing technique is provided below with reference to FIG. 11B.

At **706** two or more of the sets of image files are combined into a single image file. For example, image files that correspond to the same vertical coordinate but to objects mimicking different bodily structures can be combined to provide an image file that describe a layer which, once printed, includes sliced sections of two or more objects respectively mimicking two or more bodily structures. At **707** the image file(s) is uploaded to an AM system such as, but not limited to, system **10** or system **110,** to fabricate non-biological objects that resembles the bodily structures.

The procedure ends at **708.**

FIG. 11B is a flowchart diagram of an exemplified slicing method according to some embodiments of the present invention. The method is particularly useful for executing slicing operation **705** of FIG. 11A. The method begins at **720** and is optionally and preferably applied for each voxel in the computer object data.

At decision **721** a distance field value relative to the 3D object is determined for the respective voxel. The distance field value indicates whether the voxel is within or outside the object mimicking the bodily structure to be printed. For example, negative distance field values can be assigned to voxels outside the object mimicking the bodily structure, positive distance field values can be assigned to voxels within the object mimicking the bodily structure, and zero distance field values can be assigned to voxels on the outermost surface of the object mimicking the bodily structure.

When the voxel is within or on the outermost surface of the object mimicking the bodily structure (for example, when the distance field value is positive), the method continues to **722** at which a building material formulation is allocated for the respective voxel. The building material formulation can be a modeling material (first) formulation, a curable support material (third) formulation, or a second building material formulation as described herein, and is optionally and preferably determined based on to position of the voxel and the AM rules obtained at **704** above. From **722** the method continues to **724** at which the method selects a pixel value that corresponds to the allocated building material formulation. The pixel value can be any value that uniquely represents the allocated building material formulation. For example, the pixel value can be a grayscale level or a color value (*e.g*., RGB value).

When the voxel is outside the object mimicking the bodily structure (for example, when the distance field value is negative), the method continues to decision **723** at which the method determine whether the voxel is to be occupied or left vacant. If the voxel is to be left vacant, the method continues to terminal **726,** the method selects a pixel value that uniquely represents a vacant pixel. For example, the method can select a null value to represents a vacant pixel. Alternatively, when the voxel is outside the object mimicking the bodily structure the method can continues from **723** to terminal **728** where it ends, in which case pixels that have not been assigned with any values are to be interested as instructions to leave a voxel vacant.

If the voxel is to be occupied, the method continues to **725** at which a building material is allocated to the voxel, and then to **724** at which the method selects a pixel value that corresponds to the allocated building material formulation as further detailed hereinabove.

From **724, 725** or **726,** as the case may be, the method continues to **727** at which the selected pixel value is assigned to a pixel in a 2D image, wherein the location of the pixel in the 2D image corresponds to the location of the voxel within the layer that is represented by the 2D image.

The method ends at **728.**

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

To the extent that section headings are used, they should not be construed as necessarily limiting.

## Claims

1. A method (200) of additive manufacturing of a three-dimensional object (112), the method comprising sequentially forming a plurality of layers in a configured pattern corresponding to the shape of the object (112), thereby forming the object,
wherein the formation of at least a few of said layers comprises:
dispensing (202) at least two building material formulations, said at least two building material formulations comprise a modeling material formulation M which, upon exposure to a curing condition, forms a hardened modeling material M, and a formulation L which, upon exposure to said curing condition, forms a material L, said material L featuring at least one of:
a viscosity of no more than 10 Pa s;
Shear loss modulus to Shear storage modulus ratio greater than 1;
Shear modulus lower than 20 kPa;
flowability when subjected to a positive pressure of no more than 1 bar; a shear-thinning and/or thixotropic behavior; and
a thermal-thinning behavior,
and exposing (204) the dispensed building material formulations to said curing condition, to thereby form said hardened modeling material M and said material L,
**characterised in that**
said at least two building material formulations comprise a third formulation S, said formulation S forms, upon exposure to a curing condition, a Material S, said Material S being a hardened support material,
and wherein said dispensing (202) is such that said hardened modeling material M forms at least one hollow structure (72), said material S is at least partially enclosed within said hollow structure (72) and said material L at least partially encloses said material S, thereby forming an intermediate shell (74) between an inner surface of said hollow structure (72) and said material S.

2. The method (200) of claim 1, wherein the shape of the object (112) is described by computer object input data and the method further comprises: generating computer object data describing cavities in said hollow structure, generating computer object data describing said cavities in shrunk form, and combining said computer object input data with said computer object data describing said cavities in said shrunk form, to provide combined computer object data describing said hollow structure and a core encapsulated by said hollow structure in a manner that there is a gap between an inner surface of said hollow structure and an outermost surface of said core, wherein said dispensing comprises dispensing said material S at locations corresponding to said core and said material L at locations corresponding to said gap.

3. The method (200) of claim 1 or 2, wherein said material L features a viscosity of no more than 10 Pa s, and wherein said formulation L features a viscosity different from said viscosity of said material L by no more than 10 %.

4. The method (200) of any one of claims 1-3, wherein said formulation L comprises a non-curable material.

5. The method (200) of claim 4, wherein said formulation L comprises a non-curable material and a curable material.

6. The method (200) of any one of claims 1-5, further comprising, subsequent to said exposing, removing said Material L.

7. The method (200) according to any one of claims 1-6, further comprising removing said material S.

8. A method (200) of additive manufacturing of a three-dimensional object (72) having a cavity, the method (200) comprising sequentially forming a plurality of layers in a configured pattern corresponding to a combined shape (112) of the object (72) and a sacrificial object (76, 82), in a manner that said sacrificial object (76, 82) is enclosed in said cavity and there is a gap between a wall of said cavity and said sacrificial object (76, 82); and
removing said sacrificial object (76, 82) from said cavity,
wherein the object (112) is formed of a hardened material which comprises a hardened modeling material M and/or a hardened support material S, and wherein said formation of said layers comprises forming at least one sacrificial layer (74, 86) to fill said gap by a sacrificial material, said sacrificial material comprising material L featuring at least one of:
a viscosity of no more than 10 Pa s;
Shear loss modulus to Shear storage modulus ratio greater than 1;
a Shear modulus lower than 20 kPa; flowability when subjected to a positive pressure of no more than 1 bar;
a shear-thinning and/or thixotropic behavior; and
a thermal-thinning behavior.

9. A three-dimensional assembly (112), fabricated by an additive manufacturing process, the assembly (112) being obtainable by any one of claims 1-8 and comprising a hardened object (72) having a cavity, a hardened sacrificial object (76, 82) in said cavity, and a non-hardened and/or partially hardened material (74, 86) between said sacrificial object and a wall of said cavity, wherein said hardened sacrificial object (76, 82) and said non-hardened and/or partially hardened material (74, 86) are removable from said cavity.

10. The three-dimensional assembly (112) of claim 9, wherein said cavity is made of a hardened modeling material M, wherein said hardened sacrificial object (76, 82) in said cavity is made of a hardened support material S, and said non-hardened and/or partially hardened material (74, 86) forms an intermediate shell between said hardened sacrificial object (76, 82) and a wall of said cavity, and wherein said non-hardened and/or partially hardened material (74, 86) features at least one of:
a viscosity of no more than 10 Pa s;
Shear loss modulus to Shear storage modulus ratio greater than 1;
Shear modulus lower than 20 kPa;
flowability when subjected to a positive pressure of no more than 1 bar;
a shear-thinning and/or thixotropic behavior; and
a thermal-thinning behavior.

## Patentansprüche

1. Verfahren (200) zur additiven Herstellung eines dreidimensionalen Objekts (112), wobei das Verfahren die sequentielle Bildung einer Vielzahl von Schichten in einem konfigurierten Muster umfasst, das der Form des Objekts (112) entspricht, wodurch das Objekt gebildet wird,
wobei die Bildung von mindestens einigen dieser Schichten Folgendes umfasst:
Abgabe (202) von mindestens zwei Baumaterialformulierungen, wobei die mindestens zwei Baumaterialformulierungen eine Modelliermaterialformulierung M umfassen, die, wenn sie einer Aushärtungsbedingung ausgesetzt wird, ein gehärtetes Modelliermaterial M bildet, und eine Formulierung L, die, wenn sie der Aushärtungsbedingung ausgesetzt wird, ein Material L bildet, wobei das Material L mindestens eines der folgenden Merkmale aufweist:
eine Viskosität von höchstens 10 Pa s;
ein Verhältnis von Scherverlustmodul zu Scherspeichermodul größer als 1;
ein Schermodul unter 20 kPa;
eine Fließfähigkeit bei einem Überdruck von höchstens 1 bar;
ein scherverdünnendes und/oder thixotropes Verhalten; und
ein thermisch verdünnendes Verhalten,
und Aussetzen (204) der abgegebenen Baumaterialformulierungen der Aushärtungsbedingung, um dadurch das gehärtete Modelliermaterial M und das Material L zu bilden, **dadurch gekennzeichnet, dass** die mindestens zwei Baumaterialformulierungen eine dritte Formulierung S umfassen, wobei die Formulierung S, wenn sie einer Aushärtungsbedingung ausgesetzt wird, ein Material S bildet, wobei das Material S ein gehärtetes Trägermaterial ist,
und wobei die Abgabe (202) so erfolgt, dass das gehärtete Modelliermaterial M mindestens eine hohle Struktur (72) bildet, das Material S mindestens teilweise in der hohlen Struktur (72) eingeschlossen ist und das Material L das Material S mindestens teilweise umschließt, wodurch eine Zwischenschale (74) zwischen einer Innenfläche der hohlen Struktur (72) und dem Material S gebildet wird.

2. Verfahren (200) nach Anspruch 1, wobei die Form des Objekts (112) durch Computerobjekt-Eingabedaten beschrieben wird und das Verfahren weiter Folgendes umfasst: Erzeugen von Computer-Objektdaten, die Hohlräume in der hohlen Struktur beschreiben, Erzeugen von Computer-Objektdaten, die die Hohlräume in geschrumpfter Form beschreiben, und Kombinieren der Computer-Objekt-Eingabedaten mit den Computer-Objektdaten, die die Hohlräume in der geschrumpften Form beschreiben, um kombinierte Computer-Objektdaten bereitzustellen, die die hohle Struktur und einen Kern, der durch die hohle Struktur eingekapselt ist, in einer Weise beschreiben, dass ein Spalt zwischen einer inneren Oberfläche der hohlen Struktur und einer äußersten Oberfläche des Kerns vorhanden ist, wobei das Ausgeben das Ausgeben des Materials S an Stellen, die dem Kern entsprechen, und des Materials L an Stellen, die dem Spalt entsprechen, umfasst.

3. Verfahren (200) nach Anspruch 1 oder 2, wobei das Material L eine Viskosität von höchstens 10 Pa s aufweist, und wobei die Formulierung L eine Viskosität aufweist, die sich von der Viskosität des Materials L um höchstens 10 % unterscheidet.

4. Verfahren (200) nach einem der Ansprüche 1-3, wobei die Formulierung L ein nicht härtbares Material umfasst.

5. Verfahren (200) nach Anspruch 4, wobei die Formulierung L ein nicht härtbares Material und ein härtbares Material umfasst.

6. Verfahren (200) nach einem der Ansprüche 1-5, weiter umfassend das Entfernen des Materials L nach der Belichtung.

7. Verfahren (200) nach einem der Ansprüche 1-6, weiter umfassend das Entfernen des Materials S.

8. Verfahren (200) zur additiven Herstellung eines dreidimensionalen Objekts (72), das einen Hohlraum aufweist, wobei das Verfahren (200) das aufeinanderfolgende Bilden einer Vielzahl von Schichten in einem konfigurierten Muster, das einer kombinierten Form (112) des Objekts (72) und eines Opferobjekts (76, 82) entspricht, in einer Weise umfasst, dass das Opferobjekt (76, 82) in dem Hohlraum eingeschlossen ist und ein Spalt zwischen einer Wand des Hohlraums und dem Opferobjekt (76, 82) vorhanden ist; und
Entfernen des Opferobjekts (76, 82) aus dem Hohlraum,
wobei das Objekt (112) aus einem gehärteten Material gebildet ist, das ein gehärtetes Modelliermaterial M und/oder ein gehärtetes Trägermaterial S umfasst, und wobei die Bildung der Schichten die Bildung mindestens einer Opferschicht (74, 86) umfasst, um die Lücke durch ein Opfermaterial zu füllen, wobei das Opfermaterial Material L umfasst, das mindestens eines der folgenden Merkmale aufweist:
eine Viskosität von höchstens 10 Pa s;
ein Verhältnis von Scherverlustmodul zu Scherspeichermodul größer als 1;
ein Schermodul von unter 20 kPa; Fließfähigkeit bei einem Überdruck von höchstens 1 bar;
ein scherverdünnendes und/oder thixotropes Verhalten; und
ein thermisch verdünnendes Verhalten.

9. Dreidimensionale Anordnung (112), die durch ein additives Herstellungsverfahren hergestellt wird, wobei die Anordnung (112) nach einem der Ansprüche 1-8 erhältlich ist und ein gehärtetes Objekt (72), das einen Hohlraum aufweist, ein gehärtetes Opferobjekt (76, 82) in dem Hohlraum und ein nicht gehärtetes und/oder teilweise gehärtetes Material (74, 86) zwischen dem Opferobjekt und einer Wand des Hohlraums umfasst, wobei das gehärtete Opferobjekt (76, 82) und das nicht gehärtete und/oder teilweise gehärtete Material (74, 86) aus dem Hohlraum entfernbar sind.

10. Dreidimensionale Anordnung (112) nach Anspruch 9, wobei der Hohlraum aus einem gehärteten Modelliermaterial M hergestellt ist, wobei das gehärtete Opferobjekt (76, 82) in dem Hohlraum aus einem gehärteten Trägermaterial S hergestellt ist und das nicht gehärtete und/oder teilweise gehärtete Material (74, 86) eine Zwischenschale zwischen dem gehärteten Opferobjekt (76, 82) und einer Wand des Hohlraums bildet, und wobei das nicht gehärtete und/oder teilweise gehärtete Material (74, 86) mindestens eines der folgenden Merkmale aufweist:
eine Viskosität von höchstens 10 Pa s;
ein Verhältnis von Scherverlustmodul zu Scherspeichermodul größer als 1;
ein Schermodul unter 20 kPa;
eine Fließfähigkeit bei einem Überdruck von höchstens 1 bar;
ein scherverdünnendes und/oder thixotropes Verhalten; und
ein thermisch verdünnendes Verhalten.

## Revendications

1. Procédé (200) de fabrication additive d'un objet tridimensionnel (112), le procédé comprenant une formation de manière séquentielle d'une pluralité de couches en un motif configuré correspondant à la forme de l'objet (112), formant ainsi l'objet,
dans lequel la formation d'au moins certaines desdites couches comprend :
une distribution (202) d'au moins deux formulations de matériau de construction, lesdites au moins deux formulations de matériau de construction comprennent une formulation de matériau de modelage M qui, lors d'une exposition à une condition de traitement, forme un matériau de modelage durci M, et une formulation L qui, lors d'une exposition à ladite condition de traitement, forme un matériau L, ledit matériau L affichant au moins un de :
une viscosité de pas plus de 10 Pa s ;
un rapport entre un module de perte en cisaillement et un module de conservation en cisaillement supérieur à 1 ;
un module de cisaillement inférieur à 20 kPa ;
une coulabilité lorsqu'il est soumis à une pression positive de pas plus de 1 bar ;
un comportement de fluidification par cisaillement et/ou thixotropique ; et
un comportement de fluidification thermique,
et une exposition (204) des formulations de matériau de construction distribuées à ladite condition de traitement, pour former ainsi ledit matériau de modelage durci M et ledit matériau L, **caractérisé en ce que** lesdites au moins deux formulations de matériau de construction comprennent une troisième formulation S, ladite formulation S forme, lors d'une exposition à une condition de traitement, un matériau S, ledit matériau S étant un matériau de support durci,
et dans lequel ladite distribution (202) est telle que ledit matériau de modelage durci M forme au moins une structure creuse (72), ledit matériau S est au moins partiellement enfermé dans ladite structure creuse (72) et ledit matériau L enferme au moins partiellement ledit matériau S, formant ainsi une enveloppe intermédiaire (74) entre une surface intérieure de ladite structure creuse (72) et ledit matériau S.

2. Procédé (200) selon la revendication 1, dans lequel la forme de l'objet (112) est décrite par des données d'entrée d'objet informatique et le procédé comprend en outre :
une génération de données d'objet informatique décrivant des cavités dans ladite structure creuse, une génération de données d'objet informatique décrivant lesdites cavités sous une forme réduite, et une combinaison desdites données d'entrée d'objet informatique avec lesdites données d'objet informatique décrivant lesdites cavités sous ladite forme réduite, pour fournir des données d'objet informatique combinées décrivant ladite structure creuse et une partie centrale encapsulée par ladite structure creuse de manière à ce qu'il y ait un interstice entre une surface intérieure de ladite structure creuse et une surface la plus éloignée de ladite partie centrale, dans lequel ladite distribution comprend une distribution dudit matériau S à des emplacements correspondant à ladite partie centrale et dudit matériau L à des emplacements correspondant audit interstice.

3. Procédé (200) selon la revendication 1 ou 2, dans lequel ledit matériau L affiche une viscosité de pas plus de 10 Pa s, et dans lequel ladite formulation L affiche une viscosité différente de ladite viscosité dudit matériau L de pas plus de 10 %.

4. Procédé (200) selon l'une quelconque des revendications 1-3, dans lequel ladite formulation L comprend un matériau ne pouvant pas être traité.

5. Procédé (200) selon la revendication 4, dans lequel ladite formulation L comprend un matériau ne pouvant pas être traité et un matériau pouvant être traité.

6. Procédé (200) selon l'une quelconque des revendications 1-5, comprenant en outre, à la suite de ladite exposition, un retrait dudit matériau L.

7. Procédé (200) selon l'une quelconque des revendications 1-6, comprenant en outre un retrait dudit matériau S.

8. Procédé (200) de fabrication additive d'un objet tridimensionnel (72) présentant une cavité, le procédé (200) comprenant une formation de manière séquentielle d'une pluralité de couches en un motif configuré correspondant à une forme combinée (112) de l'objet (72) et d'un objet sacrificiel (76, 82), de manière à ce que ledit objet sacrificiel (76, 82) soit enfermé dans ladite cavité et à ce qu'il y ait un interstice entre une paroi de ladite cavité et ledit objet sacrificiel (76, 82) ; et
un retrait dudit objet sacrificiel (76, 82) de ladite cavité,
dans lequel l'objet (112) est constitué d'un matériau durci qui comprend un matériau de modelage durci M et/ou un matériau de support durci S, et dans lequel ladite formation desdites couches comprend une formation d'au moins une couche sacrificielle (74, 86) pour remplir ledit interstice avec un matériau sacrificiel, ledit matériau sacrificiel comprenant un matériau L affichant au moins un de :
une viscosité de pas plus de 10 Pa s ;
un rapport entre un module de perte en cisaillement et un module de conservation en cisaillement supérieur à 1 ;
un module de cisaillement inférieur à 20 kPa ; une coulabilité lorsqu'il est soumis à une pression positive de pas plus de 1 bar ;
un comportement de fluidification par cisaillement et/ou thixotropique ; et
un comportement de fluidification thermique.

9. Ensemble tridimensionnel (112), produit par un processus de fabrication additive, l'ensemble (112) pouvant être obtenu par l'une quelconque des revendications 1-8 et comprenant un objet (72) durci présentant une cavité, un objet sacrificiel (76, 82) durci dans ladite cavité, et un matériau non durci et/ou partiellement durci (74, 86) entre ledit objet sacrificiel et une paroi de ladite cavité, dans lequel ledit objet sacrificiel (76, 82) durci et ledit matériau non durci et/ou partiellement durci (74, 86) peuvent être retirés de ladite cavité.

10. Ensemble tridimensionnel (112) selon la revendication 9, dans lequel ladite cavité est faite d'un matériau de modelage durci M, dans lequel ledit objet sacrificiel (76, 82) durci dans ladite cavité est fait d'un matériau de support durci S, et ledit matériau non durci et/ou partiellement durci (74, 86) forme une enveloppe intermédiaire entre ledit objet sacrificiel (76, 82) durci et une paroi de ladite cavité, et dans lequel ledit matériau non durci et/ou partiellement durci (74, 86) affiche au moins un de :
une viscosité de pas plus de 10 Pa s ;
un rapport entre un module de perte en cisaillement et un module de conservation en cisaillement supérieur à 1 ;
un module de cisaillement inférieur à 20 kPa ;
une coulabilité lorsqu'il est soumis à une pression positive de pas plus de 1 bar ;
un comportement de fluidification par cisaillement et/ou thixotropique ; et
un comportement de fluidification thermique.
